# EUROPEAN PATENT APPLICATION

(11) **EP 4 607 911 A1**
(43) Date of publication of application: **27.08.2025**
(21) Application number: 22962771.6
(22) Date of filing: 20.10.2022
(51) Int. Cl.: H04N 5/91, H04N 5/76

(54) **INFORMATION PROCESSING DEVICE AND INFORMATION PROCESSING METHOD**

(71) Applicant: Micware Co., Ltd., Kobe-shi, Hyogo 650-0035 (JP)
(72) Inventor: NARUSHIMA, Kenji, Kobe-shi, Hyogo 650-0035 (JP)
(74) Representative: Hasegawa, Kan
(86) International application number: PCT/JP2022/039141
(87) International publication number: WO 2024/084663

(57) **Abstract**

Conventionally, an effective video cannot be generated using a video captured by a mobile terminal and a video captured by a fixed camera. Provided with an information processing device 1 including: a video obtainer 133 configured to obtain a mobile video captured by a mobile terminal 2 and obtain a fixed video captured by a fixed camera; a video generator 134 configured to generate a combined video by combining the mobile video and the fixed video in a time series manner or a merged video by merging at least a part of frames included in the mobile video and at least a part of frames included in the fixed video in a spatial manner; and a video transmitter 142 configured to transmit the combined video or the merged video generated by the video generator 134.

## Description

### TECHNICAL FIELD

The present invention relates to an information processing device and the like for performing processing related to a video (moving image) captured by a mobile terminal and a video (moving image) captured by a fixed camera.

### BACKGROUND OF THE INVENTION

Conventionally, an image display system for enabling a user to see an eyesight view of others (view seen from a movable body of others) is available. In the above described image display system, a plurality of videos captured by a plurality of mobile bodies and transmitted by the plurality of mobile bodies can be outputted to one screen (shown in Patent Document 1).

### PRIOR ART

### PATENT DOCUMENTS

[Patent Document 1] Japanese Patent Publication No. 2008-154192 (e.g., paragraph [0140], Fig. 24)

### SUMMARY OF THE INVENTION

### PROBLEM TO BE SOLVED BY THE INVENTION

However, the user can merely see the videos captured by each of the plurality of mobile bodies on one screen in the conventional technology. It is impossible to generate and provide one useful video using the video captured by the mobile terminal and the video captured by the fixed camera.

### MEANS FOR SOLVING THE PROBLEMS

An information processing device of the first aspect of the present invention includes: a video obtainer configured to obtain a mobile video captured by a mobile terminal and transmitted from the mobile terminal and obtain a fixed video captured by a fixed camera at a fixed capturing position and transmitted from a fixed terminal equipped with the fixed camera, the mobile video being associated with an attribute value set including one or more environment information which includes a positional information for identifying a capturing position or a time information for identifying a capturing time, the fixed video being associated with the attribute value set including the one or more environment information which includes the positional information or the time information; a video generator configured to generate a combined video by combining the mobile video and the fixed video in a time series manner or a merged video by merging at least a part of frames included in the mobile video and at least a part of frames included in the fixed video in a spatial manner; and a video transmitter configured to transmit the combined video or the merged video generated by the video generator.

The above described configuration allows to generate one useful video using the video captured by the mobile terminal and the video captured by the fixed camera.

An information processing device of the second aspect of the present invention is the information processing device according to the first aspect, wherein when the fixed video and the mobile video which are a plurality of videos satisfying an adoption condition and associated with the positional information satisfying a first positional condition exist, the video obtainer is configured to obtain either the fixed video or the mobile video in accordance with a priority of a video type, the adoption condition being a condition for adopting the fixed video or the mobile video as a source of the combined video or the merged video, the first positional condition being a condition that a location where the fixed video or the mobile video is captured is nearer than a predetermined location.

The above described configuration allows to generate one useful video by selecting an appropriate video from the video captured by the mobile terminal and the video captured by the fixed camera.

An information processing device of the third aspect of the present invention is the information processing device according to the first or second aspect, wherein a receiver configured to receive the mobile video from the mobile terminal and the fixed video from the fixed terminal equipped with the fixed camera is further provided, the video obtainer is configured to obtain the mobile video and the fixed video received by the receiver, and the receiver is configured to receive the mobile video from the mobile terminal approved by a user in accordance with a use condition flag of the mobile video stored in the mobile terminal.

The above described configuration allows to generate one useful video using the mobile video and the fixed video based on the intention of the user.

An information processing device of the fourth aspect of the present invention is the information processing device according to the third aspect, wherein the use condition flag is an information indicating an existence or an absence of a desire of a non-provisional usage of the mobile video transmitted by the mobile terminal, and the receiver is configured to receive the mobile video from the mobile terminal only when the mobile terminal is approved by the user if the use condition flag stored in the mobile terminal is the information indicating the existence of the desire of the non-provisional usage of the mobile video.

The above described configuration allows to generate one useful video using the mobile video and the fixed video based on the intention of the user.

An information processing device of the fifth aspect of the present invention is the information processing device according to any one of the first to fourth aspects, wherein the mobile video or the fixed video is associated with a right holder identifier identifying a right holder of the mobile video or the fixed video, and a right holder processor for performing a right holder processing related to the right holder identified by the right holder identifier associated with the combined video or the merged video generated by the video generator is further provided.

The above described configuration allows to perform an appropriate processing related to the right holder of the video.

An information processing device of the sixth aspect of the present invention is the information processing device according to the fifth aspect, wherein the right holder identifier associated with the combined video or the merged video is the right holder identifier associated with each of the plurality of videos which are a source of the combined video or the merged video, and the right holder processor includes a rewarding unit for performing a rewarding process which is a process of providing a reward to the right holder identified by the right holder identifier associated with each of the plurality of videos which are the source of the combined video or the merged video.

The above described configuration allows to provide the reward to the right holder of the videos captured by the mobile terminals.

An information processing device of the seventh aspect of the present invention is the information processing device according to the sixth aspect, wherein the rewarding unit is configured to perform a process of obtaining a video attribute value associated with each of the plurality of videos which are the source of the combined video or the merged video transmitted by the video transmitter, determining the reward to the right holder of each of the plurality of videos which are the source of the combined video or the merged video using the video attribute value and providing the reward.

The above described configuration allows to provide an appropriate reward to the right holder of the videos captured by the mobile terminals.

An information processing device of the eighth aspect of the present invention is the information processing device according to the fifth aspect, wherein the right holder processor includes a first preserver configured to perform a first preservation process which is a process of storing the combined video or the merged video generated by the video generator while being associated with the attribute value set which is associated with each of the plurality of videos which are the source of the combined video or the merged video.

The above described configuration allows to preserve the combined video or the merged video generated by a plurality of images.

An information processing device of the ninth aspect of the present invention is the information processing device according to the fifth aspect, wherein the right holder processor includes a second preserver configured to perform a second preservation process which is a process of storing the combined video or the merged video generated by the video generator while being associated with the right holder identifier which is associated with each of the plurality of videos which are the source of the combined video or the merged video.

The above described configuration allows to set an appropriate right holder as the right holder of the combined video or the merged video generated by a plurality of videos.

An information processing device of the tenth aspect of the present invention is the information processing device according to the fifth aspect, wherein an inquiry receiver configured to receive an inquiry related to an environment information which is an information of an environment where the mobile terminal captured the plurality of videos from a user terminal is further provided, and the video obtainer is configured to obtain a plurality of videos corresponding to the inquiry received by the inquiry receiver, and the right holder processor includes a third preserver configured to accumulate the combined video or the merged video generated by the video generator while being associated with the right holder identifier for identifying a user of the user terminal.

The above described configuration allows to set a right holder requiring the combined video or the merged video as the right holder of the combined video or the merged video generated by a plurality of videos.

An information processing device of the eleventh aspect of the present invention is the information processing device according to the eighth aspect, wherein the right holder processor includes a fourth preserver configured to perform a fourth preservation process which is a process of storing a preservation information including an access information for accessing the combined video or the merged video in a blockchain.

The above described configuration allows to preserve management information of the video requiring the preservation.

An information processing device of another aspect of the present invention is the information processing device according to the first or second aspect, wherein the video obtainer is configured to sequentially obtain the combined video or the merged video satisfying one or more condition in the positional condition related to the positional information associated with the video and the time condition related to the time information associated with the video

The above described configuration allows to generate one useful video appropriately using the video captured by the mobile terminal and the video captured by the fixed camera.

### EFFECTS OF THE INVENTION

The present invention allows to generate and provide one useful video using the video captured by the mobile terminal and the video captured by the fixed camera.

### BRIEF DESCRIPTION OF DRAWINGS

Fig. 1 is a schematic diagram of an information system A in the first embodiment.
Fig. 2 is a block diagram of the information system A in the first embodiment.
Fig. 3 is a block diagram of an information processing device 1 in the first embodiment.
Fig. 4 is a block diagram of a fixed terminal 3 in the first embodiment.
Fig. 5 is a flowchart for explaining an operation example of the information processing device 1 in the first embodiment.
Fig. 6 is a flowchart for explaining an example of a process of obtaining an attribute value set in the first embodiment.
Fig. 7 is a flowchart for explaining an example of a process of obtaining a movable body attribute value tag in the first embodiment.
Fig. 8 is a flowchart for explaining an example of a process of obtaining a video tag in the first embodiment.
Fig. 9 is a flowchart for explaining an example of a fourth preservation process in the first embodiment.
Fig. 10 is a flowchart for explaining an example of a video merging process in the first embodiment.
Fig. 11 is a flowchart for explaining an example of the image merging process in the first embodiment.
Fig. 12 is a flowchart for explaining an example of a video combining process in the first embodiment.
Fig. 13 is a flowchart for explaining an example of a registered video search process in the first embodiment.
Fig. 14 is a flowchart for explaining the first example of an unregistered video search process in the first embodiment.
Fig. 15 is a flowchart for explaining the second example of the unregistered video search process in the first embodiment.
Fig. 16 is a flowchart for explaining an example of a preservation process in the first embodiment.
Fig. 17 is a flowchart for explaining an example of a rewarding process in the first embodiment.
Fig. 18 is a flowchart for explaining an example of a three-dimensional process in the first embodiment.
Fig. 19 is a flowchart for explaining an operation example of a mobile terminal 2 in the first embodiment.
Fig. 20 is a flowchart for explaining an example of a video transmission process in the first embodiment.
Fig. 21 is a flowchart for explaining an example of a terminal image obtaining process in the first embodiment.
Fig. 22 is a flowchart for explaining an operation example of a fixed terminal 3 in the first embodiment.
Fig. 23 is a flowchart for explaining an example of a fixed video obtaining process in the first embodiment.
Fig. 24 is a flowchart for explaining an operation example of a user terminal 4 in the first embodiment.
Fig. 25 is a flowchart for explaining an example of an inquiry generating process in the first embodiment.
Fig. 26 is a drawing showing a mobile terminal management table in the first embodiment.
Fig. 27 is a drawing showing a fixed terminal management table in the first embodiment.
Fig. 28 is a drawing showing a registered video management table in the first embodiment.
Fig. 29 is a schematic external view of a computer system in the first embodiment.
Fig. 30 is a block diagram of the computer system in the first embodiment.

### DETAILED DESCRIPTION OF THE INVENTION

Hereafter, embodiments of an information processing device and other configurations will be explained with reference to the drawings. The repeated explanation of the components denoted with the same reference numerals may be omitted in the embodiments since the operations are the same.

### (First embodiment)

### <Outline of first embodiment>

The present embodiment explains an information processing device configured to generate one video combined in a time series manner or one video merged (combined) in a spatial manner using videos captured by each of fixed cameras and videos captured by a camera of each of mobile terminals. Note that an inquiry for selecting a plurality of videos is, for example, an inquiry using a positional information specified in a user terminal, an inquiry using one or more positional information received from an object terminal to be watched, an inquiry using a destination set in a navigation terminal and an inquiry using a route information. In addition, an adoption condition for adopting the videos as a source of generating the one video includes the condition related to one or more information of the positional information and the time information.

Note that the one video combined in a time series manner is one video formed by combining a plurality of source videos. When a plurality of videos, which is a source of one video combined in a time series manner, is captured, it is preferred that the videos are temporally continued. However, the videos may be separated from each other. For example, one video of the source of the one video can be captured on August 20 while the other video of the source of the one video can be captured on October 21.

The one video merged in a spatial manner is the video generated by constituting frames using a part or an entire of frames of each of the source videos and connecting the frames in a time series manner. Note that at least one frame constituting the one video is the frame including a part or an entire of the frames of each of the source videos.

The present embodiment also explains an information processing device where the type of the video to be prioritized is preliminarily determined between the fixed video captured by the fixed camera and the mobile video captured by the mobile terminal. The type of the video to be prioritized is adopted with priority.

The present embodiment also explains an information processing device where a post processing for converting the one video into a stereoscopic three-dimensional video. Thus, the stereoscopic three-dimensional video is provided. Here, it is possible to use only a part of the one video satisfying a processing condition as the source of the post processing.

The present embodiment also explains an information processing device where the utilization method of the video differs depending on the use condition flag specified by the right holder of the video which is the source of the one video. Note that the use condition flag is, for example, a flag indicating an existence or an absence of a desire of "non-provisional usage of the video which is not a provisional usage of the mobile video." For example, when the non-provisional usage of the video is desired, the process to ask the right holder is performed before transmitting the video.

The present embodiment also explains an information processing device for performing a right holder process which is a process related to a right holder of one video (combined video or merged video) to be outputted. The right holder process is, for example, the later-described rewarding process and later-described various preservation processes.

The present embodiment also explains an information processing device configured to automatically receive videos satisfying a preservation condition from the mobile terminal and accumulate them.

The present embodiment also explains an information processing device for managing videos to which one or more tags obtained by an analysis or the like of the videos is applied. Although the process of applying the tags is performed by the information processing device, the mobile terminal or the fixed terminal, the process can be also performed by the other devices.

The present embodiment also explains an information processing device configured to perform a process for the user of the mobile terminal or the user who requires the video when the video required by the user cannot be transmitted although the video exists. Note that the case where the video cannot be transmitted is when the power of the mobile terminal is turned off, for example.

The present embodiment also explains an information processing device configured to receive movement information indicating a start of a movement from the mobile terminal and utilize the movement information.

The present embodiment also explains a mobile terminal configured to transmit the movement information to the information processing device.

The present embodiment also explains a mobile terminal configured to transmit a latest attribute value set of the captured video to the information processing device when the movement is finished.

The present embodiment also explains a mobile terminal and a fixed terminal configured to obtain one or more tags by an analysis or the like of the video and associate the tags with the video.

In the present embodiment, the fact that information X is associated with the information Y means that the information Y can be obtained from the information X or that the information X can be obtained from the information Y. The information X may be associated with the information Y in any manner. The information X and the information Y may be linked with each other or may be in the same buffer. The information X may be included in the information Y. The information Y may be included in the information X.

### <Outline of information system A>

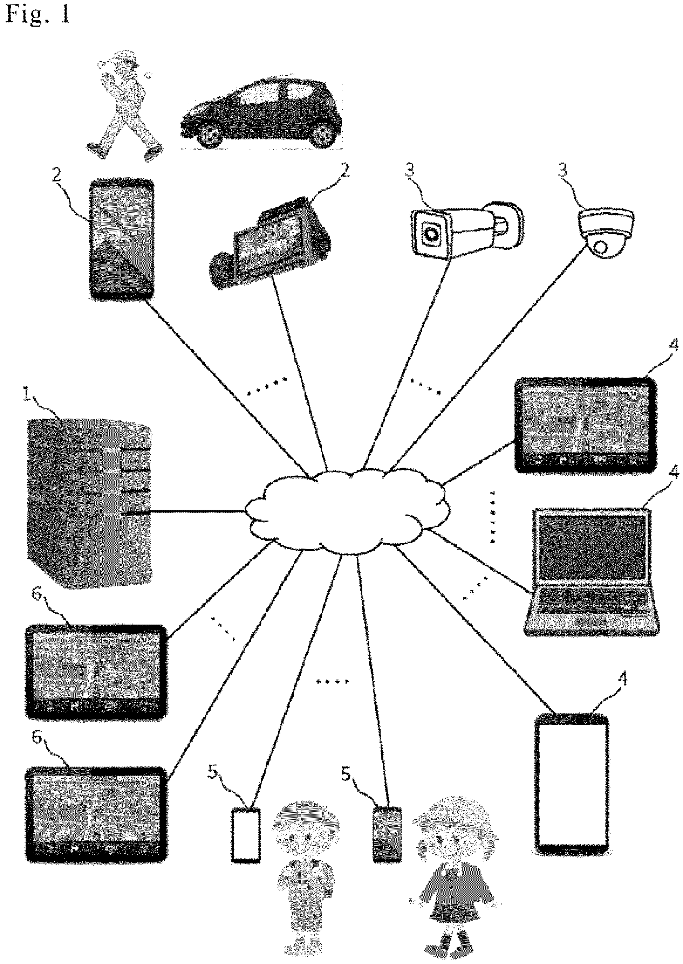

Fig. 1 is a schematic diagram of an information system A in the present embodiment. The information system A includes an information processing devices 1, one or a plurality of mobile terminals 2, one or a plurality of fixed terminals 3, one or a plurality of user terminals 4, one or a plurality of object terminals 5 and one or a plurality of navigation terminals 6.

The information processing device 1 is a server configured to provide one video (combined video or merged video) to the user terminals 4 using the videos transmitted from each of one or a plurality of mobile terminals 2 and each of one or a plurality of fixed terminals 3. The information processing device 1 is a cloud server or an application service provider (ASP) server, for example. The type of the information processing device 1 is not limited. The information processing device 1 may be a device included in a blockchain.

Note that the videos here are images captured with the mobile terminal 2 or the fixed terminal 3. The interval of the capturing time between a plurality of still images included in the video is not limited. The video includes 60 frames per second or 30 frames per second, for example. However, the video may be a set of a plurality of still images captured at an interval equal to or longer than a predetermined time (e.g., one minute) or a set of a plurality of still images captured when a predetermined condition is satisfied.

The mobile terminal 2 is installed in a movable body to capture videos. The mobile terminal 2 is, for example, a drive recorder, a smartphone, a tablet terminal or a camera with a communication function. The installation normally means the condition where something is fastened. However, it is also possible to consider that the installation includes the situation where something is contacted or held. The mobile terminal 2 may include a drive means such as an engine or a transportation means such as wheels.

The movable body is an object that is movable. The movable device is, for example, a ground movable device, a marine movable device, an undersea movable device, an aeronautical movable device, a space movable device or a living thing.

The ground movable device is, for example, an automobile, a vehicle (e.g., rickshaw or toy car) movable by manpower, a railroad vehicle (e.g., train or steam locomotive), a vehicle in an amusement park, or a vehicle for business use in a factory and other facilities. The ground movable body is not necessarily the movable body on which a person rides. For example, the ground movable device may be various robots for business use or for amusement (e.g. so-called radio controlled car). Note that the automobile is, for example, a passenger car, a truck, a bus, a taxi or a motorcycle.

The marine movable device is, for example, various ships, a jet ski bike, a surfboard, a rowing boat, a float or a raft.

The undersea movable device is, for example, a submarine, an underwater robot or a diving equipment such as an aqualung.

The aeronautical movable device is, for example, various airplanes, a helicopter, a glider, a parachute, a balloon or a kite.

The space movable device is, for example, a rocket, a spacecraft or an artificial satellite.

The living thing is, for example, a human or the movable body other than the human. The movable body other than the human is, for example, birds, mammals, reptiles, amphibians, fishes, insects or other various living things.

The fixed terminal 3 is a terminal that is fixed at an installed position and has a capturing function. The fixed terminal 3 has a capturing means and a communication means. The capturing means is a so-called surveillance camera, for example. The fixed terminal 3 includes the surveillance camera installed in public spaces, for example. The fixed terminal 3 includes the surveillance camera installed in private homes, buildings, and other structures, for example.

The user terminal 4 is a terminal used by a user. The user is a person who views the video or a person who requires the video. The user terminal 4 may have the function of the mobile terminal 2. Namely, the user terminal 4 may be a terminal of the user who provides the video. The user terminal 4 may be the later described navigation terminal 6.

The object terminal 5 is the terminal for transmitting the positional information. The object terminal 5 is, for example, the terminal equipped with the object to be watched. The object to be watched is, for example, a living thing or a thing. The living thing is, for example, a human or an animal such as a pet. The human is, for example, a child or an aged person. The thing as the object to be watched is, for example, the thing for preventing theft. For example, the thing is an automobile, a motorcycle or a bicycle. However, the object to be watched is not limited.

The navigation terminal 6 is so-called a navigation terminal for guiding the current position of the user and guiding the user to the destination. The navigation terminal 6 is the terminal equipped with the ground movable body or possessed by the human.

The information processing device 1 and each of the one or more mobile terminals 2 can generally communicate with each other through a network such as the Internet. The information processing device 1 and each of one or more fixed terminals 3 can generally communicate with each other through a network such as the Internet. The information processing device 1 and each of one or more user terminals 4 can generally communicate with each other through a network such as the Internet. The information processing device 1 and each of one or more object terminals 5 can generally communicate with each other through a network such as the Internet. The information processing device 1 and each of one or more navigation terminals 6 can generally communicate with each other through a network such as the Internet. Note that the user terminals 4 and the object terminals 5 can communicate with each other through a network such as the Internet. The user terminals 4 and the navigation terminals 6 can communicate with each other through a network such as the Internet.

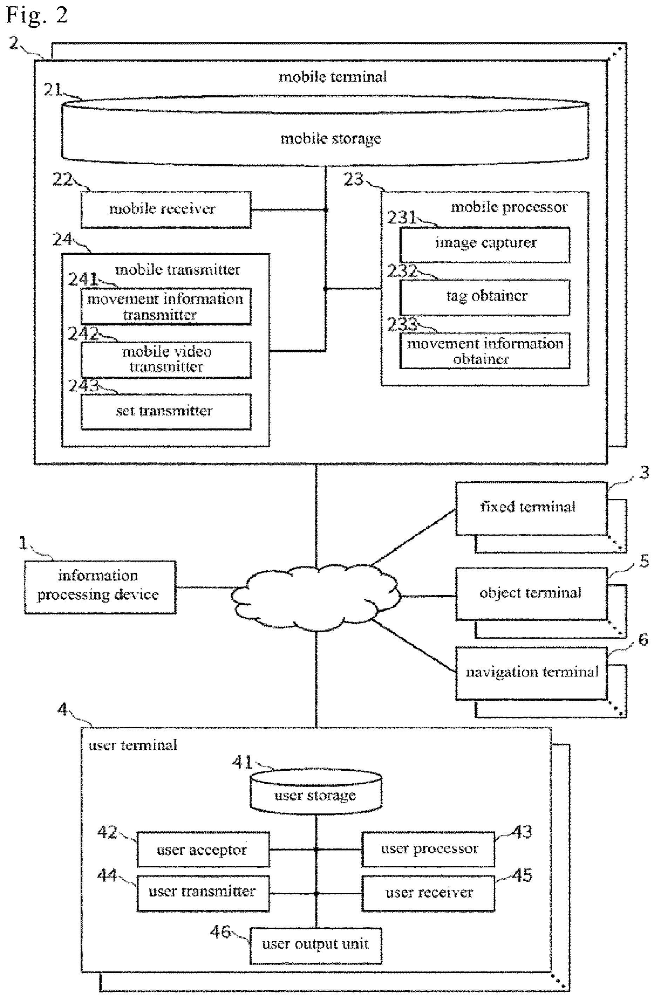

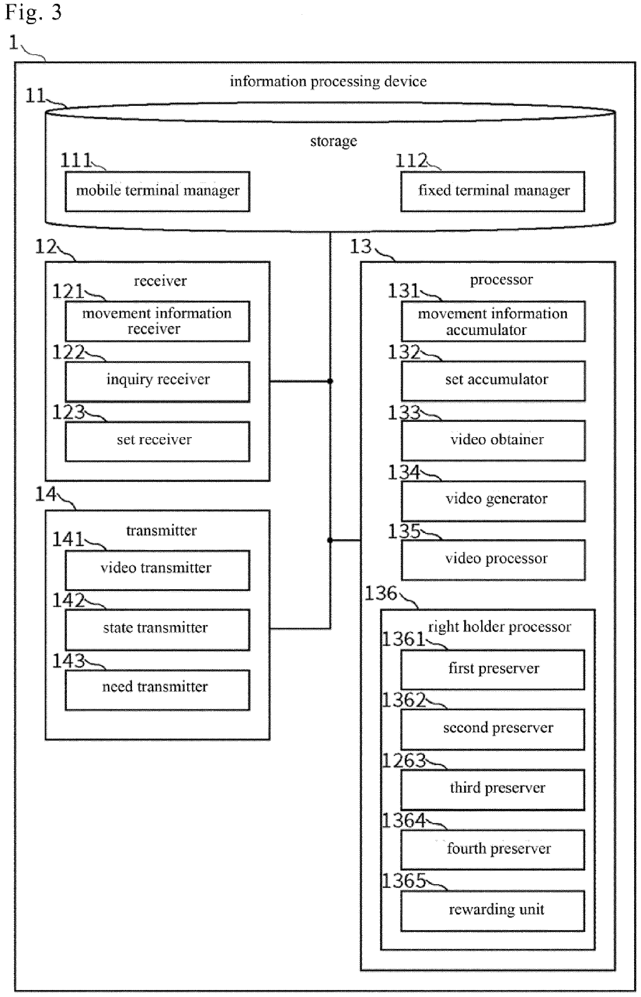

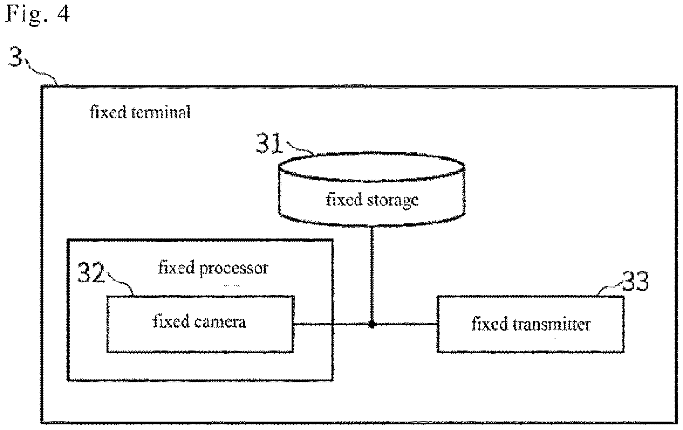

Fig. 2 is a block diagram of the information system A in the present embodiment. Fig. 3 is a block diagram of the information processing device 1. Fig. 4 is a block diagram of the fixed terminal 3.

### <Configuration of each device>

The information processing device 1 includes a storage (storage unit) 11, a receiver (reception unit) 12, a processor (processing unit) 13 and a transmitter (transmission unit) 14. The storage 11 includes a mobile terminal manager (mobile terminal management unit) 111 and a fixed terminal manager (fixed terminal management unit) 112. The receiver 12 includes a movement information receiver (movement information reception unit) 121, an inquiry receiver (inquiry reception unit) 122 and a set receiver (set reception unit) 123. The processor 13 includes a movement information accumulator (movement information accumulation unit) 131, a set accumulator (set accumulation unit) 132, a video obtainer (video obtaining unit) 133, a video generator (video generation unit) 134, a video processor (video processing unit) 135 and a right holder processor (right holder processing unit) 136. The video obtainer 133 includes a mobile video obtainer (mobile video obtaining unit) 1331 and a fixed video obtainer (fixed video obtaining unit) 1332. The right holder processor 136 includes a first preserver (first preservation unit) 1361, a second preserver (second preservation unit) 1362, a third preserver (third preservation unit) 1363, a fourth preserver (fourth preservation unit) 1364 and a rewarding unit 1365. The transmitter 14 includes a video transmitter (video transmission unit) 141, a state transmitter (state transmission unit) 142 and a need transmitter (need transmission unit) 143.

The mobile terminal 2 includes a mobile storage (mobile storage unit) 21, a mobile receiver (mobile reception unit) 22, a mobile processor (mobile processing unit) 23 and a mobile transmitter (mobile transmission unit) 24. The mobile processor 23 includes an image capturer (image capturing unit) 231, a tag obtainer (tag obtaining unit) 232 and a movement information obtainer (movement information obtaining unit) 233. The mobile transmitter 24 includes a movement information transmitter (movement information transmission unit) 241, a mobile video transmitter (mobile video transmission unit) 242 and a set transmitter (set transmission unit) 243.

The fixed terminal 3 includes a fixed storage (fixed storage unit) 31, a fixed processor (fixed processing unit) 33, a fixed receiver (fixed receiving unit) 32 and a fixed transmitter (fixed transmission unit) 34. The fixed processor 33 includes a fixed camera 331.

The user terminal 4 includes a user storage (user storage unit) 41, a user acceptor (user acceptance unit) 42, a user processor (user processing unit) 43, a user transmitter (user transmission unit) 44, a user receiver (user reception unit) 45 and a user output unit 46.

### <Detail of components of information processing device 1>

The storage 11 included in the information processing device 1 stores various kinds of information. The various kinds of information is, for example, the later-described mobile terminal information, the later-described fixed terminal information, the later-described attribute value set, the later-described movement information, the videos and the management information. The attribute value set is a mobile attribute value set or a fixed attribute value set.

The management information is the information used for watching the object person to be watched. The management information includes a user identifier for transmitting the videos to the user terminal 4 of the person who watches the object person and an object person identifier for identifying the object terminal 5 of the object person.

The mobile terminal manager 111 accumulates one or a plurality of mobile terminal information. The mobile terminal information is the information related to the mobile terminal 2. The terminal information includes the information of the videos possessed by the current mobile terminal 2. The mobile terminal information includes a mobile terminal identifier and a mobile attribute value set. The mobile terminal information may be associated with the videos. The mobile terminal identifier may be included in the mobile attribute value set.

The mobile terminal identifier is the information for identifying the mobile terminal 2. The mobile terminal identifier may be a right holder identifier for identifying the right holder which is a user of the mobile terminal 2. The mobile terminal identifier is, for example, an identification (ID) of the mobile terminal 2, a user identifier of the user of the mobile terminal 2, a name of the mobile terminal 2, an IP address of the mobile terminal 2 or a media access control (MAC) address of the mobile terminal 2.

The right holder is a person having any right about the video. The right holder is, for example, an owner of the video, a copyright holder of the video, an owner of the mobile terminal 2 capturing the video or an owner of the fixed terminal 3 capturing the video. The right holder is an initial right holder of the video. Although the right holder is normally the owner of the mobile terminal 2 or the owner of the fixed terminal 3, the right holder may be any person who has the right of the video captured by the mobile terminal 2 or any person who has the right of the video captured by the owner of the fixed terminal 3.

The right holder identifier is an identifier of the right holder of the video. The right holder identifier may be the terminal identifier. The right holder identifier is, for example, an identification (ID) of the right holder, a name of the right holder, a mail address of the right holder or a telephone number of the right holder. The ID of the right holder is, for example, a user identifier.

The attribute value set is a set of one or a plurality of mobile video attribute values. The mobile video attribute value is an attribute value of the mobile video. The mobile video attribute value is, for example, an environment information. The mobile video attribute value is, for example, a tag. The mobile video attribute value is normally a dynamic attribute value which is dynamically variable. However, the mobile video attribute value may be a static attribute value which is not dynamically valuable.

The environment information is the information about the environment where the video is captured. The environment information is, for example, a positional information, a direction information, a camera information, a time information, a weather information, a temperature information or a season information. The positional information is the information for identifying a capturing position. The capturing position is a location of the camera capturing the video. The positional information is, for example, a set of a latitude and a longitude or a set of a latitude, a longitude and an altitude. The positional information may be an area identifier identifying an area on a map, a road identifier identifying an address or a road, or a traffic-lane identifier identifying a traffic lane on a road. The direction information is the information for identifying the capturing direction. The direction information is, for example, the angle from the true north. The camera information is the information related to the camera. The camera information is, for example, an angle of view and a resolution. The time information is the information for identifying the time when the video is captured. The time when the video is captured may be the time around the time when the video is captured. The accuracy is not required for the time when the video is captured. The time information is, for example, a time, a set of year, month, day and hour, a set of year, month, day, hour and minute, a set of year, month, day, hour, minute and second, a set of year, month and day or a set of month and day. Namely, the time information may indicate the time with any granularity. The weather information is the information for identifying the weather at the time when and at the location where the video is captured. The weather information is, for example, "sunny," "rainy," "snowy" or "cloudy." The temperature information is the information for identifying an outside temperature at the time when and at the location where the video is captured. The temperature information is, for example, "25 degrees" or "30 degrees or higher." The season information is the information for identifying the season when the video is captured and at the location where the video is captured. The season information is, for example, "spring," "summer," "early summer" or "winter."

The tag is the information for identifying the properties of the video. The tag is, for example, the information resulting from the analysis of the video. The tag is, for example, the information resulting from the analysis of one or a plurality of movable body attribute values. The tag is, for example, the information resulting from the analysis of a plurality of movable body attribute values in time series.

The movable body attribute value is an attribute value about the movable body. The movable body attribute value is the information about the movement and is obtainable during the movement of the movable body, for example. The movable body attribute value is, for example, the information indicating the use of CAN (Controller Area Network) data or an airbag. The CAN data is, for example, the speed, the revolutions per minute of the engine or the state of a brake. The tag is, for example, "accident," "traffic jam," "dangerous driving," "overspeed" or a name (e.g., "human," "bear" or a name of a celebrity) of the object shown in the video.

Note that the positional information, the direction information, the time information, the weather information, the temperature information and the season information of the mobile video attribute value are dynamic attribute values. On the other hand, the camera information is a static attribute value.

The fixed terminal manager 112 accumulates one or a plurality of fixed terminal information. The fixed terminal information is the information related to the fixed terminal 3. The fixed terminal information includes a fixed terminal identifier and a fixed attribute value set. The fixed terminal information may be associated with the video. The fixed terminal identifier may be included in the fixed attribute value set.

The fixed terminal identifier is the information for identifying the fixed terminal 3. The fixed terminal identifier may be a right holder identifier for identifying the right holder which is a user of the fixed terminal 3. The fixed terminal identifier is, for example, an identification (ID) of the fixed terminal 3, a name of the fixed terminal 3, an IP address of the fixed terminal 3 or a media access control (MAC) address of the fixed terminal 3.

The fixed attribute value set is a set of one or a plurality of fixed video attribute values. The fixed video attribute value is an attribute value of the fixed video. The fixed video attribute value is, for example, an environment information or a tag. The fixed video attribute value is a dynamic attribute value which is dynamically variable or a static attribute value which is not dynamically valuable. Note that the static attribute value of the fixed terminal 3 is, for example, the positional information and the camera information. The dynamic attribute value of the fixed terminal 3 is, for example, the time information, the weather information, the temperature information and the season information.

The receiver 12 receives various information and instructions from the mobile terminal 2, the fixed terminal 3, the user terminal 4, the object terminal 5 or the navigation terminal 6. The various information and instructions are, for example, the movement information, the positional information, the inquiry, the attribute value set or the video.

The receiver 12 receives the video from the mobile terminal 2. The above described video is referred to as a mobile video. The receiver 12 receives the mobile video from the mobile terminal 2 approved by the user in accordance with the use condition flag stored in the mobile terminal 2.

The use condition flag is the information for identifying a stance of the right holder of the mobile video when a third party uses the mobile video. The use condition flag is, for example, the information indicating "existence of desire of non-provisional usage" or the information indicating "acceptance of provisional usage." Note that the non-provisional usage is the usage which is not provisional. The use condition flag is, for example, the information indicating "permission of the right holder is required for the usage of the mobile video by the third party" or the information indicating "the third party can use the mobile video freely."

The receiver 12 receives the mobile video from the mobile terminal 2 only when the mobile terminal 2 is approved by the user if the use condition flag stored in the mobile terminal 2 is the existence of the desire of the non-provisional usage of the mobile video which is not a provisional usage of the mobile video.

The receiver 12 receives the video captured by the fixed camera 331 from the fixed terminal 3. The above described video is referred to as a fixed video.

The video received by the receiver 12 is preferably associated with the right holder identifier for identifying the right holder of the video. The video received by the receiver 12 is associated with one or a plurality of video attribute values, for example.

The video received by the receiver 12 is the video capturing a parking lot, for example. The video received by the receiver 12 is the video capturing a child as object person to be watched, for example. However, the place where the video received by the receiver 12 is captured is not limited.

The movement information receiver 121 receives the movement information from the mobile terminal 2 when the movement of the mobile terminal 2 is started. The start is preferably the moment immediately after the start of movement. However, the start may be a predetermined time (e.g., one minute) after the start of movement.

The movement information is the information for identifying the movement of the mobile terminal 2. The information for identifying the movement may be the information for identifying the start of the movement. The movement here may be upcoming movement or ongoing movement. The movement information is, for example, a movement start flag or a terminal identifier. The movement start flag is the information for indicating the start of the movement. The start of the movement is, for example, the fact that the engine is turned on or the capturing is started. The terminal identifier is an identifier of the mobile terminal 2 which starts moving. Note that the terminal identifier may be the same as the right holder identifier.

The inquiry receiver 122 receives the inquiry about the environment information. The inquiry receiver 122 normally receives the inquiry from the user terminal 4. The inquiry receiver 122 may receive the inquiry from the object terminal 5 or the navigation terminal 6.

The inquiry about the environment information includes the environment information as a condition. The environment information here is the information related to the environment where the mobile terminal 2 or the fixed terminal 3 captures the video. The inquiry is a request for the video captured by the mobile terminal 2 or the fixed terminal 3. The inquiry is, for example, in a structured query language (SQL). However, the format and the data structure of the inquiry are not limited.

The inquiry receiver 122 receives the inquiry including the positional information, for example. The inquiry receiver 122 receives the inquiry including the positional information from the user terminal 4, for example.

The inquiry receiver 122 sequentially receives each of plurality of positional information transmitted from the object terminal 5, for example. The inquiry receiver 122 may receive each of plurality of positional information from the object terminal 5 or receive the positional information from the user terminal 4 or the like which receives the positional information from the object terminal 5.

The inquiry receiver 122 receives the inquiry including the positional information for identifying the destination set in the navigation terminal 6, for example. For example, the inquiry receiver 122 may receive the positional information from the navigation terminal 6, or receive the positional information from the user terminal 4 which receives the positional information from the navigation terminal 6, or receive the positional information from the user terminal 4 or the like from which the positional information is transmitted to the navigation terminal 6 for setting the destination.

The inquiry receiver 122 receives the inquiry including the route information which includes a plurality of positional information, for example. The inquiry receiver 122 receives the inquiry including the route information from the user terminal 4 or the navigation terminal 6, for example.

Note that the route information included in the inquiry is, for example, the information for identifying the route where the user who watches the video moves or the route information set in the navigation terminal 6 or the user terminal 4 having a navigation function. The route information preferably includes the time information associated with each of a plurality of positional information. The time information is, for example, the information for identifying the time when the terminal is located at the position identified by the positional information. Note that the distance (interval) between each of plurality of positional information included in the route information is not limited. The time when the terminal is located at the position identified by the positional information is the time when the video is captured at that position.

The set receiver 123 receives the mobile attribute value set from the mobile terminal 2. The set receiver 123 preferably receive the mobile attribute value set from the mobile terminal 2 when the movement of the mobile terminal 2 is finished. The mobile attribute value set here is the information for identifying the video accumulated in the mobile terminal 2. Note that the mobile attribute value set received by the set receiver 123 is associated with the identifier (e.g., terminal identifier, right holder identifier) of the mobile terminal 2.

The set receiver 123 receives the fixed attribute value set associated with the identifier of the fixed terminal 3 from the fixed terminal 3, for example. The set receiver 123 receives the dynamic attribute value which is dynamically variable in the fixed video attribute values of the fixed attribute value set, for example. The dynamic attribute value here is, for example, the time information, the weather information, the temperature information, the season information or the tag. Note that the set receiver 123 preferably does not receive the positional information and the camera information from the fixed terminal 3. The positional information and the camera information of the fixed terminal 3 are the static attribute values and are preferably accumulated in the fixed terminal manager 112 in advance.

The processor 13 performs various processes. For example, the various processes are performed by the movement information accumulator 131, the set accumulator 132, the video obtainer 133, the video generator 134, the video processor 135 and the right holder processor 136

The movement information accumulator 131 accumulates the movement information received by the movement information receiver 121 while being associated with the mobile terminal 2. The process of associating the movement information with the mobile terminal 2 is, for example, the process of associating the movement information with the right holder identifier or the terminal identifier.

The set accumulator 132 accumulates the mobile attribute value set received by the set receiver 123 in the mobile terminal manager 111. The set accumulator 132 normally accumulates the attribute value set while being associated with the mobile terminal 2 from which the mobile attribute value set is transmitted. The process of associating the attribute value set with the mobile terminal 2 is, for example, the process of associating the attribute value set with the right holder identifier or the terminal identifier of the mobile terminal 2.

The set accumulator 132 accumulates the fixed attribute value set received by the set receiver 123 in the fixed terminal manager 112. The set accumulator 132 normally accumulates the attribute value set while being associated with the fixed terminal 3 from which the fixed attribute value set is transmitted. The process of associating the attribute value set with the fixed terminal 3 is, for example, the process of associating the attribute value set with the right holder identifier or the terminal identifier of the fixed terminal 3.

The video obtainer 133 obtains the mobile videos captured by each of one or more mobile terminals 2. The video obtainer 133 also obtains the fixed videos captured by each of one or more fixed terminals 3. The video obtainer 133 normally obtains the mobile video and the fixed video received by the receiver 12.

The mobile video obtained by the video obtainer 133 is normally associated with the mobile attribute value set. The mobile attribute value set includes one or more environment information. The one or more environment information preferably includes the positional information for identifying the capturing position where the video is captured or the time information for identifying the capturing time when the video is captured. The mobile video is preferably associated with the right holder identifier or the terminal identifier of the mobile terminal 2.

The fixed video obtained by the video obtainer 133 is normally associated with the fixed attribute value set. The fixed attribute value set includes one or more environment information. The one or more environment information preferably includes the positional information for identifying the capturing position where the video is captured or the time information for identifying the capturing time when the video is captured. The fixed video is preferably associated with the right holder identifier or the terminal identifier of the fixed terminal 3.

For example, when a plurality of videos including the fixed video and the mobile video satisfying the adoption condition exist, the video obtainer 133 obtains the videos in accordance with a priority of a video type (priority type). When the fixed video or the mobile video which are a plurality of videos satisfying the adoption condition and associated with the positional information satisfying a first positional condition exist, the video obtainer 133 obtains either the fixed video or the mobile video in accordance with the priority of the video type. Here, the first positional condition is a condition that a location where the fixed video or the mobile video is captured is nearer than a predetermined location.

When a plurality of videos satisfying the adoption condition exists, the video obtainer 133 may determine the finally adopting (using) video using one or a plurality of video attribute values of a plurality of videos, for example. When a plurality of videos satisfying the adoption condition exists, the video obtainer 133 determines the video having the maximum resolution, for example.

The adoption condition is the condition for adopting (using) the videos as a source of one video (combined video or merged video). The adoption condition preferably includes one or more of positional condition and time condition. The positional condition is the condition related to the positional information associated with the video. For example, the positional condition is the condition that the video is associated with the positional information having a distance within a threshold value or smaller than the threshold value from the position indicated by the positional information included in the inquiry received by the inquiry receiver 122. The time condition is the condition related to the time information associated with the video. For example, the time condition is the condition that the video is associated with the time information indicating the time closest to the current time. For example, the positional condition is the first positional condition or the second positional condition. Note that the one video is the video finally provided to the user. For example, the one video is a combined video or a merged video.

The first positional condition is the condition related to the positional information. The first positional condition is the condition that the positional information has an approximating relation with the location identified by the target positional information. The approximating relation means that the locations are close (near) to each other. For example, the distance is within the threshold value, the distance is less than the threshold value, the moving time is within the threshold value or the moving time is less than the threshold value. Note that the target positional information is the positional information included in the inquiry, the received positional information or the positional information included in the route information included in the inquiry, for example.

The first positional condition is normally the condition assuming the situation that the image is captured at the location identified by the target positional information. Namely, the first positional condition may include other conditions than the positional information. The first positional condition may be the condition related to the positional information and the time information. For example, the first positional condition is the condition that the video is associated with the positional information and the time information satisfying an approximating condition with respect to a pair of the target positional information and the target time information. For example, the positional information and the time information satisfying an approximating condition with a pair of the target positional information and the target time information are the condition that the positional information indicates the position having the distance within the threshold value or less than the threshold value from the target positional information. Alternatively, the positional information indicates the moving distance is within the threshold value or less than the threshold value from the target positional information and the time information indicates the time having a time difference within the threshold value or less than the threshold value from the target time information. The first positional condition may be the condition related to the positional information and the traveling direction of the moving body. The first positional condition may be the positional information and the direction information of the camera.

The second positional condition is the condition that the positional information has an approximating relation with the reference position or the reference area to be compared. The approximating relation here means the condition that the distance from the reference position is within the threshold value, the distance from the reference position is less than the threshold value or the positional information is within the reference area. The reference area is, for example, a predetermined area in a parking lot or the like. The object to be compared is the location where the video is merged. For example, the object to be compared is a predetermined location such as a parking lot.

The priority type is the information for identifying the type of the video to be prioritized between the fixed video and the mobile video. The priority type is either (one of) "fixed video" or "mobile video", for example. The priority type is preferably "fixed video."

The video obtainer 133 sequentially obtains a plurality of videos satisfying one or more conditions in the positional condition and the time condition, for example. The above described plurality of videos includes one or more mobile videos and one or more fixed videos.

The video obtainer 133 obtains a plurality of videos corresponding to the inquiry received by the inquiry receiver 122, for example.

The video obtainer 133 obtains a plurality of videos associated with the positional information satisfying the first positional condition using the positional information received by the inquiry receiver 122, for example.

The video obtainer 133 sequentially obtains a plurality of videos associated with the positional information satisfying the first positional condition sequentially using a plurality of positional information received by the inquiry receiver 122, for example.

The video obtainer 133 sequentially obtains a plurality of videos associated with the positional information satisfying the first positional condition using the positional information received by the inquiry receiver 122, for example.

The video obtainer 133 obtains a plurality of videos associated with the positional information satisfying each of the plurality of first positional condition using each of the plurality of positional information included in the route information, for example.

The video obtainer 133 obtains a plurality of videos associated with the positional information satisfying the first positional condition using each of the plurality of positional information and time information included in the route information, for example.

The video obtainer 133 obtains a plurality of videos associated with the positional information satisfying the second positional condition and associated with the time information satisfying the time condition, for example. Note that the second positional condition is, for example, the information indicating that the positional information is within a predetermined area (e.g., predetermined parking lot). The time information is, for example, the information that the time information indicates the time within a threshold value (e.g., within 30 seconds) from the current time or before the threshold time.

A plurality of videos obtained by the video obtainer 133 normally includes one or more mobile videos and one or more fixed videos. However, a plurality of videos obtained by the video obtainer 133 may be all mobile videos or all fixed videos.

The video obtainer 133 preferably obtains the video satisfying an accumulation condition. The video obtained by the video obtainer 133 is preferably associated with the attribute value set and the right holder identifier.

Note that the accumulation condition is the condition for accumulating the video. The accumulation condition is, for example, the condition that the inquiry satisfies a specific condition. The accumulation condition is, for example, the condition that the later-described preservation condition is satisfied. The accumulation condition may be same as the adoption condition.

Note that the device storing the video to be obtained may be the mobile terminal 2, the information processing device 1 or another device which is not illustrated. Another device may be, for example, a device included in a blockchain.

For example, the video obtainer 133 obtains one or a plurality of videos corresponding to the inquiry from the mobile terminal 2 or the fixed terminal 3 when the inquiry receiver 122 receives the inquiry. For example, the video obtainer 133 obtains, from the mobile terminal 2 or the fixed terminal 3, one or more videos paired with the attribute value set satisfying the conditions related to the environment information included in the inquiry.

For example, the video obtainer 133 interprets the inquiry, detects the fixed terminal 3 capable of providing the video satisfying the inquiry, and receives the video captured by the fixed terminal 3 from the fixed terminal 3. For example, the video obtainer 133 obtains the terminal identifier paired with the positional information satisfying the first positional condition from the fixed terminal manager 112 with respect to the positional information included in the inquiry, transmits the video transmission instruction to the fixed terminal 3 identified by the terminal identifier, and receives the video corresponding to the video transmission instruction from the fixed terminal 3. For example, the video obtainer 133 obtains the terminal identifier paired with the positional information and the direction information satisfying the first positional condition from the fixed terminal manager 112 with respect to the positional information and the direction information included in the inquiry, transmits the video transmission instruction to the fixed terminal 3 identified by the terminal identifier, and receives the video from the fixed terminal 3.

Note that the video transmission instruction is normally the instruction for transmitting the currently capturing video. However, the video transmission instruction may be the instruction for transmitting the video captured by the fixed terminal 3 in the past and stored in the fixed terminal 3 or a not illustrated other devices. The video transmission instruction may also be the inquiry. Namely, the inquiry may be the instruction for transmitting the currently capturing video.

For example, the video obtainer 133 transmits the inquiry to one or more mobile terminals 2 and receives one or more videos corresponding to the inquiry from one or a plurality of mobile terminals 2. The above described process is referred to as an unregistered video search process. The unregistered video search process is the process of obtaining the video satisfying a predetermined condition from unregistered videos stored in the mobile terminals 2. For example, the unregistered video search process is the process of obtaining the video corresponding to the inquiry from unregistered videos stored in the mobile terminal 2.

For example, the video obtainer 133 preferably interprets the inquiry, transmits the inquiry to one or more mobile terminals 2 and receives one or more videos corresponding to the inquiry from the one or more mobile terminals 2 when it is determined that there is no fixed terminal 3 capable of providing the video corresponding to the inquiry.

For example, the video obtainer 133 obtains the video corresponding to the inquiry among the videos captured by one or more mobile terminals 2 corresponding to the movement information. The video obtainer 133 transmits the inquiry to one or more mobile terminals 2 corresponding to the movement information and receives the videos responding to the inquiry from the mobile terminals 2. Note that the mobile terminal 2 corresponding to the movement information is the mobile terminal 2 during the movement and the mobile terminal 2 capable of transmitting the videos.

When the inquiry receiver 122 receives the inquiry, for example, the video obtainer 133 determines one or more attribute value sets corresponding to the inquiry and obtains the video corresponding to the attribute value sets from the storage 11.

For example, the video obtainer 133 refers to the mobile terminal manager 111, determines one or a plurality of videos corresponding to the inquiry and obtains one or a plurality of videos from the mobile terminals 2.

The process of referring to the mobile terminal manager 111 and determining the video corresponding to the inquiry is the process of determining the attribute value set corresponding to the inquiry among one or more attribute value sets included in the mobile terminal manager 111. The above described process is referred to as a registered video search process. The registered video search process is the process of searching the video satisfying a predetermined condition from the registered videos. The registered video search process is, for example, the process of searching the video corresponding to the inquiry from the registered videos. Note that the registered video is the video on which the later-described first preservation process or the later-described second preservation process is performed.

For example, the video obtainer 133 refers to the mobile terminal manager 111, determines the video corresponding to the inquiry, determines whether or not the video is transmittable from the mobile terminal 2 and obtains the video from the mobile terminal 2 only when the video is transmittable.

For example, the video obtainer 133 attempts to communicate with the mobile terminal 2 and determines that the video is transmittable from the mobile terminal 2 when the video obtainer 133 can receive the information from the mobile terminal 2. For example, the video obtainer 133 determines whether or not the movement information corresponding to the mobile terminal 2 is stored in the storage 11 and determines that the video is transmittable from the mobile terminal 2 when the movement information is stored in the storage 11. The state that the video is transmittable is, for example, the state that the power of the mobile terminal 2 or the movable body corresponding to the mobile terminal 2 is turned on (e.g., the engine of a car as the movable body is turned on). The video obtainer 133 may determine whether or not the video is transmittable with any method.

For example, the video obtainer 133 refers to the fixed terminal manager 112, determines one or a plurality of fixed videos corresponding to the inquiry, and obtains the fixed video from the fixed terminal manager 112.

For example, the video obtainer 133 obtains the video associated with the mobile attribute value set satisfying the preservation condition from the mobile terminal 2. For example, the video obtainer 133 obtains the video associated with the fixed attribute value set satisfying the preservation condition from the fixed terminal 3. The above described process enables to obtain the video automatically.

The preservation condition is the condition for accumulating the video. The preservation condition is the condition related to the attribute value set. The preservation condition is preferably the condition related to one or more tags. The preservation condition is, for example, the condition that the attribute value set includes the tag indicating "accident," the condition that the attribute value set includes the tag indicating "traffic jam" or the condition that the attribute value set includes the tag indicating a specific location. The tag indicating the specific location is, for example, a name of a specific parking lot, a specific place name, a name of a specific scenic beauty or a specific landscape.

The preservation condition is the condition that the video corresponds to the attribute value set satisfying a predetermined condition among the attribute value sets corresponding to one or more videos stored in a predetermined device or an area (e.g., storage 11). The predetermined condition is, for example, the condition that the attribute value included in the attribute value set is not included in the attribute value sets corresponding to one or more videos stored in a predetermined device or a predetermined area.

The video obtainer 133 may obtain a processed image obtained by processing the video captured by the mobile terminal 2 or the fixed terminal 3, for example. The processed image is, for example, an around view image. The around view image is the image projected on an around view monitor. The around view image is the image viewing the area including the moving body from right above.

The mobile video obtainer 1331 performs the process of obtaining the mobile video in the processes performed by the video obtainer 133.

The fixed video obtainer 1332 performs the process of obtaining the fixed video in the processes performed by the video obtainer 133.

The video generator 134 generates one video by combining the mobile videos and the fixed videos in a time series manner or in a spatial manner.

The video generator 134 generates one video (combined video or merged video) using a plurality of videos obtained by the video obtainer 133. The operation of generating one video includes the operation of sequentially providing a part of the video viewed as one video from the user to the video transmitter 141. Note that a plurality of videos includes the mobile video and the fixed video. The one video may also be a set of a plurality of partial videos with gaps in transmission intervals.

Hereafter, a further specific example of the video generator 134 will be described. The video generator 134 performs (1) combining process of the videos in a time series manner, (2) combining (merging) process of the videos in a spatial manner or both of (1) (2).

### (1) Combining process of videos in time series manner

For example, the video generator 134 generates one video by combining one or a plurality of mobile videos and one or a plurality of fixed videos in a time series manner.

The video generator 134 combines each of a plurality of videos having different time information from each other obtained by the video obtainer 133 in a time series manner and generates one video (combined video), for example. The operation of combining a plurality of videos in a time series manner and generating one video (combined video) may be the operation of sequentially providing a plurality of videos to the video transmitter 141. Namely, it is enough if the video is viewed as one video for the user when the operation of combining a plurality of videos in a time series manner and generating one video is performed.

For example, the video generator 134 combines each of a plurality of videos obtained by the video obtainer 133 in the order of the time associated with the video to generate one video. For example, the video generator 134 obtains a part of each of a plurality of videos obtained by the video obtainer 133, sequentially combines a part of the each of the videos and generates one video. The operation of combining each of a plurality of videos in a time series manner is normally the operation of sequentially combining a part of the videos captured by the mobile terminal 2 or the fixed terminal 3. The operation of sequentially connecting a part of the videos may be the operation of sequentially providing a part of the videos to the video transmitter 141. The operation of connecting the videos in the order of the time associated with the video is the operation of connecting the videos in the order of the time indicated in the time information associated with the video or the operation of sequentially connecting the videos in the order of the time when the video is received.

### (2) Combining process of videos in spatial manner

For example, the video generator 134 generates one video (merged video) by merging a part of each of a plurality of videos having different positional information associated with each of a plurality of videos obtained by the video obtainer 133 in a spatial manner. For example, the video generator 134 generates one frame using a part or an entire of frames included in each of a plurality of videos obtained by the video obtainer 133 and generates one video by combining a plurality of frames in a time series manner.

For example, the video generator 134 generates one video having a plurality of frames formed by merging at least a part of the frames includes in the mobile video and at least a part of the frames included in the fixed video in a spatial manner.

For example, the video generator 134 generates one video by processing each of a plurality of videos obtained by the video obtainer 133. For example, the video generator 134 generates one frame by connecting an overhead frame formed by composing the frames included in the mobile video and the fixed image in a spatial manner. Thus, one video having one frame is generated.

For example, the video generator 134 composes a plurality of around view images to generate the around view image of a wide area. Note that Around View is the registered trademark.

Note that a plurality of source videos for generating one video by the video generator 134 includes the mobile video and the fixed video.

The process of merging the frames included in each of a plurality of videos in a spatial manner is, for example, the following processes (a) (b).

### (a) Method based on image processing

For example, the video generator 134 performs the process of matching the direction and the scale of each of a plurality of frames as the object of connecting the videos in a spatial manner. Then, the video generator 134 detects identical regions in each of a plurality of frames, for example. Then, the video generator 134 performs the process of overlapping a plurality of frames having the identical regions to generate one frame of a wide area, for example. Note that it is possible to detect the identical regions in a plurality of frames using the conventionally known technology.

### (b) Method based on machine learning

For example, the video generator 134 gives a plurality of frames and learning models to the module for performing the prediction processing of the machine learning, executes the module, and obtains one frame of a wide area.

Note that the learning model is obtained by using a plurality of frames as an explanatory variable, gives a plurality of teacher data using one frame of a wide area generated from the plurality of frames as an objective variable to the module performing the learning process of the machine learning and executes the module.

The learning model may be also referred to as a learning device, a classifier, a classification model or the like. The algorithm of the machine learning is not limited. Although the deep learning is preferable, the random forest or other algorithms can be also used. Various existing functions and libraries of the machine learning such as a library of TensorFlow and a module of random forest of R language can be used for the machine learning, for example.

The video processor 135 obtains a stereoscopic three-dimensional video from at least a part of the one video generated by the video generator 134.

The stereoscopic three-dimensional video is a three-dimensional video generated from illustrated frames. Note that the detailed explanation is omitted since the technology for obtaining the stereoscopic three-dimensional video from the image of the camera is the conventionally known technology. (shown in Internet URL "https://xtech.nikkei.com/atcl/nxt/column/18/01883/00004/").

For example, the video processor 135 determines a partial video satisfying the processing condition in the one video generated by the video generator 134 and obtains the stereoscopic three-dimensional video from the partial video.

The processing condition is the condition for identifying the partial video for obtaining the stereoscopic three-dimensional video. For example, the processing condition is the condition based on one or more video attribute values or the condition based on the tag obtained by analyzing the video. The processing condition is, for example, "before and after one minute from the frame corresponding to "tag = accident"" or "weather = snowy." The partial video here is the video forming the one video.

For example, the video processor 135 gives each of the frames included in the video and the learning model to a prediction module of the machine learning, executes the prediction module, and obtains a three-dimensional image forming a stereoscopic three-dimensional image. Note that the learning model here is the information obtained by giving a plurality of teacher data including the captured still images and the stereoscopic three-dimensional image formed from the captured still images to the learning module of the machine learning and executing the learning module. The algorithm of the machine learning is not limited. Although the deep learning is preferable, the random forest or other algorithms can be also used.

For example, the video processor 135 generates a three-dimensional illustration on each of the frames included in the video using the conventionally known image processing. Thus, the stereoscopic three-dimensional video is generated.

The right holder processor 136 performs the right holder process.

The right holder process is the process about the right of one video. For example, the right holder process is the process about the right holder identified by the right holder identifier associated with one video generated by the video generator 134. The right holder process is the process about the right holder identified by the right holder identifier associated with the stereoscopic three-dimensional video obtained by the video processor 135. The right holder process is, for example, the later-described first preservation process, the later-described second preservation process, the later-described third preservation process, the later-described fourth preservation process and the later-described rewarding process.

For example, the right holder processor 136 performs the right holder process which is the process performed in response to the transmission of the video from the video transmitter 141 and the process about the right holder identified by the right holder identifier associated with the video. Note that the video transmitted by the video transmitter 141 is the video generated by the video generator 134 or the stereoscopic three-dimensional video obtained by the video processor 135.

Note that the right holder identifier associated with one video is, for example, the right holder identifier associated with each of a plurality of videos which are the source of one video (combined video or merged video) or an identifier of the user who request the one video.

For example, the right holder processor 136 accumulates the videos obtained by the video obtainer 133 while being associated with the right holder identifier. The right holder processor 136 preferably accumulates only the videos obtained by the video obtainer 133 as the video satisfying the accumulation condition. It is preferable that the right holder processor 136 does not accumulate the video not satisfying the accumulation condition.

The right holder identifier is the right holder identifier of the right holder of the source video, the right holder identifier of the right holder of the one video or the right holder identifier of the right holder of the stereoscopic three-dimensional video.

For example, when the video obtainer 133 determines that the mobile terminal 2 holding the video corresponding to the inquiry is in the state of being unable to transmit the video, the right holder processor 136 obtains a state information about this state.

The state information is the information about the state in which the video is not transmittable. For example, the state information indicates the state of the mobile terminal 2 possessing the video. The state information is, for example, "the video exists but not currently transmittable" or "the video exists in the mobile terminal of Mr. or Ms. X but not currently transmittable." The state information is, for example, the information indicating that the power of the mobile terminal 2 is turned off or the information indicating that the power of the mobile terminal 2 is turned on.

For example, when the video obtainer 133 determines that the mobile terminal 2 holding the video corresponding to the inquiry is in the state of being unable to transmit the video, the right holder processor 136 obtains need information.

The need information is the information indicating that there is a need for the video. The need information is, for example, "your video XXX is requested by another user" or "your video XXX is requested by another user for X yen."

The first preserver 1361 performs the first preservation process of accumulating one video (combined video or merged video) generated by the video generator 134 or the stereoscopic three-dimensional video obtained by the video processor 135 while being associated with the attribute value set associated with each of the videos which are the source of the one video. The first preserver 1361 may perform the first preservation process of accumulating the video received from the mobile terminal 2 or the fixed terminal 3 while being associated with the attribute value set associated with the video. Note that the attribute value set associated with the video is the mobile attribute value set associated with the mobile video or the fixed attribute value set associated with the fixed video.

The second preserver 1362 performs the second preservation process of accumulating one video generated by the video generator 134 or the stereoscopic three-dimensional video obtained by the video processor 135 while being associated with the right holder identifier corresponding to each of a plurality of videos which are the source of the video.

Note that the first preserver 1361 or the second preserver 1362 may accumulate one video generated by the video generator 134 or the stereoscopic three-dimensional video obtained by the video processor 135 while being associated with the attribute value set associated with each of a plurality of videos which are the source of the video and associated with the right holder identifier corresponding to each of a plurality of videos which are the source of the one video.

The third preserver 1363 accumulates one video generated by the video generator 134 or the stereoscopic three-dimensional video obtained by the video processor 135 while being associated with the right holder identifier for identifying the user of the user terminal 4. Note that the user of the user terminal 4 here is the person viewing one video or the stereoscopic three-dimensional video. The user terminal 4 here is, for example, the terminal transmitting the inquiry.

The destination in which one video or the stereoscopic three-dimensional video is accumulated is, for example, the storage 11. However, one video or the stereoscopic three-dimensional video may be accumulated in the other devices included in a blockchain. The accumulated video is normally associated with the video identifier for identifying the video.

The fourth preserver 1364 performs the fourth preservation process of accumulating a preservation information including an access information for accessing the one video or the stereoscopic three-dimensional video which is accumulated. The process of accumulating the videos and the fourth preservation process of the preservation information corresponding to the video may be performed in any order.

For example, the fourth preserver 1364 performs the fourth preservation process of accumulating the preservation information generated and accumulated by the video generator 134 including the access information for accessing the accumulated one video in a blockchain.

For example, the fourth preserver 1364 performs the fourth preservation process of accumulating the preservation information obtained and accumulated by the video processor 135 including the access information for accessing the accumulated stereoscopic three-dimensional video in a blockchain.

Note that the fourth preserver 1364 preferably accumulates the preservation information in a blockchain. Namely, the fourth preserver 1364 preferably accumulates the preservation information in a distributed ledger in a blockchain. The fourth preserver 1364 preferably registers the preservation information as an NFT (non-fungible token). The fourth preserver 1364 preferably registers the preservation information in a distributed file system in an IPFS (Inter Planetary File System) network.

The preservation information is the information for retaining the originality of the video. The preservation information is, in other words, the headline information of the video. The preservation information is, for example, the access information and one or more video attribute values. The preservation information preferably includes one or a plurality of right holder identifiers, for example. When the preservation information includes a plurality of right holder identifiers, the video may be shared by right holders or the plurality of right holder identifiers may be right holder history information. The right holder history information is a set of right holder identifiers and information indicating the history of right holder changes. The fourth preservation process guarantees the originality of the preservation information of the registered video. The guarantee of the originality of the preservation information also guarantees the originality of the video corresponding to the preservation information. Note that the access information is the information for accessing the video. The access information is the information for identifying the destination in which the video is accumulated. The access information is, for example, URL and URI.

The preservation information preferably includes the information (also referred to a flag) indicating whether or not the video can be provided to a third party. The flag is, for example, the information indicating that the video is viewable by a third party, that the video may be for sale or that the video is neither viewable nor for sale.

For example, the rewarding unit 1365 performs the rewarding process for each of right holders identified by the right holder identifier associated with each of a plurality of videos which are the source of the one video generated by the video generator 134.

For example, the rewarding unit 1365 performs the rewarding process for each of right holders identified by the right holder identifier associated with each of a plurality of videos which are the source of the stereoscopic three-dimensional video obtained by the video processor 135.

The rewarding process is a process of providing a reward. For example, the rewarding process is the process of increasing points managed in a manner paired with each of one or a plurality of right holder identifiers associated with the video. For example, the rewarding process is the process of paying money to the right holder identified by each of one or a plurality of right holder identifiers associated with the video. For example, the rewarding process is the process of transmitting the video or other contents to the user terminal 4 of the right holder identified by each of one or a plurality of right holder identifiers associated with the video. The rewarding process may be any processes of providing a merit to the right holder identified by each of one or a plurality of right holder identifiers associated with the video. The content of the rewarding process is not limited. The reward may be provided in any form, including money, points, products, and contents. The content of the reward is not limited.

The rewarding unit 1365 preferably obtains one or a plurality of video attribute values associated with each of a plurality of videos which are the source of one video transmitted by the video transmitter 141, determines the reward to each of the plurality of right holders using one or more video attribute values and performs the rewarding process which is the process of providing the reward.

Here, one or more video attribute values are, for example, the data amount of the video, the time of the video, the number of frames of the video and the resolution of the video.

The rewarding unit 1365 preferably obtains a reward amount corresponding to a service identifier for identifying the service performed on the target video and performs the rewarding process which is the process of providing the reward corresponding to the reward amount. Note that the service identifier is, for example, "viewing" and "purchasing." In the above described case, the storage 11 stores the reward amount corresponding to the service identifier or the information for determining the reward amount corresponding to the service identifier.

For example, the rewarding unit 1365 obtains the reward amount and performs the rewarding process which is the process of providing the reward corresponding to the reward amount using one or a plurality of information of one or a plurality of video attribute values and service identifiers. In the above described case, an arithmetic expression or a table corresponding to each of a plurality of service identifiers is stored in the storage 11, for example. The arithmetic expression is the expression for calculating the reward amount using one or a plurality of video attribute values as parameters. The table includes a plurality of correspondence information for managing the reward amount corresponding to one or a plurality of video attribute values.

The rewarding unit 1365 normally performs the process of causing the user that has enjoyed the service relevant to the target video to pay the reward.

The process of causing the user to pay the reward is, for example, the process of causing the user to pay the obtained reward amount. The process of causing the user to pay the reward is, for example, the process of causing the user to pay the obtained reward amount and the profit obtained by the management side of the information processing device 1. The process of causing the user to pay the reward is, for example, the process of reducing the points corresponding to the user receiving the service or the settlement process using the credit card number of the corresponding user.

The transmitter 14 transmits various information and instructions to the mobile terminal 2, the fixed terminal 3, the user terminal 4 or the navigation terminal 6. The various information and instructions are, for example, the videos, the inquiries, the state information and the need information.

For example, the video transmitter 141 transmits one video (combined video or merged video) generated by the video generator 134. For example, the video transmitter 141 transmits the stereoscopic three-dimensional video instead of the one video or in addition to the one video.

The video transmitter 141 transmits the one video or the stereoscopic three-dimensional video to the user terminal 4. The video transmitter 141 preferably transmits the video when the inquiry is received. For example, the video transmitter 141 transmits the video to the user terminal 4 or the navigation terminal 6. The operation of transmitting one video may be the operation of the video transmitter 141 to sequentially transmit a part of the received one video.

For example, the video transmitter 141 transmits the video obtained by the video obtainer 133 to the user terminal 4.

When the video is not transmittable, the state transmitter 142 transmits the state information about the state to the user terminal 4. For example, the state transmitter 142 transmits the state information obtained by the right holder processor 136 to the user terminal 4. Note that whether or not the video is not transmittable is determined by the video obtainer 133, for example.

When it is determined that the video is not transmittable, the need transmitter 143 transmits the need information to the user corresponding to the video for informing that there is a need for the video. For example, the need transmitter 143 transmits the need information obtained by the right holder processor 136 to the user corresponding to the video.

The operation of transmitting the need information to the user corresponding to the video is, for example, the operation of transmitting the need information to a destination indicated in destination information and paired with the right holder identifier corresponding to the video by an e-mail. The operation of transmitting the need information to the user corresponding to the video is, for example, the operation of transmitting the need information to the phone number paired with the right holder identifier corresponding to the video by a short message. The operation of transmitting the need information to the user corresponding to the video is, for example, the operation of transmitting the need information to the mobile terminal 2 paired with the right holder identifier corresponding to the video. The user corresponding to the video is typically the right holder of the video. For example, the destination information is a mail address, a telephone number, an IP address or ID.

### <Detail of components of mobile terminal 2>

The mobile storage 21 included in the mobile terminal 2 stores various kinds of information. The various information is, for example, the mobile video, the mobile attribute value set, the right holder identifier, the movement information indicating the start of movement, a pair of an attribute value tag condition and a tag, a pair of a video tag condition and a tag, one or a plurality of preservation conditions, one or a plurality of obtaining information or the use condition flag. The mobile storage 21 normally stores one or a plurality pairs of an attribute value tag condition and a tag. The mobile storage 21 normally stores one or a plurality pairs of a video tag condition and a tag.

For example, one or more video attribute values included in the mobile attribute value set are associated with one or more still images (also referred to as fields or frames) included in the mobile video. The one or more mobile video attribute values may be associated with all still images, associated with a part of the still images or associated with a plurality of still images.

The attribute value tag condition is the condition for obtaining the tag based on one or a plurality of movable body attribute values. The attribute value tag condition is the condition for one or a plurality of movable body attribute values. The attribute value tag condition is, for example, "a brake is suddenly applied," "the degree of deacceleration (acceleration) per unit time is lower than or equal to a threshold value (a brake is suddenly applied)," "an air bag is activated," "driving at a first speed or lower lasts for a second duration or longer (being in a traffic jam) or "the positional information corresponds to a specific name." The tag paired with the attribute value tag condition is, for example, "abnormal driving," "accident," "traffic jam," or "specific location."

The video tag condition is the condition for the video. The video tag condition is based on the analysis result of the video. The video tag condition is, for example, "there is a still image of a plurality of automobiles colliding with each other (accident)," "there is a frame of a plurality of automobiles with a distance of 0 (automobiles are contacted)," "the number of automobiles within a predetermined distance is greater than or equal to a first threshold value for a duration longer than or equal to a second threshold value (traffic jam)" or "the cumulative value per unit time of a change in the distance between the center of gravity of the preceding car and the traffic lane is greater than or equal to a threshold value (erratic driving of the preceding car). The tag paired with the video tag condition is, for example, "accident," "traffic jam" or "abnormal driving."

The preservation condition is the condition for preserving the video. The preservation condition is the condition for the attribute value set. The preservation condition is, for example, "the air bag is activated (accident occurs)" or "a specific tag is applied to the video (the specific tag is, for example "accident" or "dangerous driving")." The preservation condition is associated with, for example, the obtaining information. The obtaining information is the information for specifying the video to be obtained. The obtaining information is the information for specifying the video to be obtained when the preservation condition is satisfied. The above described preservation condition is, for example, "(1) the number of the automobiles in the screen is greater than or equal to a first threshold value & (2) the travelling speed of the automobile is lower than or equal to a second threshold value & the duration time of (1) (2) is longer than or equal to a third threshold value (traffic jam is continued)." For example, the obtaining information is the information for indicating "the video from one minute before the preservation condition is met until the preservation condition is no longer met after being met."

The mobile receiver 22 receives various information. The various information is, for example, the inquiry, the need information, the video captured by other mobile terminals 2 and the video captured by the fixed terminal 3.

The mobile processor 23 performs various processes. The various processes are, for example, processes performed by the image capturer 231, the tag obtainer 232 or the movement information obtainer 233. The mobile processor 23 transforms the data structure of the information received by the mobile receiver 22 for output.

The mobile processor 23 detects, for example, the start of movement. The detection of the start of movement is the detection of, for example, turning on of the mobile terminal 2 or turning on of the engine of the movable body.

The mobile processor 23 detects, for example, the end of movement. The detection of the end of movement is the detection of, for example, turning off of the mobile terminal 2 or turning off of the engine of the movable body.

The mobile processor 23 determines, for example, the attribute value set corresponding to the inquiry received by the mobile receiver 22 and obtains the video paired with the attribute value set from the mobile storage 21.

The mobile processor 23 obtains, for example, the video of movement from the start to the end of the movement. The mobile processor 23 obtains, for example, the video of movement from the start to the end of the movement while being associated with the attribute value set obtained during the movement.

The mobile processor 23 obtains, for example, the attribute value set during video capturing. The mobile processor 23 accumulates the obtained mobile attribute value set in the mobile storage 21. For example, the mobile processor 23 associates the obtained mobile attribute value set with the video. The operation of associating the mobile attribute value set with the video is normally the operation of associating the mobile attribute value set with the frames in the video. The attribute value set and the frames are preferably synchronized temporally.

The mobile attribute value set is, for example, one or more environment information. The environment information is, for example, the positional information, the time information, the weather information, the temperature information or the season information.

The mobile processor 23 obtains the positional information during video capturing, for example. For example, the mobile processor 23 having the function of a GPS receiver obtains the positional information. The mobile processor 23 obtains, for example, the positional information continuously, at predetermined intervals, or when an obtaining condition is satisfied. The obtaining condition is the condition for obtaining the information. The obtaining condition is, for example, the detection of an accident, the detection of a traffic jam, or the change in weather information.

The mobile processor 23 obtains, for example, the time information from a not-illustrated clock during video capturing. The mobile processor 23 obtains, for example, the time information continuously, at predetermined intervals, or when the obtaining condition is satisfied.

The mobile processor 23 obtains, for example, the time information from a not-illustrated clock during video capturing, and obtains the season information corresponding to the time information.

The mobile processor 23 obtains, for example, the weather information during video capturing. The mobile processor 23 obtains, for example, the weather information corresponding to the positional information from a not-illustrated server. The mobile processor 23 obtains, for example, the weather information continuously, at predetermined intervals, or when the obtaining condition is satisfied.

The mobile processor 23 obtains, for example, the temperature information during video capturing. The mobile processor 23 obtains, for example, the temperature information corresponding to the positional information from a not-illustrated server. The mobile processor 23 obtains, for example, the temperature information from a temperature sensor installed in the movable body. The mobile processor 23 obtains, for example, the temperature information continuously, at predetermined intervals, or when the obtaining condition is satisfied.

The mobile processor 23 determines, for example, whether or not the obtained mobile attribute value set satisfies the preservation condition. The mobile processor 23 determines, for example, whether or not the obtained time-series mobile attribute value set satisfies the preservation condition. For example, when the mobile attribute value set satisfies the preservation condition, the mobile processor 23 obtains the video corresponding to the mobile attribute value set. For example, when the mobile attribute value set satisfies the preservation condition, the mobile processor 23 obtains the video corresponding to the preservation condition. For example, when the mobile attribute value set satisfies the preservation condition, the mobile processor 23 obtains the obtaining information paired with the preservation condition and obtains the video based on the obtaining information.

The mobile processor 23 preferably includes, for example, a microphone to obtain sound information and accumulate the sound information while being associated with the video obtained by the image capturer 231. Note that the above described function is, for example, the function of a drive recorder.

For example, the mobile processor 23 obtains the use condition flag of the mobile storage 21 and determines whether or not the use condition flag indicates the information to inquire with the user before transmitting the mobile video. When the use condition flag indicates "existence of the desire of non-provisional usage of the mobile video which is not a provisional usage of the mobile video", the mobile processor 23 outputs the inquiry information which is the information to inquire with the user whether or not to transmit the mobile video, for example. Note that the inquiry information is, for example, the screen information (e.g., panel) for inquiring whether or not to transmit the mobile video or the sound information for inquiring whether or not to transmit the mobile video.

The image capturer 231 captures the video. For example, the image capturer 231 starts to capture the video after the start of the movement is detected. For example, the image capturer 231 preferably continues the capturing until the end of movement is detected.

The image capturer 231 preferably accumulates the captured video in the mobile storage 21. The image capturer 231 preferably overwrites the area storing old video with new video when the storage capacity of the mobile storage 21 for accumulating the video is limited. Namely, the mobile storage 21 preferably has a ring buffer structure.

The tag obtainer 232 obtains one or more tags corresponding to the video captured by the image capturer 231 and associates the one or more tags with the video.

For example, the tag obtainer 232 analyzes the video obtained by the image capturer 231 and obtains one or more tags associated with the video.

The tag obtainer 232 obtains, for example, one or more tags using one or a plurality of movable body attribute values obtained when the video is captured by the image capturer 231. The movable body attribute value is, for example, CAN data.

The tag obtainer 232, for example, determines one or more still images satisfying the video tag condition and obtains the tag paired with the video tag condition. The tag obtainer 232 may associate the tag with one or more still images. Note that the still images are frames included in the video.

For example, when the video tag conditions are "the number of automobiles at a front-rear interval within a threshold value is greater than or equal to a threshold value and the speed of the automobiles is lower than or equal to a threshold" and the tag paired with the video tag condition is "traffic jam," the tag obtainer 232 analyzes the frames included in the video, identifies a plurality of automobiles and obtains the interval between each pair of the plurality of automobiles. The tag obtainer 232 obtains the number of automobiles at the interval within the threshold value. The tag obtainer 232 obtains the movement distance of one automobile in a plurality of frames and the frame rate, and obtains the speed of the automobile. The tag obtainer 232 determines whether or not the video tag condition is satisfied using the number of automobiles at the interval within the threshold value and the speed of the automobile. When the video tag condition is satisfied, the tag obtainer 232 obtains the tag of "traffic jam" paired with the video tag condition. The tag obtainer 232 may associate the tag of "traffic jam" with the analyzed frame.

For example, the tag obtainer 232 determines one or more movable body attribute values satisfying the attribute value tag condition and obtains the tag paired with the attribute value tag condition. The tag obtainer 232 may associate the tag with the video paired with the one or more movable body attribute values.

For example, when the attribute value tag condition is "the travel at the speed lower than 30 km lasts for 10 minutes or longer and the rate of the travel duration at the speed lower than 30 km is 80% or higher" and the tag paired with the attribute value tag condition is "traffic jam," the tag obtainer 232 detects the CAN data satisfying the attribute value tag condition using the history of the speed included in the CAN data associated with each field included in the video, obtains the tag of "traffic jam" paired with the attribute value tag condition, and associates the tag with the field associated with the CAN data piece. The CAN data associated with each field included in the video is the CAN data obtained at the same time as when the field is captured.

The movement information obtainer 233 detects the movement of the mobile terminal 2 and obtains the movement information when the movement is started, for example. The movement information obtainer 233 obtains, for example, the movement information that is the right holder identifier of the mobile storage 21. The movement information obtainer 233 obtains, for example, the movement information of the mobile storage 21. The movement information is, for example, the right holder identifier or the information indicating "start of movement." The detection of the movement of the mobile terminal 2 is, for example, the turning on of the engine or the turning on of the mobile terminal 2.

The mobile transmitter 24 transmits various information to the information processing device 1. The various information is, for example, the movement information, the mobile video or the mobile attribute value set.

The movement information transmitter 241 normally transmits the movement information obtained by the movement information obtainer 233 to the information processing device 1 when the movement is started.

The mobile video transmitter 242 transmits the mobile video captured by the image capturer 231 to the information processing device 1. The timing of transmitting the video by the mobile video transmitter 242 is not limited. For example, the mobile video transmitter 242 transmits the video to the information processing device 1 after the mobile processor 23 obtains the video paired with the mobile attribute value set corresponding to the received inquiry. For example, when the end of the movement is detected, the mobile video transmitter 242 transmits the video accumulated after the detection of the start of the movement to the information processing device 1. For example, when the preservation condition is determined to be satisfied, the mobile video transmitter 242 transmits the video corresponding to the determination to the information processing device 1.

It is preferred that the mobile transmitter 24 does not transmit the sound information obtained by the mobile processor 23 even when the mobile video captured by the image capturer 231 is transmitted to the information processing device 1. This is because the sound information may be, for example, the sound information of the driver or the passenger of the movable body. If the above described sound information is transmitted to the information processing device 1 and provided to the user terminal 4 or the like, the privacy of the driver or the passenger may be violated. The above described situation is not appropriate.

When the mobile processor 23 inquires with the user of the mobile terminal 2 whether or not the mobile video is transmitted based on the use condition flag, the mobile video transmitter 242 transmits the mobile video only when the information of transmitting the mobile video is received to the inquiry. Note that the information of transmitting the mobile video or the information of not transmitting the mobile video is received by a not-illustrated mobile accepter provided with the mobile terminal 2.

The set transmitter 243 transmits the mobile attribute value set in the mobile storage 21 to the information processing device 1. The set transmitter 243 transmits the mobile attribute value set in the mobile storage 21 to the information processing device 1 when the movement of the mobile terminal 2 is finished, for example. Here, the mobile attribute value set of the mobile storage 21 is the mobile attribute value set stored in the mobile storage 21.

Note that the set transmitter 243 may transmit the mobile attribute value set to the information processing device 1 immediately after the set transmitter 243 obtains the mobile attribute value set. Namely, the timing of transmitting the mobile attribute value set by the set transmitter 243 is not limited.

### <Detail of components of fixed terminal 3>

The fixed storage 31 included in the fixed terminal 3 stores various information. The various information is, for example, the fixed video, the fixed attribute value set, the right holder identifier, the camera information, a pair of the attribute value tag condition and the tag, a pair of the video tag condition and the tag, one or a plurality of preservation conditions or one or a plurality of obtaining information. The fixed storage 31 normally stores one or a plurality of pairs of the video tag condition and the tag. Note that the fixed attribute value set preferably includes the positional information of the fixed terminal 3.

For example, one or more video attribute values included in the fixed attribute value set are associated with one or more still images (also referred to as fields or frames) included in the fixed video. The one or more video attribute values may be associated with all still images, associated with a part of the still images or associated with a plurality of still images.

The video tag condition is the condition for the video. The video tag condition is based on the analysis result of the video. The video tag condition is, for example, "there is a still image of a plurality of automobiles colliding with each other (accident)," "there is a frame of a plurality of automobiles with a distance of 0 (automobiles are contacted)," or "the cumulative value per unit time of a change in the distance between the center of gravity of the preceding car and the traffic lane is greater than or equal to a threshold value (erratic driving of the preceding car). The tag paired with the video tag condition is, for example, "accident" or "abnormal driving."

The fixed receiver 32 receives various information. The various information is, for example, the inquiry and various instructions.

The fixed processor 33 performs various processes. The various processes are, for example, the processes executed by the fixed camera 331. The fixed processor 33 generates the information to be transmitted in accordance with the inquiry received by the fixed receiver 32. The fixed processor 33 generates the information transmitted by the fixed transmitter 34. The information to be transmitted includes the fixed video. The information to be transmitted preferably includes the fixed attribute value set and the right holder identifier.

For example, the fixed processor 33 obtains the fixed attribute value set during video capturing. The fixed processor 33 accumulates the acquired fixed attribute value set in the fixed storage 31. For example, the fixed processor 33 associates the obtained fixed attribute value set with the video. The operation of associating the fixed attribute value set with the video is normally the operation of associating the fixed attribute value set with the frames in the video. The fixed attribute value set and the frames are preferably synchronized temporally.

The fixed attribute value set is, for example, one or more environment information. The environment information is, for example, the time information, the weather information, the temperature information or the season information.

The fixed processor 33 obtains, for example, the time information from a not-illustrated clock during video capturing. The fixed processor 33 obtains, for example, the time information continuously, at predetermined intervals, or when the obtaining condition is satisfied.

The fixed processor 33 obtains, for example, the time information from a not-illustrated clock during video capturing, and obtains the season information corresponding to the time information.

The fixed processor 33 obtains, for example, the weather information during video capturing. The fixed processor 33 obtains, for example, the weather information corresponding to the positional information from a not-illustrated server. The fixed processor 33 obtains, for example, the weather information continuously, at predetermined intervals, or when the obtaining condition is satisfied.

The fixed processor 33 obtains, for example, the temperature information during video capturing. The fixed processor 33 obtains, for example, the temperature information corresponding to the positional information of the fixed terminal 3 from a not-illustrated server. The fixed processor 33 obtains, for example, the temperature information from a temperature sensor installed in the movable body. The fixed processor 33 obtains, for example, the temperature information continuously, at predetermined intervals, or when the obtaining condition is satisfied.

The fixed processor 33 determines, for example, whether or not the obtained fixed attribute value set satisfies the preservation condition. The fixed processor 33 determines, for example, whether or not the obtained fixed attribute value set satisfies the preservation condition. For example, when the fixed attribute value set satisfies the preservation condition, the fixed processor 33 obtains the video corresponding to the fixed attribute value set. For example, when the fixed attribute value set satisfies the preservation condition, the fixed processor 33 obtains the video corresponding to the preservation condition. For example, when the fixed attribute value set satisfies the preservation condition, the fixed processor 33 obtains the obtaining information paired with the preservation condition and obtains the video based on the obtaining information.

The fixed processor 33 preferably includes, for example, a microphone to obtain sound information and accumulate the sound information while being associated with the fixed video obtained by the fixed camera 331.

For example, the fixed processor 33 analyzes the fixed video and obtains one or more tags associated with the fixed video. Note that the above described process of obtaining the tag is same as the process executed by the tag obtainer 232 described above.

The fixed camera 331 captures and obtains the video. The above described video is the fixed video. The fixed camera 331 is an unmovable camera. The fixed camera 331 is the camera installed at a fixed position. The fixed camera 331 is the camera fixed at a fixed capturing position (the capturing position of the camera is fixed). Even when the capturing position is fixed, the capturing direction is not necessarily fixed. The capturing direction may be changed.

The fixed transmitter 34 transmits various information to the information processing device 1. The various information is, for example, the fixed video, the fixed attribute value set and the sound information.

### <Detail of components of user terminal 4>

The user storage 41 included in the user terminal 4 stores various information. The various information is, for example, the user identifier and the video.

The user acceptor 42 accepts various instructions and information. The various instructions and information are, for example, inquiries and purchase instructions.

Note that the purchase instruction is the instruction for purchasing the video. The purchase instruction is associated with the user identifier. The purchase instruction normally includes the information identifying the video. The purchase instruction includes, for example, a video identifier. The purchase instruction includes, for example, an inquiry. The purchase instruction includes, for example, a purchase condition. The purchase condition is, for example, a purchase price. The purchase condition includes, for example, the information identifying a right period.

The various instructions and information may be input in any manner, such as with a touch panel, a keyboard, a mouse or a menu screen.

The user processor 43 performs various processes. The various processes are, for example, the processes related to the data structure for transmitting various instructions and information received by the user acceptor 42. The various processes are, for example, the processes for transforming the structure of the information received by the user receiver 45.

The user transmitter 44 transmits various instructions and information to the information processing device 1. The various instructions and information are, for example, the inquiry, the purchase instruction, the positional information received from the object terminal 5 and the route information received from the navigation terminal 6.

The user receiver 45 receives various information and instructions. The various information and instructions are, for example, the inquiry, the video and the state information.

The user output unit 46 outputs various information. The various information is, for example, the videos and the state information.

Here, the output is the concept including the operation of displaying on a display, the operation of projecting with a projector, the operation of printing with a printer, the operation of outputting sound, the operation of transmitting to an external device, the operation of accumulating in a recording medium, and the operation of delivering a processed result to another processor or another program.

The object terminal 5 obtains the positional information for identifying the position of the object terminal 5 and transmits the positional information. The object terminal 5 transmits, for example, the positional information to the information processing device 1 or the user terminal 4. The object terminal 5 preferably transmits the positional information paired with the object person identifier. The object person identifier is the information for identifying the object to be watched. The object person identifier is, for example, an identification (ID), a name, a telephone number, a mail address or a MAC address of the object terminal 5. The object terminal 5 obtains the positional information by a GPS receiver, for example. However, the method of obtaining the positional information is not limited.

The navigation terminal 6 includes the functions of a conventionally known navigation terminal. The navigation terminal 6 receives the input of the destination, obtains a current position, and obtains the route information from the current position to the destination. The navigation terminal 6 transmits, for example, the received destination. The navigation terminal 6 transmits, for example, the obtained route information. The destination or the route information is transmitted to the information processing device 1 or the user terminal 4, for example. The navigation terminal 6 may receive the destination from the user terminal 4 and obtain the route information from the current position to the destination.

The storage 11, the mobile terminal manager 111, the fixed terminal manager 112, the mobile storage 21, the fixed storage 31 and the user storage 41 are preferably a nonvolatile recording medium. However, these storages may be a volatile recording medium.

The process of storing the information in the storage 11 or the like is not limited. For example, the information may be stored in the storage 11 or the like via a recording medium, the information transmitted via a communication line or the like may be stored in the storage 11 or the like, or the information inputted by an input device may be stored in the storage 11 or the like.

The receiver 12, the movement information receiver 121, the inquiry receiver 122, the set receiver 123, the mobile receiver 22 and the user receiver 45 are normally implemented by a wireless or wired communication means. However, these receivers may be implemented by a means for receiving a broadcast.

The processor 13, the movement information accumulator 131, the set accumulator 132, the video obtainer 133, the video generator 134, the video processor 135, the right holder processor 136, the mobile video obtainer 1331, the fixed video obtainer 1332, the first preserver 1361, the second preserver 1362, the third preserver 1363, the fourth preserver 1364, the rewarding unit 1365, the mobile processor 23, the tag obtainer 232, the movement information obtainer 233, the fixed processor 33 and the user processor 43 may normally be implemented by a processor, a memory or the like. The processing procedure of the processor 13 or the like is normally implemented by a software and the software is stored in a recording medium such as a read-only memory (ROM). However, the processing procedure may be implemented by a hardware (dedicated circuit). Note that the processor is a central processing unit (CPU), a microprocessor unit (MPU), a graphical processing unit (GPU) or the like. The type of the processor is not limited.

The transmitter (transmission unit) 14 includes a video transmitter (video transmission unit) 141, a state transmitter (state transmission unit) 142 and a need transmitter (need transmission unit) 143.

The mobile terminal 2, the mobile transmitter 24, the movement information transmitter 241, the mobile video transmitter 242, the set transmitter 243, the fixed transmitter 34 and the user transmitter 44 are normally implemented by a wireless or wired communication means. However, these transmitters may be implemented by a broadcast means.

The image capturer 231 is implemented by a camera. The fixed camera 331 is the camera fixed at a fixed capturing position. Note that the camera is, for example, a charge-coupled device (CCD) camera, a complementary metal-oxide semiconductor (CMOS) camera, a three-dimensional (3D) camera, a laser imaging detection and ranging (LiDAR) camera or an omnidirectional camera. However, the type of the cameras is not limited.

The user acceptor 42 may be implemented by a device driver of an input device such as a touch panel and a keyboard or a control software of a menu screen, for example.

The user output unit 46 may or may not include an output device such as a display or a speaker. The user output unit 46 may be implemented by a driver software of an output device or implemented by a driver software of an output device and the output device.

### <Operation>

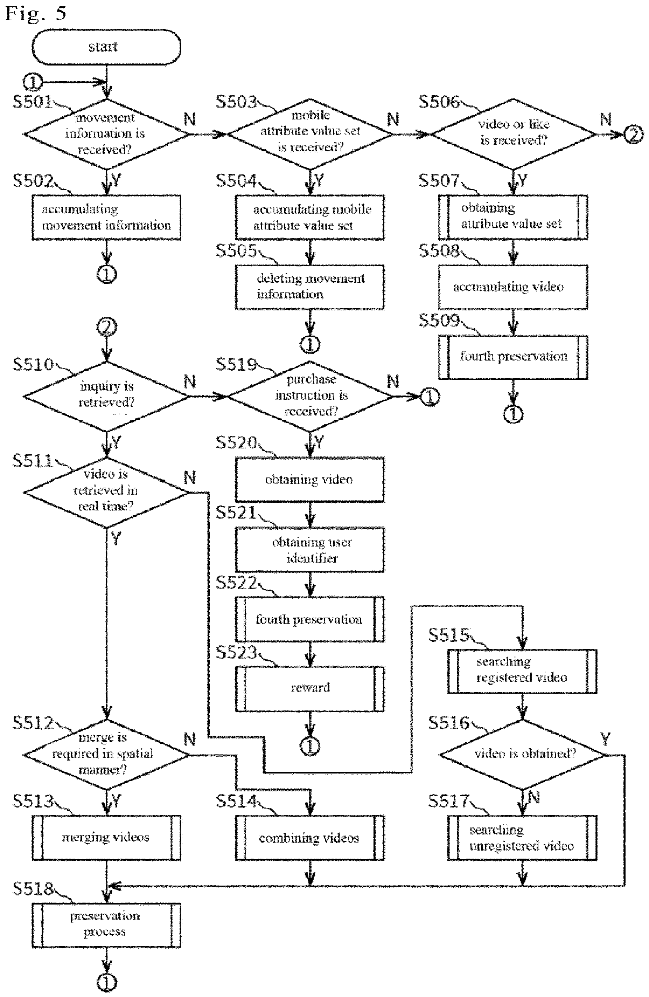

Then, the operation example of the information system A will be explained. First, the operation example of the information processing device 1 will be explained using the flowchart in Fig. 5. Note that "S" shown in each flowchart used in the following explanation means the step.

(S501) The movement information receiver 121 determines whether or not the movement information associated with the right holder identifier is received from the mobile terminal 2. When the movement information is received, the processing proceeds to S502. When the movement information is not received, the processing proceeds to S503.

(S502) The movement information receiver 121 accumulates the movement information received in S501 in the storage 11 while being associated with the right holder identifier. The processing returns to S501. When the movement information is the right holder identifier, the movement information receiver 121 accumulates the right holder identifier.

(S503) The set receiver 123 determines whether or not the mobile attribute value set associated with the right holder identifier is received from the mobile terminal 2. When the mobile attribute value set is received, the processing proceeds to S504. When the mobile attribute value set is not received, the processing proceeds to S506.

(S504) The set accumulator 132 accumulates the mobile attribute value set received in S503 in the set storage 111 while being associated with the right holder identifier.

(S505) The processor 13 deletes the movement information associated with the right holder identifier from the storage 11. The processing returns to S501. Note that the operation of deleting the movement information is equivalent to the operation of "rewriting the movement information with the information indicating that the video is not transmittable."

(S506) The receiver 12 determines whether or not the video or the like associated with the right holder identifier is received from the mobile terminal 2 or the fixed terminal 3. When the video or the like is received, the processing proceeds to S507. When the video or the like is not received, the processing proceeds to S510.

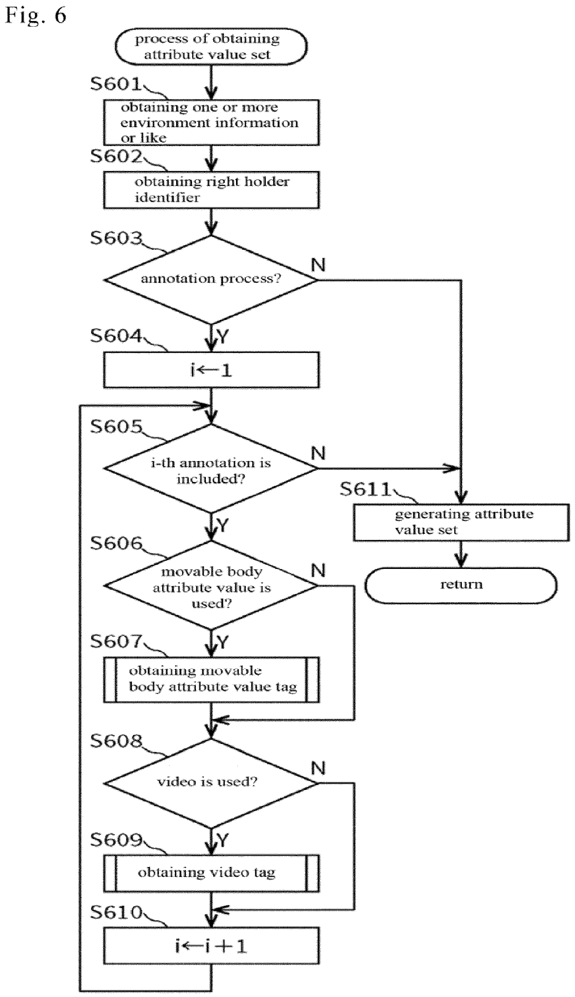

(S507) The processor 13 obtains the attribute value set corresponding to the video received in S506. The example of the process of obtaining the attribute value set will be explained using the flowchart in Fig. 6. Here, the process of obtaining the attribute value set may be the process of obtaining the attribute value set associated with the received video. Note that the video here is the mobile video or the fixed video. The attribute value set obtained here is the mobile attribute value set or the fixed attribute value set.

(S508) The first preserver 1361 accumulates the video received in S506 while being associated with the attribute value set obtained in S507. The first preserver 1361 accumulates the video in the storage 11, for example. However, the first preserver 1361 may accumulate the video in another device such as a device included in a blockchain. The process of accumulating the video by the first preserver 1361 is the first preservation process.

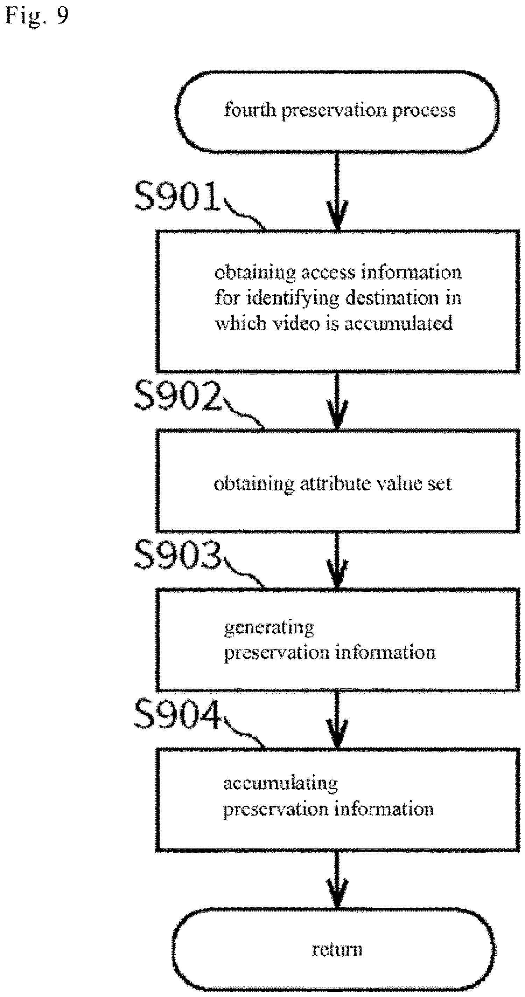

(S509) The fourth preserver 1364 performs the fourth preservation process. The processing returns to S501. The example of the fourth preservation process will be explained using the flowchart in Fig. 9.

(S510) The inquiry receiver 122 determines whether or not the inquiry is received. When the inquiry is received, the processing proceeds to S511. When the inquiry is not received, the processing proceeds to S519. Note that the inquiry receiver 122 receives the inquiry from the user terminal 4 or the navigation terminal 6, for example. Note that the navigation terminal 6 transmitting the inquiry may be the user terminal 4.

(S511) The video obtainer 133 determines whether or not the received inquiry is the video retrieval in real time. When the inquiry is the video retrieval in real time, the processing proceeds to S512. When the inquiry is not the video retrieval in real time, the processing proceeds to S515. Note that the above described determination can be performed by examining the received inquiry. The video retrieval in real time is the process of retrieving the currently held video and the currently capturing video in the mobile terminal 2 or the fixed terminal 3.

(S512) The video obtainer 133 determines whether or not the received inquiry requires to merge a plurality of videos in a spatial manner. When the received inquiry requires to merge a plurality of videos in a spatial manner, the processing proceeds to S513. When the received inquiry does not require to merge a plurality of videos in a spatial manner, the processing proceeds to S514. Note that the above described determination can be performed by examining the received inquiry.

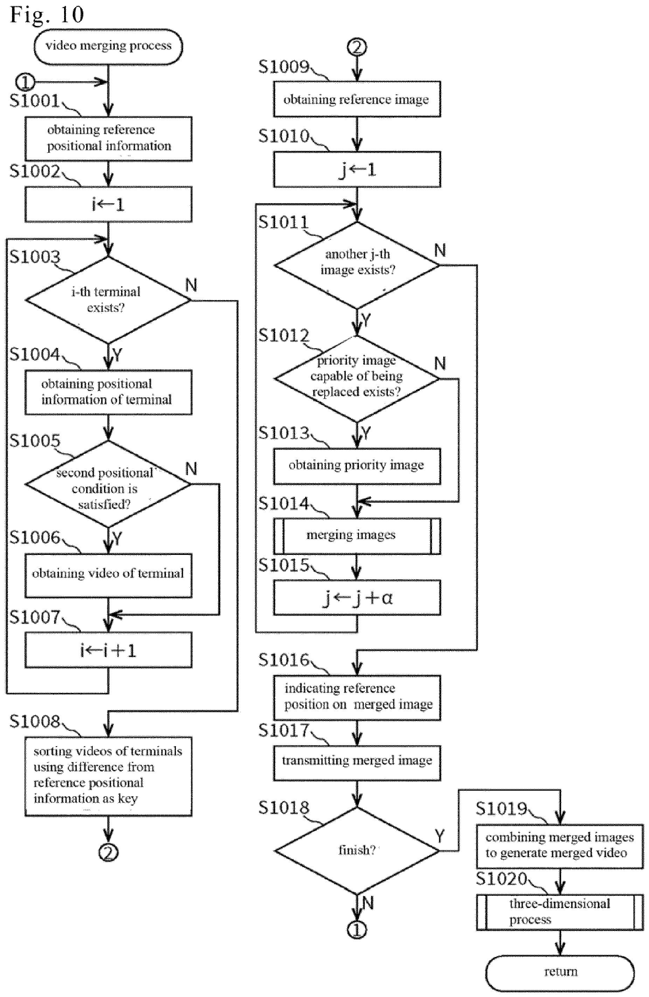

(S513) The video obtainer 133, the video generator 134, the video processor 135 or the like performs the video merging process. The processing proceeds to S518. The video merging process is the process of merging (combining) a plurality of videos in a spatial manner, obtains the merged (combined) video having one or more frames, and transmitting the merged (combined) video. The example of the video merging process will be explained using the flowchart in Fig. 10. The video to be transmitted may be the stereoscopic three-dimensional video.

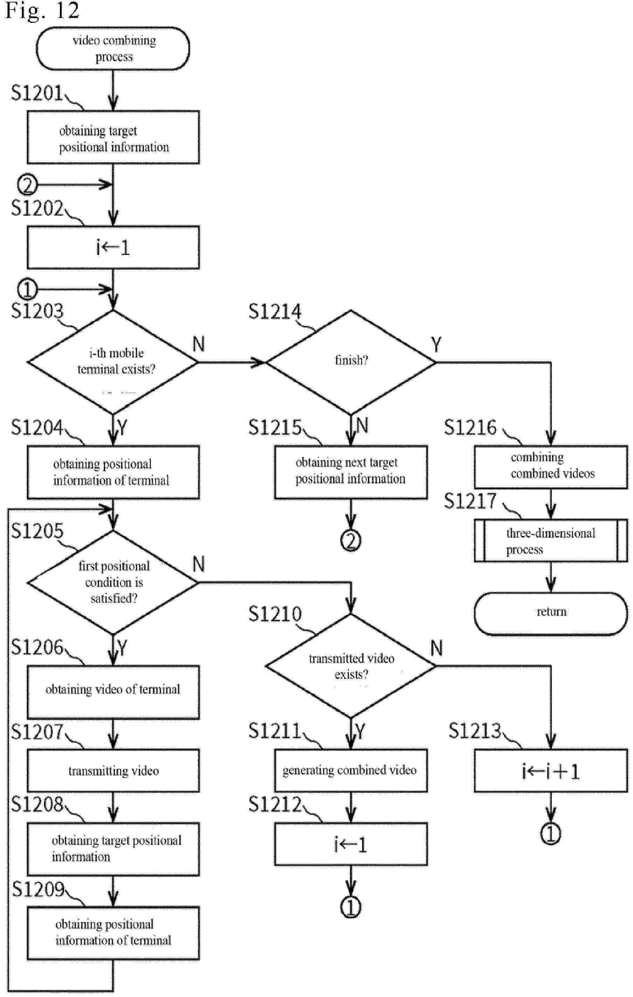

(S514) The video obtainer 133, the video generator 134, the video processor 135 or the like performs the video combining process. The processing proceeds to S518. The video combining process is the process of transmitting the combined video (one video) generated by combining a plurality of videos in a time series manner. The example of the video combining process will be explained using the flowchart in Fig. 12.

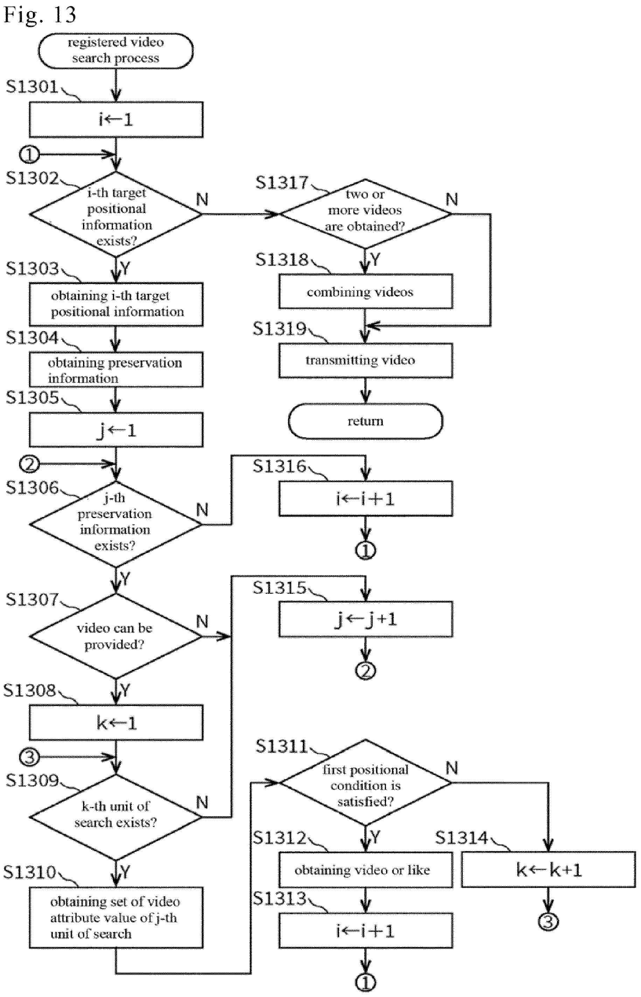

(S515) The video obtainer 133 or the like performs the registered video search process. The example of the registered video search process will be explained using the flowchart in Fig. 13. Note that the video obtainer 133 here may not obtain the video in some cases.

(S516) The video obtainer 133 determines whether or not the video can be obtained in S515. When the video can be obtained, the processing proceeds to S517. When the video cannot be obtained, the processing proceeds to S518.

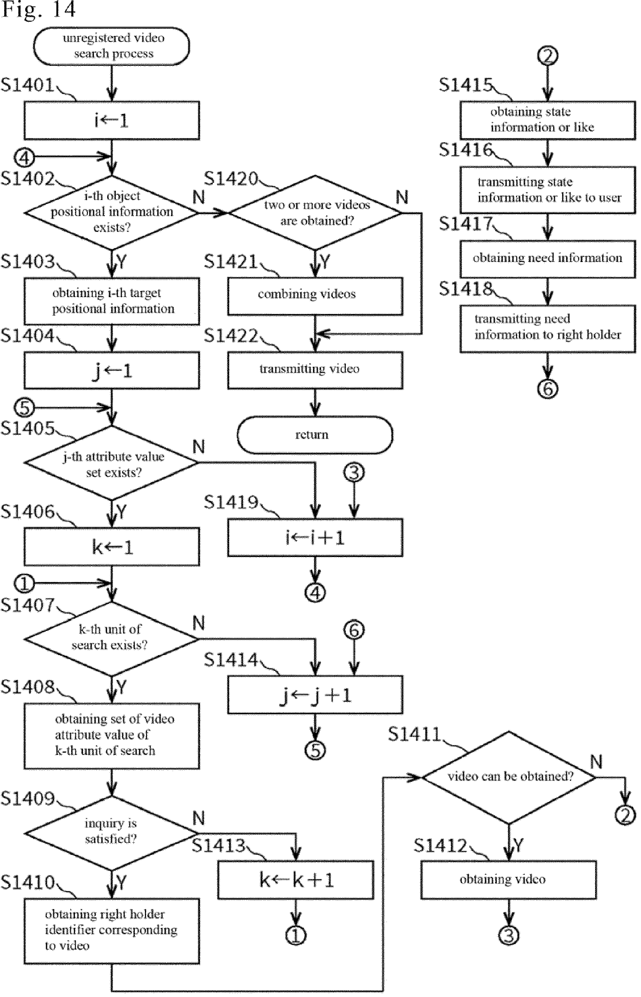

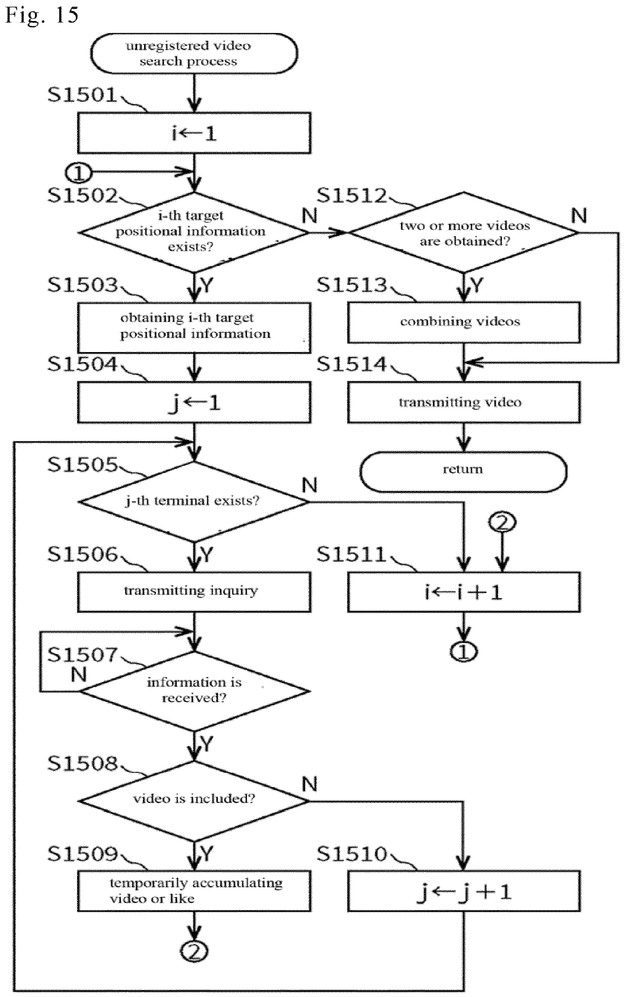

(S517) The video obtainer 133 performs the unregistered video search process. The example of the unregistered video search process will be explained using the flowcharts in Fig. 14 and Fig. 15. Note that the video obtainer 133 here may not obtain the video in some cases.

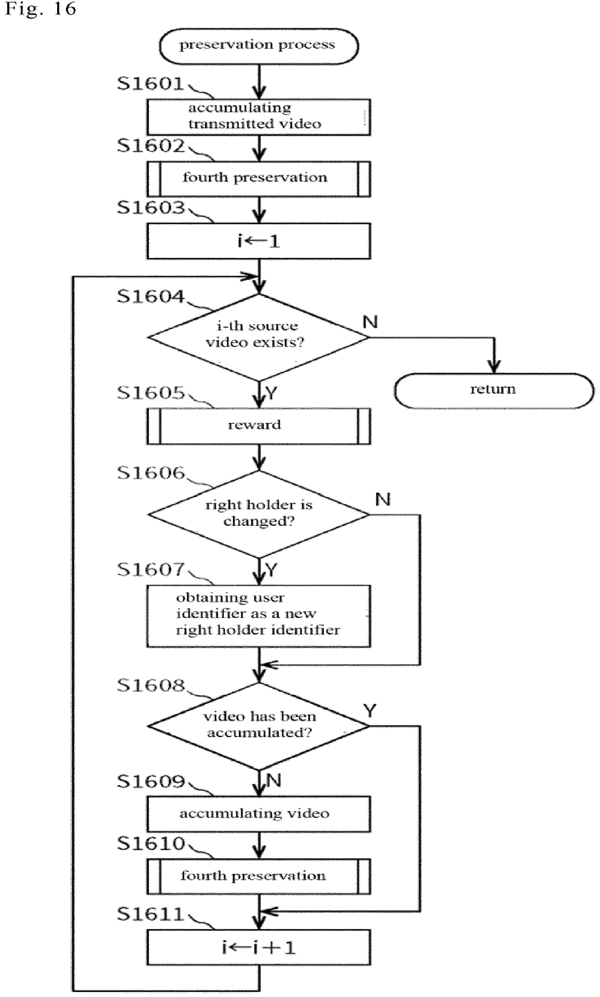

(S518) The right holder processor 136 performs a preservation process. The processing returns to S501. The example of the preservation process will be explained using the flowchart in Fig. 16.

(S519) The receiver 12 determines whether or not the purchase instruction is received from the user terminal 4. When the purchase instruction is received, the processing proceeds to S520. When the purchase instruction is not received, the processing returns to S501.

(S520) The video obtainer 133 obtains the video corresponding to the purchase instruction. Note that the video obtainer 133 obtains, for example, the video corresponding to the purchase instruction from the mobile terminal 2 or the fixed terminal 3. The video obtainer 133 obtains, for example, the video corresponding to the purchase instruction from the registered videos. The video obtainer 133 may obtain, for example, the video corresponding to the purchase instruction from the unregistered videos.

(S521) The fourth preserver 1364 obtains the user identifier corresponding to the user terminal 4 transmitting the purchase instruction. Note that the user identifier functions as the right holder identifier corresponding to the purchased video.

(S522) The fourth preserver 1364 performs the fourth preservation process using the user identifier obtained in S516. The example of the fourth preservation process will be explained using the flowchart in Fig. 9.

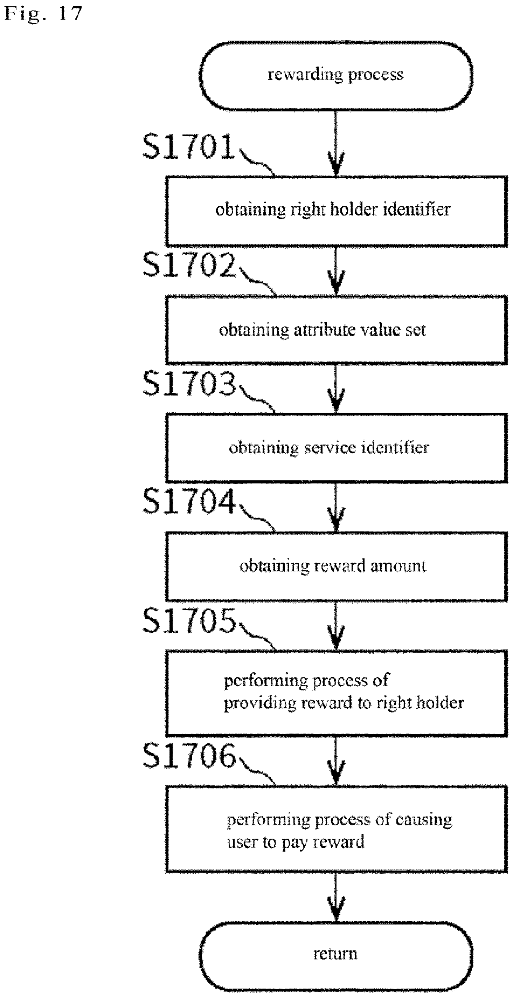

(S523) The rewarding unit 1365 performs the rewarding process to the original right holder of the video to be purchased. The processing returns to S501. The example of the rewarding process will be explained using the flowchart in Fig. 17.

In the flowchart in Fig. 5, the process ends when the power is turned off or the instruction of ending process is interrupted.

In the flowchart in Fig. 5, the receiver 12 preferably receives the positional information for identifying the current position of the mobile terminal 2 from one or a plurality of mobile terminals 2 while being paired with the identifier (e.g., the right holder identifier) of each of one or a plurality of mobile terminals 2 and temporarily accumulates the positional information. The frequency and the time interval for receiving the positional information and temporarily accumulating the positional information by the receiver 12 from the mobile terminal 2 are not limited. For example, the receiver 12 continuously receives the positional information and temporarily accumulates the positional information. For example, the receiver 12 periodically receives the positional information and temporarily accumulates the positional information.

In the flowchart in Fig. 5, the receiver 12 may, for example, continuously receive the positional information from the user terminal 4, the object terminal 5 or the navigation terminal 6. In the above described case, the information processing device 1 may receive the video obtained by the mobile terminal 2 or the video obtained by the fixed terminal 3 using the received positional information and transmit the video to the user terminal 4 or the navigation terminal 6, for example. Note that the frequency and the time interval for continuously receiving the positional information are not limited.

In the flowchart in Fig. 5, the receiver 12 may receive the fixed attribute value set and the fixed video from the fixed terminal 3 while being paired with the identifier (e.g., the right holder identifier) of the fixed terminal 3. In the above described case, the processor 13 accumulates the fixed attribute value set and the fixed video in the fixed terminal manager 112 while being paired with the identifier of the fixed terminal 3.

Then, the example of the process of obtaining the attribute value set in S507 will be explained using the flowchart in Fig. 6.

(S601) The mobile processor 23, the set accumulator 132 or the fixed processor 33 (hereafter, referred to as the mobile processor 23 or the like) obtains one or more environment information or the like associated with the target video. Note that the target video is the video for which the video attribute value is to be obtained. The target video is, for example, the received video, the captured video or the currently capturing video. The target video is the mobile video or the fixed video. The environment information or the like may be only the environment information or the combination of the environment information and one or more movable body attribute values.

(S602) The mobile processor 23 or the like obtains the right holder identifier associated with the received video.

(S603) The mobile processor 23 or the like determines whether or not an annotation process to the video is performed. When the annotation process is performed, the processing proceeds to S604. When the annotation process is not performed, the processing proceeds to S611. It is assumed that whether or not the annotation process is performed is preliminarily determined. It is preferable that the annotation process is performed to the video by one of the information processing device 1 and the terminal. Note that the terminal here is the mobile terminal 2 or the fixed terminal 3.

(S604) The mobile processor 23 or the like substitutes 1 for a counter i.

(S605) The mobile processor 23 or the like determines whether or not the i-th annotation is included in the video. When the i-th annotation is included, the processing proceeds to S606. When the i-th annotation is not included, the processing proceeds to S611. Note that the unit of the annotation is the object for obtaining the annotation. The unit of the annotation is, for example, one frame, a group of frames including a predetermined number of frames, or the video of a predetermined time (e.g., 5 seconds, 10 seconds).

(S606) The mobile processor 23 or the like determines whether or not to use the movable body attribute value for the annotation. When the movable body attribute value is used, the processing proceeds to S607. When the movable body attribute value is not used, the processing proceeds to S608. It is assumed that whether or not the movable body attribute value is used for the annotation is preliminarily determined. The mobile processor 23 or the like can use the movable body attribute value only when the target video is the mobile video.

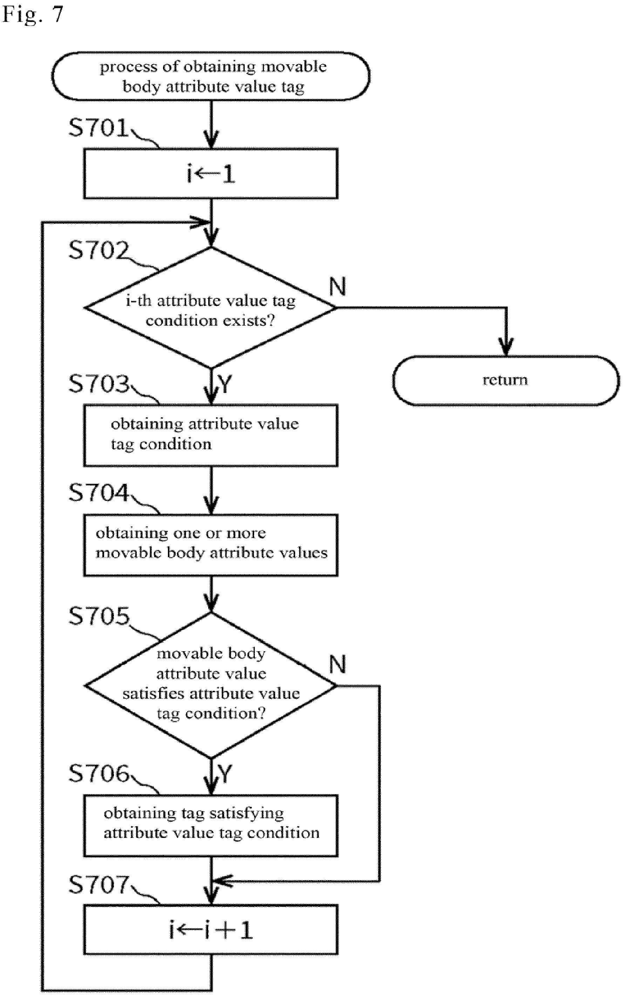

(S607) The mobile processor 23 or the like performs the process of obtaining the movable body attribute value tag. The example of the process of obtaining the movable body attribute value tag will be explained using the flowchart in Fig. 7.

(S608) The mobile processor 23 or the like determines whether or not to use the video for the annotation. When the video is used, the processing proceeds to S609. When the video is not used, the processing proceeds to S610. It is assumed that whether or not the video is used for the annotation is preliminarily determined.

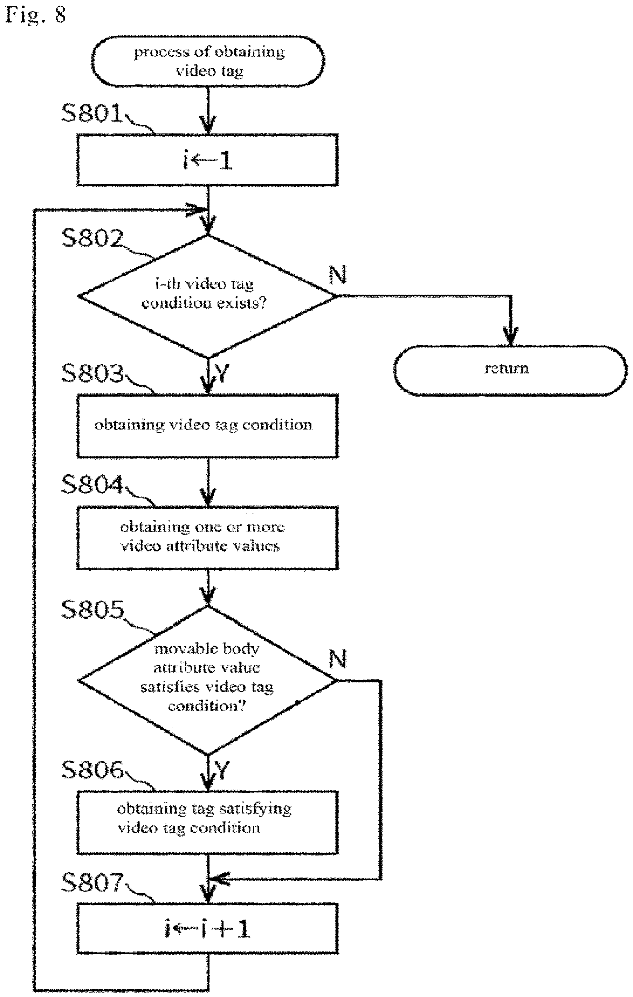

(S609) The mobile processor 23 or the like performs the process of obtaining a video tag. The example of the process of obtaining the video tag will be explained using the flowchart in Fig. 8.

(S610) The mobile processor 23 or the like increments the counter i by 1. The processing returns to S605.

(S611) The mobile processor 23 or the like generates the attribute value set including one or more environment information, one or more tags and the right holder identifier. The processing returns to the upstream process.

In the flowchart in Fig. 5, the video may be divided into a plurality of units for examination, and the processes in S601 to S611 may be performed on each unit for examination.

Then, the process of obtaining the movable body attribute value tag in S607 will be explained using the flowchart in Fig. 7.

(S701) The mobile processor 23 or the set accumulator 132 substitutes 1 for the counter i.

(S702) The mobile processor 23 or the like determines whether or not the i-th attribute value tag condition exists. When the i-th attribute value tag condition exists, the processing proceeds to S703. When the i-th attribute value tag condition does not exist, the processing returns to the upstream process.

(S703) The mobile processor 23 or the like obtains the i-th attribute value tag condition.

(S704) The mobile processor 23 or the like obtains one or a plurality of movable body attribute values used for the determination of the i-th attribute value tag condition.

(S705) The mobile processor 23 or the like determines whether or not the one or more movable body attribute value obtained in S704 satisfies the i-th attribute value tag condition. When the attribute value tag condition is satisfied, the processing proceeds to S706. When the attribute value tag condition is not satisfied, the processing proceeds to S707.

(S706) The mobile processor 23 or the like obtains the tag paired with the i-th attribute value tag condition and associates the tag with the corresponding video. The operation of associating the tag with the video is normally the operation of associating the tag with the field included in the video.

(S707) The mobile processor 23 or the like increments the counter i by 1. The processing returns to S702.

Then, the example of the process of obtaining the video tag in S609 will be explained using the flowchart in Fig. 8.

(S801) The mobile processor 23, the set accumulator 132 or the fixed processor 33 substitutes 1 for the counter i.

(S802) The mobile processor 23 or the like determines whether or not the i-th video tag condition exists. When the i-th video tag condition exists, the processing proceeds to S803. When the i-th video tag condition does not exist, the processing returns to the upstream process.

(S803) The mobile processor 23 or the like obtains the i-th video tag condition.

(S804) The mobile processor 23 or the like obtains one or more video attribute values used for determining the i-th video tag condition.

(S805) The mobile processor 23 or the like determines whether or not one or more video attribute values obtained in S804 satisfy the i-th attribute value tag condition. When the attribute value tag condition is satisfied, the processing proceeds to S806. When the attribute value tag condition is not satisfied, the processing proceeds to S807.

(S806) The mobile processor 23 or the like obtains the tag paired with the i-th attribute value tag condition and associates the tag with the corresponding video. The operation of associating the tag with the video is normally equivalent to the operation of associating the tag with one or a plurality of frames paired with one or more video attribute values used in the judgement of the attribute value tag condition.

(S807) The mobile processor 23 or the like increments the counter i by 1. The processing returns to S802.

Then, the example of the fourth preservation process in S509 will be explained using the flowchart in Fig. 9.

(S901) The fourth preserver 1364 obtains the access information for identifying the destination in which the video is accumulated. Note that the above described video is, for example, the merged video, the combined video and the stereoscopic three-dimensional video.

(S902) The fourth preserver 1364 obtains the attribute value set corresponding to the accumulated video. When the accumulated video is generated by a plurality of original videos, the attribute value set corresponding to the video is the attribute value set of each of the plurality of original videos.

(S903) The fourth preserver 1364 generates the preservation information including the access information obtained in S901, the attribute value set obtained in S902 and the right holder identifier of the video. When new right holder identifier is obtained, the fourth preserver 1364 generates, for example, the preservation information including the new right holder identifier and the original right holder identifier. (S904) The fourth preserver 1364 accumulates the preservation information generated in S903. The processing returns to the upstream process.

In S904, when the preservation information of the video corresponding to the preservation information to be accumulated is accumulated, the preservation information is overwritten on the preservation information generated in S903. Consequently, the change history of the right holder of the video can be managed, for example. The fourth preserver 1364 accumulates the preservation information in a blockchain, for example.

Then, the example of the video merging process in S513 will be explained using the flowchart in Fig. 10.

(S1001) The video obtainer 133 obtains a reference positional information. The reference positional information is, for example, the positional information included in the received inquiry. The reference positional information is, for example, the positional information of the user terminal 4 or the object terminal 5. The reference positional information is, for example, one of the positional information in the route information included in the inquiry. The one of the positional information is the first (initial) positional information in the route information. The positional information is, for example, a latitude and a longitude. However, the positional information may be a location name (e.g., name of the parking lot) or a place name.

(S1002) The video obtainer 133 substitutes 1 for the counter i.

(S1003) The video obtainer 133 determines whether or not the i-th terminal capable of transmitting the video exists. When the i-th terminal exists, the processing proceeds to S1004. When the i-th terminal does not exist, the processing proceeds to S1008. Note that the terminal capable of transmitting the video is normally the fixed terminal 3 or the mobile terminal 2 during the movement.

The mobile terminal 2 during the movement is the mobile terminal 2 corresponding to the movement information stored in the storage 11. The fixed terminal 3 is the fixed terminal 3 corresponding to the fixed terminal information managed in the fixed terminal manager 112. Namely, the video obtainer 133 determines whether or not the i-th movement information exists in the movement information of the storage 11 or the fixed terminal information of the fixed terminal manager 112.

(S1004) The video obtainer 133 obtains the latest positional information transmitted from the mobile terminal 2 which is the i-th terminal or obtains the positional information included in the fixed terminal information of the i-th terminal.

(S1005) The video obtainer 133 determines whether or not the positional information obtained in S1004 satisfies the second positional condition. When the second positional condition is satisfied, the processing proceeds to S1006. When the second positional condition is not satisfied, the processing proceeds to S1007.

(S1006) The video obtainer 133 obtains the video from the i-th terminal and temporarily stores the video in a not-illustrated buffer while being paired with the right holder identifier of the i-th terminal and the positional information.

Note that the video obtainer 133 transmits the inquiry including a type identifier (e.g., "moving image," "still image" and "around view image") for identifying the type of the requesting image to the i-th terminal and receives the image corresponding to the inquiry from the i-th mobile terminal 2.

(S1007) The video obtainer 133 increments the counter i by 1. The processing returns to S1003.

(S1008) The video generator 134 calculates a difference (distance) between each of the images temporarily stored in a not-illustrated buffer and the reference positional information. The video generator 134 sorts the videos in ascending order using the above described difference as a key.

(S1009) The video generator 134 obtains the reference image. The reference image is the image corresponding to the reference positional information. The reference image is, for example, the image transmitted from the user terminal 4 existing at the position of the reference positional information. Note that the above described image is the image whose image type is identified by a type identifier for identifying the type of the image to be required.

(S1010) The video generator 134 substitutes 1 for the counter j.

(S1011) The video generator 134 determines whether or not another j-th image exists in the images sorted in S1008. When another j-th image exists, the processing proceeds to S1012. When another j-th image does not exist, the processing proceeds to S1014. Note that another image is the image sorted in S1008.

(S1012) When another j-th image is the video (e.g., mobile video) not corresponding to the priority type, the video generator 134 determines whether or not the priority image capable of being replaced with another j-th image exists. When the priority image capable of being replaced with another j-th image exists, the processing proceeds to S1013. When the priority image capable of being replaced with another j-th image does not exist, the processing proceeds to S1014.

The priority image capable of being replaced with another j-th image is the image capturing the equivalent area to the area of another j-th image and the image paired with the positional information within the range of a predetermined threshold value from the positional information of another j-th image. The priority image is the image of the video (e.g., the fixed video) corresponding to the priority type. Note that the equivalent area is, for example, the fact that the rate of the overwrapping area is larger than the threshold value or the fact that the area of the overlapping area is the threshold value or more or larger than the threshold value.

For example, the video generator 134 examines whether or not the images paired with the positional information within the range of the threshold value of the distance from the position indicated by the positional information of another j-th image is the priority image in the ascending order of the distance.

(S1013) The video generator 134 obtains the priority image capable of being replaced.

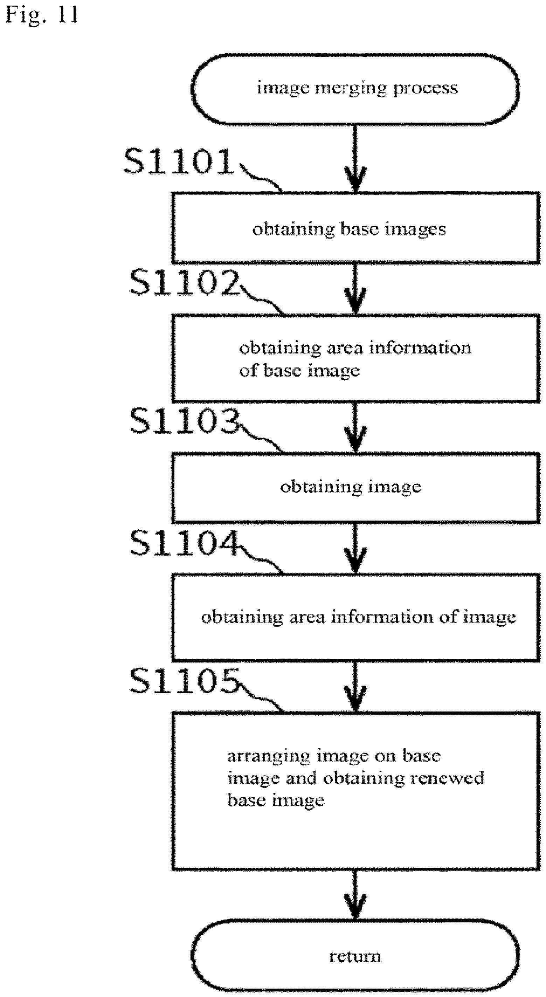

(S1014) The video generator 134 performs an image merging process for merging the reference image obtained in S1009 with another j-th image or the priority image obtained in S1013. The example of the image merging process will be explained using the flowchart in Fig. 11.

(S1015) The video generator 134 increments the counter j by α. The processing returns to S1011. When another j-th image is used for the image merging process, "α = 1". When the priority image is used for the image merging process, α is the number for advancing the counter j to the next image of the priority image.

(S1016) The video generator 134 generates the image for indicating the position indicated by the reference positional information on the merged image finally generated in S1014, and temporarily stores the image in a not-illustrated buffer. Note that the above described image is the merged image.

(S1017) The video transmitter 141 transmits the merged image generated in S1016. Note that the video transmitter 141 may transmit the merged image finally generated in S1014. The destination to transmit the merged image is normally the user terminal 4 transmitting the inquiry.

(S1018) The video transmitter 141 determines whether or not to finish the transmission of the merged image. When the transmission of the merged image is finished, the processing proceeds to S1019. When the transmission of the merged image is not finished, the processing returns to S1001.

When the instruction for finishing is received from the user terminal 4 transmitting the inquiry, the video transmitter 141 determines to finish the transmission of the merged.

(S1019) The video generator 134 combines the transmitted plurality of merged images in a time series manner to generate a merged video and temporarily stores the merged video in a not-illustrated buffer.

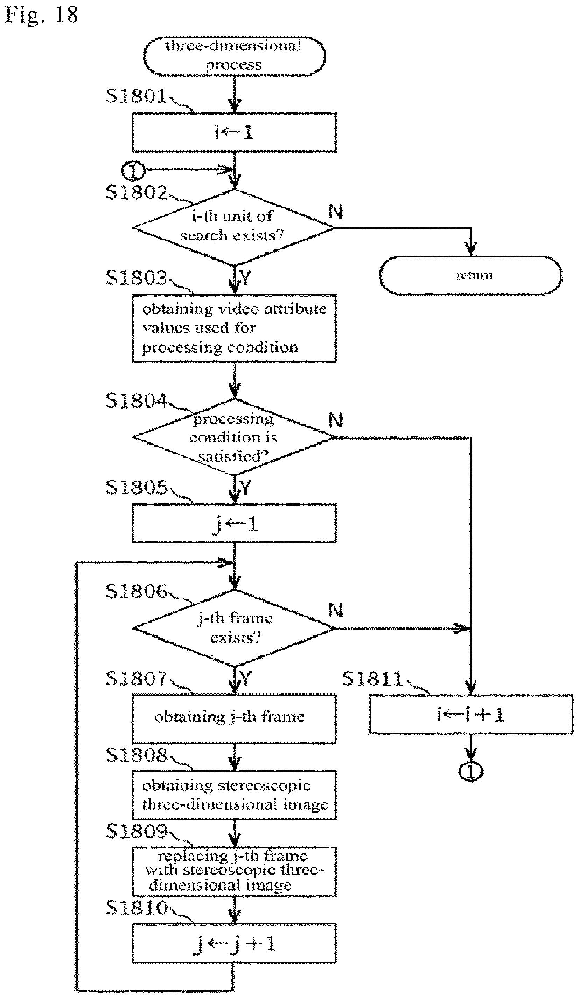

(S1020) The video processor 135 performs the three-dimensional process on the merged video generated in S1019. The processing returns to the upstream process. Note that the three-dimensional process is the process of performing the image processing on the videos satisfying a predetermined condition to generate the stereoscopic three-dimensional video. The example of the three-dimensional process will be explained using the flowchart in Fig. 18.

Note that the video transmitter 141 transmits the merged image in S1017 of the flowchart. However, the video transmitter 141 may transmit the video on which the three-dimensional process is performed in S1020 instead of the process of S1017.

Then, the example of the image merging process in S1014 will be examined using the flowchart in Fig. 11.

(S1101) The video generator 134 obtains base images. Note that the initial base image is the reference image obtained in S1009. The base image is the base image existed in the previous loop of S1101 to S1105 and renewed in S1105.

(S1102) The video generator 134 obtains area information for identifying the area covered by the base image obtained in S1101. Note that the area information is, for example, a set of the positional information of the vertexes forming a polygonal shape or a set of the positional information of two points on the diagonal of a rectangular shape.

(S1103) The video generator 134 obtains the images used for merging the images. Note that another image used for merging the images is another j-th image in S1011 or the priority image in S1013.

(S1104) The video generator 134 obtains the area information for identifying the area covered by the image obtained in S1103.

(S1105) The video generator 134 determines the area on which the image obtained in S1103 is arranged with respect to the base image using the area information of the base image and the area information of the image obtained in S1104, arranges another image on the area, and obtains the renewed base image. The processing returns to the upstream process.

Note that two images (the base image and the image obtained in S1103) as the object for performing the image merging process have the overlapped area with each other. The video generator 134 merges the two images based on the overlapped area to generate one image. The above described image is the renewed base image. The image merging process of the two images having the overlapping area can be performed by the conventionally known technology.

Then, the example of the video combining process in S514 will be explained using the flowchart in Fig. 12.

(S1201) The video obtainer 133 obtains the target positional information. Note that the target positional information is normally the positional information included in the inquiry. The target positional information is, for example, the information for identifying the position near the position indicated by the positional information corresponding to the video to be obtained.

(S1202) The video obtainer 133 substitutes 1 for the counter i.

(S1203) The video obtainer 133 determines whether or not the i-th terminal capable of transmitting the video exists from the terminal (e.g., the fixed terminal 3) corresponding to the priority type to the terminal (e.g., the mobile terminal 2) not corresponding to the priority type. When the i-th terminal exists, the processing proceeds to S1204. When the i-th terminal does not exist, the processing proceeds to S1214. Note that the terminal capable of transmitting the video is normally the fixed terminal 3 and the mobile terminal 2 during the movement.

(S1204) The video obtainer 133 obtains the positional information of the i-th terminal. When the i-th terminal is the fixed terminal 3, the video obtainer 133 normally obtains the positional information included in the i-th fixed terminal information of the fixed terminal manager 112. When the i-th terminal is the mobile terminal 2, the video obtainer 133 obtains the latest positional information transmitted from the i-th terminal.

(S1205) The video obtainer 133 determines whether or not the positional information of the i-th terminal satisfies the first positional condition with respect to the target positional information. When the first positional condition is satisfied, the processing proceeds to S1206. When the first positional condition is not satisfied, the processing proceeds to S1210.

(S1206) The video obtainer 133 obtains the video from the i-th terminal and temporarily stores the video in a not-illustrated buffer while being paired with the right holder identifier of the i-th terminal and the positional information.

Note that the video obtainer 133 may transmit the inquiry including a type identifier (e.g., "moving image" and "still image") for identifying the type of requesting image to the i-th terminal and receive the image corresponding to the inquiry.

(S1207) The video transmitter 141 transmits the video obtained in S1206. The video transmitter 141 normally transmits the video to the user terminal 4 transmitting the inquiry.

(S1208) The video obtainer 133 obtains the target positional information. When the object terminal 5 transmitting the positional information is during the movement, for example, the target positional information obtained here is different from the positional information obtained in S1201. However, when the object terminal 5 is not moved or when the inquiry including one fixed positional information is received, the target positional information obtained here is same as the positional information obtained in S1201.

(S1209) The video obtainer 133 obtains the positional information of the i-th terminal. The processing returns to S1205. When the i-th terminal is the mobile terminal 2, the positional information of the i-th terminal here is the renewed positional information. When the i-th terminal is the fixed terminal 3, the positional information of the i-th terminal here does not vary.

(S1210) The video generator 134 determines whether or not the video obtained and transmitted by the i-th terminal exists. When the transmitted video exists, the processing proceeds to S1211. When the transmitted video does not exist, the processing proceeds to S1213.

(S1211) The video generator 134 generates the combined video generated by combining the video obtained by the i-th terminal with the already transmitted combined video. The video generator 134 adds the right holder identifier of the i-th terminal to the combined video and temporarily accumulates the combined video in a not-illustrated buffer.

In the initial process in S1211, the combined video is the video obtained by the i-th terminal.

(S1212) The video obtainer 133 substitutes 1 for the counter i. The processing returns to S1203.

(S1213) The video obtainer 133 increments the counter i by 1. The processing returns to S1203.

(S1214) The video obtainer 133 determines whether or not to finish the video combining process. When the video combining process is finished, the processing proceeds to S1215. When the video combining process is not finished, the processing proceeds to S1216.

For example, when the next positional information included in the received inquiry does not exist or the instruction for finishing is received, the video obtainer 133 determines that the video combining process will be finished.

(S1215) The video obtainer 133 obtains the next target positional information. For example, the video obtainer 133 obtains the next positional information included in the route information included in the inquiry. The processing returns to S1203.

(S1216) The video generator 134 combines a plurality of combined videos generated in S1211 in the order when the videos are obtained, and generates the combined video to be accumulated. Then, the video generator 134 temporarily accumulates the combined video in a not-illustrated buffer while being paired with each of a plurality of right holder identifiers and the positional information of the original videos of the combined video.

When the combined video generated in S1211 is one, the video generator 134 does not perform the process of combining the combined video.

(S1217) The video processor 135 performs the three-dimensional process on the combined video generated in S1216. The processing returns to the upstream process. The example of the three-dimensional process will be explained using the flowchart in Fig. 18.

Then, the example of the registered video search process in S515 will be explained using the flowchart in Fig. 13.

(S1301) The video obtainer 133 substitutes 1 for the counter i.

(S1302) The video obtainer 133 determines whether or not the i-th target positional information exists in the received inquiry. When the i-th positional information exists, the processing proceeds to S1303. When the i-th positional information does not exist, the processing proceeds to S1317.

The target positional information is the positional information used for searching the video. The target positional information is, for example, one positional information included in the received inquiry or a plurality of positional information included in the route information included in the received inquiry.

(S1303) The video obtainer 133 obtains the i-th target positional information included in the received inquiry.

(S1304) The video obtainer 133 obtains all of the preservation information. The video obtainer 133 obtains, for example, the preservation information in the blockchain.

(S1305) The video obtainer 133 substitutes 1 for the counter j.

(S1306) The video obtainer 133 determines whether or not the j-th preservation information exists in the preservation information obtained in S1304. When the j-th preservation information exists, the processing proceeds to S1307. When the j-th preservation information does not exist, the processing proceeds to S1316.

(S1307) The video obtainer 133 examines the j-th preservation information and determines whether or not the video corresponding to the j-th preservation information can be provided to a third party. When the video can be provided, the processing proceeds to S1308. When the video cannot be provided, the processing proceeds to S1315. Note that the state that the video can be provided is, for example, the state that the video can be viewed, the state that the video can be sold, or the state that the video can be viewed and sold.

(S1308) The video obtainer 133 substitutes 1 for the counter k.

(S1309) The video obtainer 133 determines whether or not the k-th unit of search exists in the j-th preservation information or the video corresponding to the j-th preservation information. When the k-th unit of search exists, the processing proceeds to S1310. When the k-th unit of search does not exist, the processing proceeds to S1315.

Note that the unit of search is a volume of the video used for determining whether or not the inquiry is satisfied. The volume of the video corresponding to the unit of search is, for example, the video from the start to the end of the video capturing, the video having the duration of a predetermined period, the video until the occurrence of a predetermined event (e.g., the video recorded from when the speed as the movable body attribute value is 0 to when the speed is returned to 0 next time or the video recorded during the period from leaving a resident location such as a home parking lot to returning to the resident location) or the video recorded for a predetermined period before and after a predetermined tag (e.g., "accident" or "traffic jam") is applied. However, the unit of search is not limited.

(S1310) The video obtainer 133 obtains the set of the video attribute value of the k-th unit of search in the j-th preservation information.

(S1311) The video obtainer 133 determines whether or not the set of the video attribute value of the k-th unit of search satisfies the first positional condition with respect to the i-th target positional information. When the first positional condition is satisfied, the processing proceeds to S1312. When the first positional condition is not satisfied, the processing proceeds to S1314.

(S1312) The video obtainer 133 obtains the video or the like corresponding to the j-th preservation information and temporarily accumulates the video or the like in a not-illustrated buffer. The video or the like is, for example, the set of the video and the video attribute value or only the video.

(S1313) The video obtainer 133 increments the counter i by 1. The processing returns to S1302.

(S1314) The video obtainer 133 increments the counter k by 1. The processing returns to S1309.

(S1315) The video obtainer 133 increments the counter j by 1. The processing returns to S1306.

(S1316) The video obtainer 133 increments the counter i by 1. The processing returns to S1302.

(S1317) The video generator 134 determines whether or not a plurality of videos or the like are obtained in S1312. When a plurality of videos or the like are obtained, the processing proceeds to S1318. When only one video or the like is obtained, the processing proceeds to S1319.

(S1318) The video generator 134 combines a plurality of videos accumulated in a not-illustrated buffer in the order when the videos are accumulated, generates the combined video, and accumulates the combined video in a not-illustrated buffer. Note that the video generator 134 preferably accumulates the combined video in a not-illustrated buffer while being also associated with the right holder identifier and one or more video attribute values of the video which is the original video of the combined video.

(S1319) The video transmitter 141 transmits the combined video or the obtained video. The processing returns to the upstream process. Note that the above described video is preferably associated with the right holder identifier and one or more video attribute values.

In the flowchart in Fig. 13, the video transmitter 141 may transmit the video each time when the video is obtained in S1312. In the above described case, the process in S1319 is not required.

In the flowchart in Fig. 13, the video transmitter 141 normally transmits the combined video or the video to the user terminal 4 transmitting the inquiry.

Then, the example of the unregistered video search process in S517 will be explained using the flowchart in Fig. 14. The first example of the unregistered video search process is the case when the attribute value set of the mobile terminal manager 111 and the fixed terminal manager 112 is used.

(S1401) The video obtainer 133 substitutes 1 for the counter i.

(S1402) The video obtainer 133 determines whether or not the i-th target positional information exists in the received inquiry. When the i-th positional information exists, the processing proceeds to S1403. When the i-th positional information does not exist, the processing proceeds to S1420.

(S1403) The video obtainer 133 obtains the i-th target positional information in the received inquiry.

(S1404) The video obtainer 133 substitutes 1 for the counter i.

(S1405) The video obtainer 133 determines whether or not the j-th attribute value set exists in the fixed attribute value set of the fixed terminal manager 112 or the mobile attribute value set of the mobile terminal manager 111. When the j-th attribute value set exists, the processing proceeds to S1406. When the j-th attribute value set does not exist, the processing proceeds to S1419. Here, the video obtainer 133 is preferably examines whether or not the j-th attribute value set exists in the fixed attribute value set of the fixed terminal manager 112.

(S1406) The video obtainer 133 substitutes 1 for the counter k.

(S1407) The video obtainer 133 determines whether or not the k-th unit of search corresponding to the j-th attribute value set exists. When the k-th unit of search exists, the processing proceeds to S1408. When the k-th unit of search does not exist, the processing proceeds to S1414.

(S1408) The video obtainer 133 obtains the set of the video attribute value of the k-th unit of search in the j-th attribute value set from the set storage 111. Note that the unit of search in the attribute value set may be one.

(S1409) The video obtainer 133 determines whether or not the set of the video attribute value obtained in S1408 satisfies the inquiry. When the set of the video attribute value satisfies the inquiry, the processing proceeds to S1410. When the set of the video attribute value does not satisfy the inquiry, the processing proceeds to S1414.

(S1410) The video obtainer 133 obtains the right holder identifier corresponding to the video.

(S1411) The video obtainer 133 determines whether or not the video corresponding to the right holder identifier obtained in S1410 can be obtained. When the video can be obtained, the processing proceeds to S1412. When the video cannot be obtained, the processing proceeds to S1415.

The video can be obtained when the terminal corresponding to the j-th attribute value set is the fixed terminal 3 or the terminal corresponding to the j-th attribute value set is the mobile terminal 2. In addition, the movement information of the terminal should exist (e.g., the power of the mobile terminal 2 is turned on).

(S1412) The video obtainer 133 obtains the video corresponding to the k-th unit of search from the terminal corresponding to the right holder identifier obtained in S1410 and temporarily accumulates the video in a not-illustrated buffer. The processing proceeds to S1419.

Note that the video obtainer 133 transmits the request of the video corresponding to the k-th unit of search to the terminal and receives the video corresponding to the request from the terminal, for example. The range of the video corresponding to the k-th unit of search is not limited. The video corresponding to the k-th unit of search may be all videos stored in the terminal or a part of the videos.

(S1413) The video obtainer 133 increments the counter k by 1. The processing returns to S1407.

(S1414) The video obtainer 133 increments the counter j by 1. The processing returns to S1405.

(S1415) The video obtainer 133 obtains the state information or the like. Note that the state information or the like includes, for example, the state information indicating the fact that the terminal is the mobile terminal 2 and the power of the mobile terminal 2 is turned off.

(S1416) The state transmitter 142 transmits the state information or the like obtained in S1415 to the user transmitting the inquiry.

(S1417) The video obtainer 133 obtains the need information.

(S1418) The need transmitter 143 transmits the need information obtained in S1417 to the right holder of the video. The processing returns to S1414.

(S1419) The video obtainer 133 increments the counter i by 1. The processing returns to S1402.

(S1420) The video generator 134 determines whether or not a plurality of videos can be obtained in S1412. When a plurality of videos can be obtained, the processing proceeds to S1421. When only one video can be obtained, the processing proceeds to S1422.

(S1421) The video generator 134 combines a plurality of videos accumulated in a not-illustrated buffer in S1412 in the order when the videos are accumulated to generate one combined video and accumulate the one combined video in a not-illustrated buffer.

(S1422) The video transmitter 141 transmits the combined video or the video. The processing returns to the upstream process. Note that the video transmitter 141 normally transmits the combined video or the video to the user terminal 4 transmitting the inquiry.

Then, the second example of the unregistered video search process in S517 will be explained using the flowchart in Fig. 15. The second example of the unregistered video search process is the case when the inquiry is transmitted to the fixed terminal 3 or the mobile terminal 2.

(S1501) The video obtainer 133 substitutes 1 for the counter i.

(S1502) The video obtainer 133 determines whether or not the i-th target positional information exists in the received inquiry. When the i-th positional information exists, the processing proceeds to S1503. When the i-th positional information does not exist, the processing proceeds to S1512.

(S1503) The video obtainer 133 obtains the i-th target positional information in the received inquiry.

(S1504) The video obtainer 133 substitutes 1 for the counter j.

(S1505) The video obtainer 133 determines whether or not the j-th terminal capable of transmitting the inquiry exists. When the j-th terminal exists, the processing proceeds to S1503. When the j-th terminal does not exist, the processing proceeds to S1511.

Note that the terminal capable of transmitting the inquiry is the terminal in the state of capable of transmitting the video. The terminal capable of transmitting the inquiry is the fixed terminal 3 or the mobile terminal 2 having the movement information in the storage 11.

The video obtainer 133 preferably selects only the fixed terminal 3 installed at the position corresponding to the first positional condition with respect to the i-th target positional information as the j-th terminal. The video obtainer 133 preferably searches the terminal transmitting the inquiry from the terminals (normally, the fixed terminal 3) corresponding to the priority type, and searches the terminal transmitting the inquiry from the terminals (normally, the mobile terminal 2) not corresponding to the priority type when the terminal corresponding to the priority type and capable of transmitting the inquiry does not exist.

(S1506) The video obtainer 133 transmits the inquiry corresponding to the j-th terminal. Note that the video obtainer 133 preferably transmits the inquiry from the terminal (normally, the fixed terminal 3) corresponding to the priority type, and transmits the inquiry to the terminal (normally, the mobile terminal 2) not corresponding to the priority type when the terminal capable of coping with the inquiry does not exist.

(S 1507) The video obtainer 133 determines whether or not the information is received from the j-th terminal. When the information is received, the processing proceeds to S1508. When the information is not received, the processing returns to S1507.

(S1508) The video obtainer 133 determines whether or not the video is included in the information received in S1507. When the video is included, the processing proceeds to S1509. When the video is not included, the processing proceeds to S1510.

(S1509) The video obtainer 133 temporarily accumulates the video or the like received in S1507 in a not-illustrated buffer. The processing proceeds to S1511. Note that the video or the like is, for example, the video, the attribute value set and the right holder identifier.

(S1510) The video obtainer 133 increments the counter j by 1. The processing returns to S1505.

(S1511) The video obtainer 133 increments the counter i by 1. The processing returns to S1502.

(S1512) The video generator 134 determines whether or not a plurality of videos can be accumulated in S1509. When a plurality of videos can be accumulated, the processing proceeds to S1513. When only one video can be accumulated, the processing proceeds to S1514.

(S1513) The video generator 134 combines a plurality of videos accumulated in a not-illustrated buffer in S1509 in the order when the videos are accumulated to generate one combined video and accumulate the one combined video in a not-illustrated buffer.

(S1514) The video transmitter 141 transmits the combined video or the video. The processing returns to the upstream process. Note that the video transmitter 141 normally transmits the combined video or the video to the user terminal 4 transmitting the inquiry.

Then, the example of the preservation process in S518 will be explained using the flowchart in Fig. 16.

(S1601) The right holder processor 136 accumulates the transmitted video while being associated with the attribute value set associated with each of one or a plurality of videos which are the original video of the transmitted video.

Note that the right holder processor 136 preferably accumulates the video while being paired with the right holder identifier for identifying each of one or a plurality of right holders of the video. The right holder identifier here is, for example, one or more right holder identifiers of the video which is the source of the accumulated video. The right holder identifier here is, for example, one right holder identifier for identifying the user transmitting the inquiry.

For example, the right holder processor 136 accumulates the video in the storage 11 or another devise than the information processing device 1. Another device than the information processing device 1 may be a device included in a blockchain.

(S1602) The fourth preserver 1354 performs the fourth preservation process. The example of the fourth preservation process is explained using the flowchart in Fig. 9.

(S1603) The right holder processor 136 substitutes 1 for the counter i.

(S1604) The right holder processor 136 determines whether or not the i-th video which is the source of the accumulated video exists. When the i-th video exists, the processing proceeds to S1605. When the i-th video does not exist, the processing returns to the upstream process.

(S1605) The rewarding unit 1365 performs the rewarding process. The example of the rewarding process will be explained using the flowchart in Fig. 17. The rewarding process here is the rewarding process to the right holder of the i-th video which is the source of the accumulated video exists.

(S1606) The right holder processor 136 determines whether or not to change the right holder of the i-th video which is the source of the accumulated video. When the right holder is changed, the processing proceeds to S1607. When the right holder is not changed, the processing proceeds to S1608.

Whether or not to change the right holder may be determined based on the flag associated with the i-th video, may be preliminarily determined, or may be changed when "the information indicating the change request of the right holder" is included in the inquiry.

(S1607) The right holder processor 136 obtains the user identifier of the user terminal 4. Note that the above described user identifier becomes a new right holder identifier.

(S1608) The right holder processor 136 determines whether or not the i-th video which is the source of the accumulated video has been registered. When the i-th video has been registered, the processing proceeds to S1611. When the i-th video has not been registered, the processing proceeds to S1609.

(S1609) The first preserver 1361 accumulates the i-th video which is the source of the accumulated video.

(S1610) The fourth preserver 1364 performs the fourth preservation process related to the i-th video which is the source of the accumulated video. The example of the fourth preservation process will be explained using the flowchart in Fig. 9.

(S1611) The right holder processor 136 increments the counter i by 1. The processing returns to S1604.

In the flowchart in Fig. 16, the process (S1609) of accumulating a plurality of videos which are the source of the combined video and the fourth preservation process (S1610) are performed when the combined video is generated. However, the above described processes can be omitted.

Then, the example of the rewarding process in S523 or the like will be explained using the flowchart in Fig. 17.

(S1701) The rewarding unit 1365 obtains one or a plurality of right holder identifiers of the target video. The rewarding unit 1365 may obtain the right holder identifier of the past right holder of the target video.

(S1702) The rewarding unit 1365 obtains the attribute value set of the target video.

(S1703) The rewarding unit 1365 obtains the service identifier for identifying the service performed on the target video. The service identifier is, for example, "viewing" and "purchasing."

(S1704) The rewarding unit 1365 obtains the reward amount using the attribute value set obtained in S1702 and one or a plurality of information of the service identifier obtained in S1703.

When a plurality of right holder identifiers are obtained, the rewarding unit 1365 obtains the reward amount to each of the right holder identifiers. When the history information of the right holder including a plurality of right holder identifiers is obtained, the rewarding unit 1365 may obtain the reward amount to each of the right holder identifiers.

For example, the rewarding unit 1365 preferably obtains the video attribute value corresponding to each of a plurality of videos which are the source of the video and transmitted by the video transmitter 141 and determines the reward amount of each of a plurality of right holders using the video attribute value. For example, the rewarding unit 1365 preferably determines the reward amount so that the reward amount increases as the data amount, the time of the video or the number of the frames of the original video adopted in the video transmitted by the video transmitter 141 increases. For example, the rewarding unit 1365 preferably determines the reward amount so that the reward amount increases as the resolution of the original video adopted in the video transmitted by the video transmitter 141 increases.

(S1705) The rewarding unit 1365 performs the process of providing the reward to the right holder identified by the right holder identifier obtained in S1701 by the reward amount obtained in S1704.

(S1706) The rewarding unit 1365 performs the process of causing the user that has enjoyed the service relevant to the target video to pay the reward. The processing returns to the upstream process. Note that the target video is normally the video transmitted to the user terminal 4.

In the flowchart in Fig. 17, it is possible to obtain the profit obtained by the management side of the information processing device 1 and accumulates the profit.

Then, the example of the three-dimensional process in S1019 and S1217 will be explained using the flowchart in Fig. 18.

(S1801) The video processor 135 substitutes 1 for the counter i.

(S1802) The video processor 135 determines whether or not the i-th unit of search exists in the target video. When the i-th unit of search exists, the processing proceeds to S1803. When the i-th unit of search does not exist, the processing returns to the upstream process.

Note that the unit of search here is the examining target of the video for determining at one time whether or not the captured video for processing is narrowed to the stereoscopic three-dimensional video. The unit of search is, for example, a preliminarily determined number of frames, a preliminarily determined time period, per original video which is the captured video for processing or all captured video for processing. Note that the captured video for processing is, for example, the merged video or the combined video.

(S1803) The video processor 135 obtains one or more video attribute values used for determining the processing condition where the one or more video attribute values is paired with the video of the i-th unit of search.

Note that the one or more video attribute values is, for example, the tag, the time information, the weather information, the temperature information or the season information.

(S1804) The video processor 135 determines whether or not the one or more video attribute values obtained in S1803 satisfies the processing condition. When the processing condition is satisfied, the processing proceeds to S1805. When the processing condition is not satisfied, the processing proceeds to S1811.

(S1805) The video processor 135 substitutes 1 for the counter j.

(S1806) The video processor 135 determines whether or not the j-th frame corresponding to the i-th unit of search exists. When the j-th frame exists, the processing proceeds to S1807. When the j-th frame does not exist, the processing proceeds to S1811.

Note that the frame corresponding to the i-th unit of search is normally the frame included in the i-th unit of search. However, the frame corresponding to the i-th unit of search may be the frames of the time before or after the i-th unit of search. For example, when the processing condition is "tag = accident," the frames for generating the stereoscopic three-dimensional video may include the frame before the accident occur and the frame after the accident occur.

(S1807) The video processor 135 obtains the j-th frame corresponding to the i-th unit of search.

(S1808) The video processor 135 obtains the stereoscopic three-dimensional image from the frame obtained in S1807.

(S1809) The video processor 135 replaces the j-th frame with the stereoscopic three-dimensional image obtained in S1808.

(S1810) The video processor 135 increments the counter j by 1. The processing returns to S1806.

(S1811) The video processor 135 increments the counter i by 1. The processing returns to S1802.

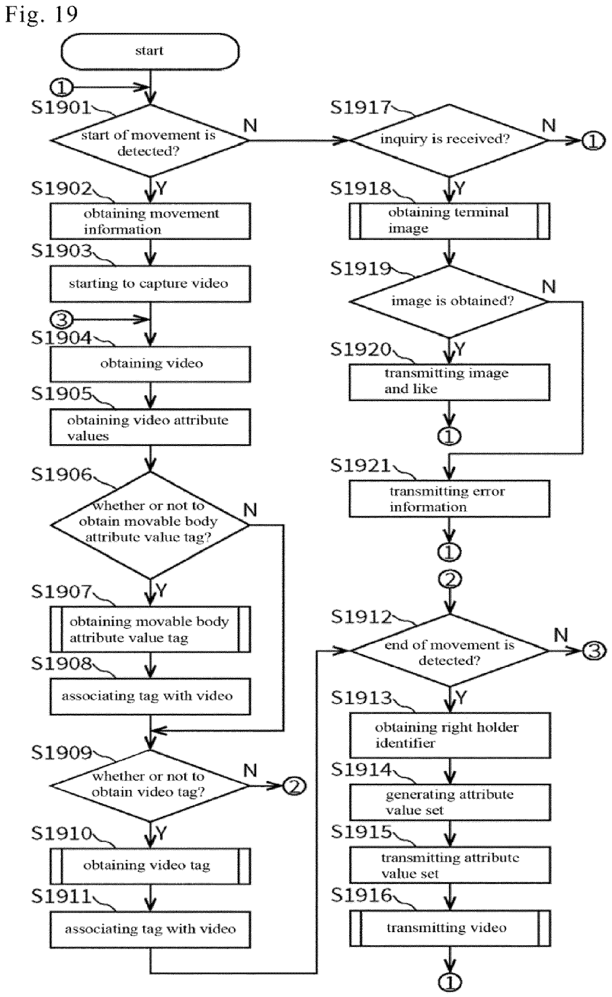

Then, the operation example of the mobile terminal 2 will be explained using the flowchart in Fig. 19.

(S1901) The mobile processor 23 determines whether or not the start of movement is detected. When the start of movement is detected, the processing proceeds to S1902. When the start of movement is not detected, the processing proceeds to S1917. Note that the start of movement is detected when the engine of the movable body provided with the mobile terminal 2 is turned on or when the mobile terminal 2 is turned on, for example.

(S1902) The movement information obtainer 233 obtains the movement information. The movement information transmitter 241 transmits the movement information to the information processing device 1. Note that the movement information is stored in the mobile storage 21, for example.

(S1903) The image capturer 231 starts to capture the video.

(S1904) The image capturer 231 obtains the video.

(S1905) The mobile processor 23 obtains one or a plurality of video attribute values and associates the one or more video attribute values with the video obtained in S1904.

The mobile processor 23 obtains, for example, the positional information, the time information, the weather information, the temperature information and the season information. The mobile processor 23 obtains, for example, one or a plurality of movable body attribute values (e.g., CAN data).

(S1906) The tag obtainer 232 determines whether or not to obtain the movable body attribute value tag. When the movable body attribute value tag is obtained, the processing proceeds to S1907. When the movable body attribute value tag is not obtained, the processing proceeds to S1909. Note that whether or not to obtain the movable body attribute value is preliminarily determined.

(S1907) The tag obtainer 232 performs the process of obtaining the movable body attribute value tag. The process of the movable body attribute value tag is explained using the flowchart in Fig. 7. Note that the tag here may or may not be obtained.

(S1908) The tag obtainer 232 associates one or more tags with the video obtained in S1904 when one or more tags are obtained in S1907.

Note that the tag obtainer 232 here preferably accumulates one or more tags in the mobile storage 21 while being associated with the video. Consequently, the user of the mobile terminal 2 can search the video using the tag as a key, for example.

(S1909) The tag obtainer 232 determines whether or not to obtain the video tag. When the video tag is obtained, the processing proceeds to S1910. When the video tag is not obtained, the processing proceeds to S1912. Note that whether or not to obtain the video tag is preliminarily determined.

(S1910) The tag obtainer 232 performs the process of obtaining the video tag. The process of obtaining the video tag is explained using the flowchart in Fig. 8. Note that the tag here may or may not be obtained.

(S1911) The tag obtainer 232 associates one or more tags with the video obtained in S1904 when one or more tags are obtained in S1910.

Note that the tag obtainer 232 here preferably accumulates one or more tags in the mobile storage 21 while being associated with the video. Consequently, the user of the mobile terminal 2 can search the video using the tag as a key, for example.

(S1912) The mobile processor 23 determines whether or not the end of movement is detected. When the end of movement is detected, the processing proceeds to S1913. When the end of movement is not detected, the processing returns to S1904.

Note that the mobile processor 23 detects the end of movement when the engine is turned off, when the power of the mobile terminal 2 is turned off or the arrival to the destination, for example.

(S1913) The mobile processor 23 obtains the right holder identifier from the mobile storage 21.

(S1914) The mobile processor 23 generates the attribute value set including one or more movable body attribute values obtained in S1905, one or more tags obtained in S1907 and one or more tags obtained in S1910. Note that the attribute value set does not include the information not obtained in the above described process.

(S1915) The set transmitter 243 transmits the attribute value set generated in S1914 to the information processing device 1 while being associated with the right holder identifier.

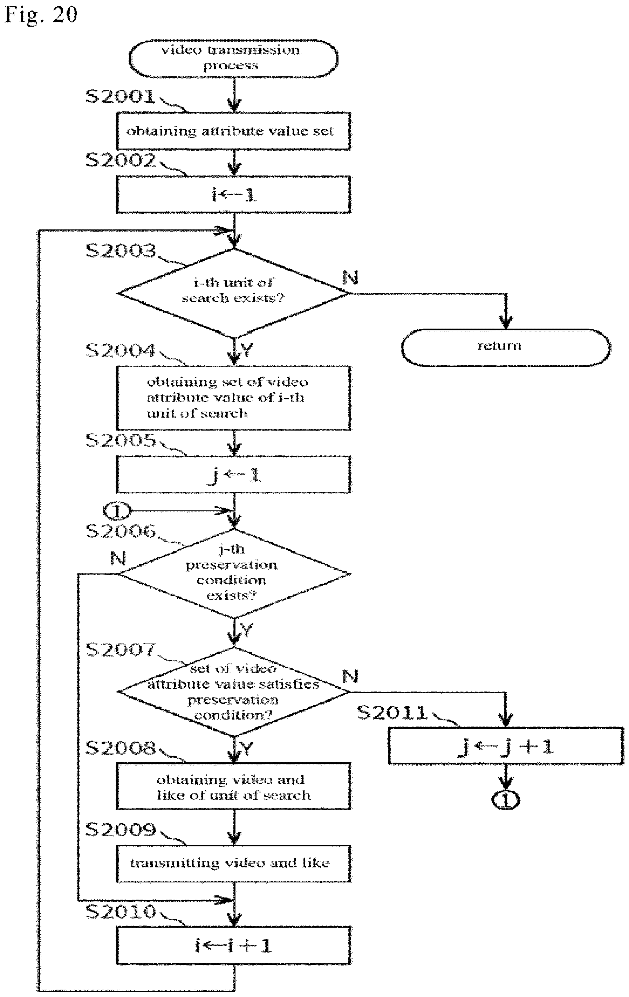

(S1916) The mobile video transmitter 242 or the like performs the video transmission process. The processing returns to S1901. Note that the example of the video transmission process will be explained using the flowchart in Fig. 20. The video transmission process is the process of automatically transmitting the video satisfying a preservation condition.

(S1917) The mobile receiver 22 determines whether or not the inquiry is received from the information processing device 1. When the inquiry is received, the processing proceeds to S1918. When the inquiry is not received, the processing returns to S1901.

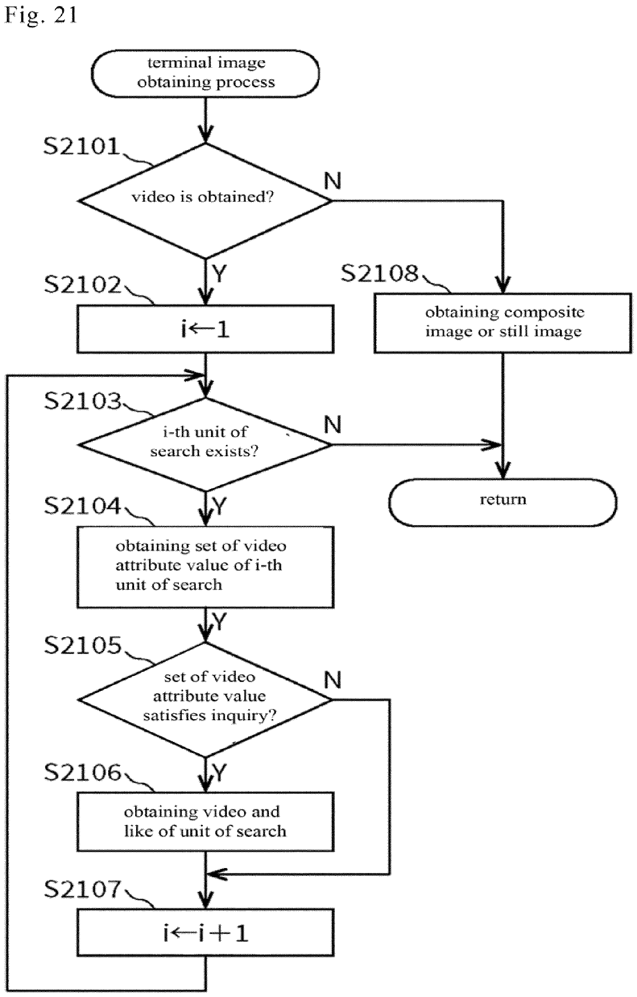

(S1918) The mobile processor 23 performs the terminal image obtaining process corresponding to the received inquiry in S1917. The example of the terminal image obtaining process will be explained using the flowchart in Fig. 21. The terminal image obtaining process is the process of obtaining the video corresponding to the inquiry in the videos stored in the mobile storage 21.

(S1919) The mobile processor 23 determines whether or not the image is obtained in S1918. When the image is obtained, the processing proceeds to S1920. When the image is not obtained, the processing proceeds to S1921.

(S1920) The mobile video transmitter 242 transmits the image and the like to the information processing device 1. The processing returns to S1901. Note that the image and the like are, for example, the image, the attribute value set and the right holder identifier. The image is, for example, a moving image (video), a still image and an around view image.

(S1921) The mobile video transmitter 242 transmits error information. Note that the error information is the information indicating that the video cannot be obtained.

In the flowchart in Fig. 19, it is preferable to transmit one or more video attribute values obtained in S1905, the mobile body attribute values and the tags obtained in S1907 and the set of the video attribute values which is a part or an entire of one or more video attribute values obtained in S1910 to the information processing device 1 every time when the video is obtained, at predetermined intervals, or when a predetermined condition is satisfied (e.g., when the tag of "accident" or "traffic jam" is obtained).

In the flowchart in Fig. 19, the video transmission process (process in S1916) is performed after the end of the movement is detected. However, it is also possible to perform the video transmission process continuously. The operation of performing the video transmission process continuously is, for example, the operation of performing the video transmission process (S1916) immediately after S1911. Consequently, the video satisfying the preservation condition can be preserved even when the storage area for storing the video is small in the storage 11.

In the flowchart in Fig. 19, the process ends when the power is turned off or the instruction of ending process is interrupted.

Then, the example of the video transmission process in S1916 will be explained using the flowchart in Fig. 20.

(S2001) The mobile processor 23 obtains the attribute value set of the mobile storage 21.

(S2002) The mobile processor 23 substitutes 1 for the counter i.

(S2003) The mobile processor 23 determines whether or not the i-th unit of search exists. When the i-th unit of search exists, the processing proceeds to S2004. When the i-th unit of search does not exist, the processing returns to the upstream process.

(S2004) The mobile processor 23 obtains the set of the video attribute value of the i-th unit of search.

(S2005) The mobile processor 23 substitutes 1 for the counter j.

(S2006) The mobile processor 23 determines whether or not the j-th preservation condition exists. When the j-th preservation condition exists, the processing proceeds to S2007. When the j-th preservation condition does not exist, the processing proceeds to S2010.

(S2007) The mobile processor 23 determines whether or not the set of the video attribute value obtained in S2004 satisfies the j-th preservation condition. When the j-th preservation condition is satisfied, the processing proceeds to S2008. When the j-th preservation condition is not satisfied, the processing proceeds to S2011.

(S2008) The mobile processor 23 obtains the video and the like of the i-th unit of search. Note that video and the like of the i-th unit of search are, for example, the video of the i-th unit of search and the attribute value set corresponding to the video. The video of the i-th unit of search may include the previous video of the i-th unit of search and the next video of the i-th unit of search, for example.

(S2009) The mobile video transmitter 242 transmits the video and the like obtained in S2008 to the information processing device 1.

(S2010) The mobile processor 23 increments the counter i by 1. The processing returns to S2003.

(S2011) The mobile processor 23 increments the counter j by 1. The processing returns to S2006.

Then, the example of the terminal image obtaining process in Step S1918 will be explained using the flowchart in Fig. 21.

(S2101) The mobile processor 23 determines whether or not to obtain the video using the received inquiry. When the video is obtained, the processing proceeds to S2102. When the video is not obtained, the processing proceeds to S2108.

Note that mobile processor 23 examines the type identifier (e.g., "moving image," "still image" and "around view image") included in the received inquiry and determines whether or not to obtain the video.

(S2102) The mobile processor 23 substitutes 1 for the counter i.

(S2103) The mobile processor 23 determines whether or not the i-th unit of search exists. When the i-th unit of search exists, the processing proceeds to S2104. When the i-th unit of search does not exist, the processing returns to the upstream process.

(S2104) The mobile processor 23 obtains the set of the video attribute value of the i-th unit of search.

(S2105) The mobile processor 23 determines whether or not the set of the video attribute value of the i-th unit of search satisfies the inquiry. When the set of the video attribute value satisfies the inquiry, the processing proceeds to S2106. When the set of the video attribute value does not satisfy the inquiry, the processing proceeds to S2107.

(S2106) The mobile processor 23 obtains the video and the like of the i-th unit of search.

Note that the video and the like are, for example, the set of the video and the video attribute value.

(S2107) The mobile processor 23 increments the counter i by 1. The processing returns to S2103.

(S2108) The mobile processor 23 obtains the latest composite image or the latest still image. The processing returns to the upstream process.

Note that the composite image is the image formed by composing the still images captured by each of a plurality of cameras provided with the movable body. The composite image is, for example, the around view image. The still image is the image captured by one camera provided with the movable body. The detailed explanation of the technology of forming the around view image is omitted since the technology is a conventionally known technology.

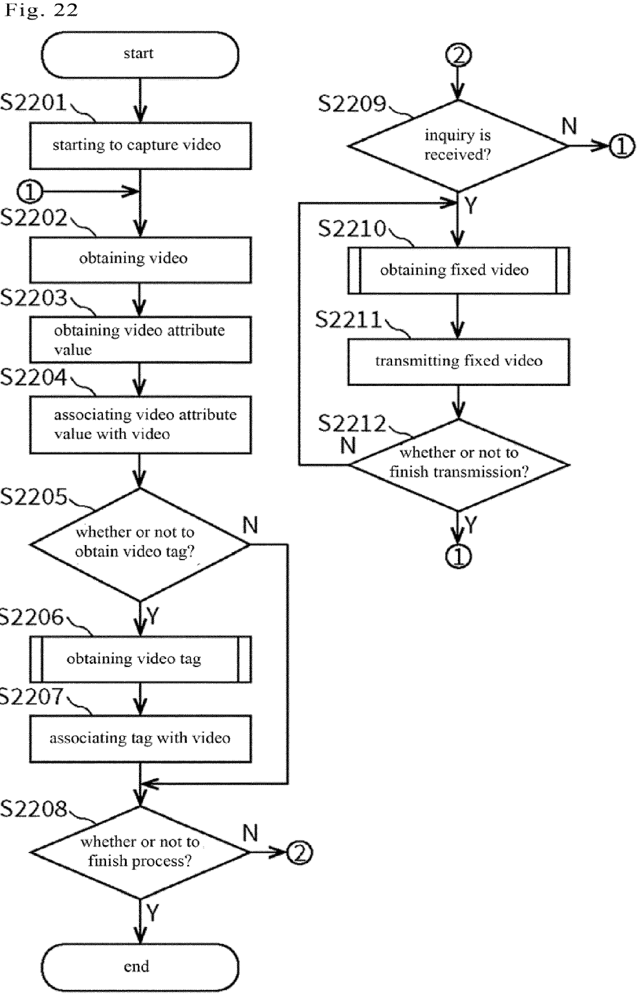

Then, the operation example of the fixed terminal 3 will be explained using the flowchart in Fig. 22. (S2201) The fixed camera 331 starts to capture the video. Note that a trigger to start capturing the video is, for example, the turning on of the power or the reception of the instruction from the user, for example.

(S2202) The fixed processor 33 obtains the video captured by the fixed camera 331 and accumulates the video in a not-illustrated buffer.

(S2203) The fixed processor 33 obtains one or a plurality of video attribute values. Note that the one or more video attribute values are, for example, the time information, the weather information, the temperature information or the season information.

(S2204) The fixed processor 33 associates one or more video attribute values obtained in S2203 with the video obtained in S2202.

(S2205) The fixed processor 33 determines whether or not to obtain the video tag. When the video tag is obtained, the processing proceeds to S2206. When the video tag is not obtained, the processing proceeds to Step S2208. Note that whether or not to obtain the video tag is preliminarily determined.

(S2206) The fixed processor 33 obtains the video tag. Note that the above described example of the process of obtaining the video tag is same as the process of the flowchart in Fig. 8.

(S2207) The fixed processor 33 associates one or more tags obtained in S2206 with the video obtained in S2202.

(S2208) The video obtainer 133 determines whether or not to finish the process. When the video obtainer 133 determines to finish the process, the process is finished. When the video obtainer 133 determines not to finish the process, the processing proceeds to Step S2209. The fixed processor 33 determines to finish the process when the power is turned off or when the instruction for finishing is received.

(S2209) The fixed receiver 32 determines whether or not the inquiry is received from the information processing device 1. When the inquiry is received, the processing proceeds to S2210. When the inquiry is not received, the processing proceeds to S2202.

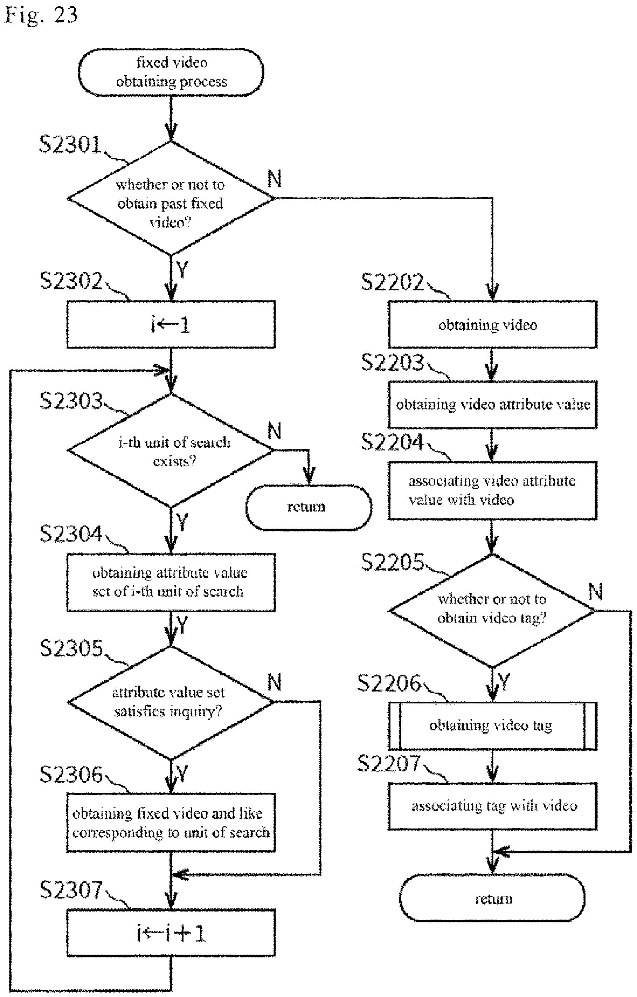

(S2210) The fixed processor 33 obtains the video corresponding to the inquiry. The example of the above described fixed video obtaining process will be explained using the flowchart in Fig. 23.

(S2211) The fixed transmitter 34 transmits the fixed video and the like obtained in S2210 to the information processing device 1. Note that the fixed video and the like are, for example, the fixed video, the attribute value set of one or more video attribute values and the right holder identifier.

(S2212) The fixed processor 33 determines whether or not to finish the transmission of the fixed video. When the fixed processor 33 determines to finish the transmission, the processing returns to S2202. When the fixed processor 33 determines not to finish the transmission, the processing returns to S2210.

Then, the example of the fixed video obtaining process in S2210 will be explained using the flowchart in Fig. 23. In the flowchart in Fig. 23, the explanation of the configurations same as the flowchart in Fig. 22 is omitted.

(S2301) The fixed processor 33 determines whether or not to obtain the past fixed video which is the already accumulated fixed video. When the past fixed video is obtained, the processing proceeds to S2302. When the past fixed video is not obtained, the processing proceeds to S2202. Note that the past video is accumulated in a not-illustrated buffer.

For example, when the time information indicating the past time is included in the received inquiry, the fixed processor 33 determines to obtain the past fixed video.

(S2302) The fixed processor 33 substitutes 1 for the counter i.

(S2303) The fixed processor 33 determines whether or not the i-th unit of search exists in the fixed video included in the fixed storage 31. When the i-th unit of search exists, the processing proceeds to S2304. When the i-th unit of search does not exist, the processing returns to the upstream process.

(S2304) The fixed processor 33 obtains the attribute value set of the i-th unit of search from the fixed storage 31.

(S2305) The fixed processor 33 determines whether or not the attribute value set obtained in S2304 satisfies the received inquiry. When the attribute value set satisfies the inquiry, the processing proceeds to S2306. When the attribute value set does not satisfy the inquiry, the processing proceeds to S2307.

(S2306) The fixed processor 33 obtains the fixed video and the like corresponding to the i-th unit of search. The fixed video and the like here are, for example, the fixed video, the attribute value set and the right holder identifier. The fixed video here may be the video of the i-th unit of search. Alternatively, the fixed video may include the video captured in the time before the i-th unit of search or the video captured in the time after the i-th unit of search with respect to the video of the i-th unit of search.

(S2307) The fixed processor 33 increments the counter i by 1. The processing returns to S2303.

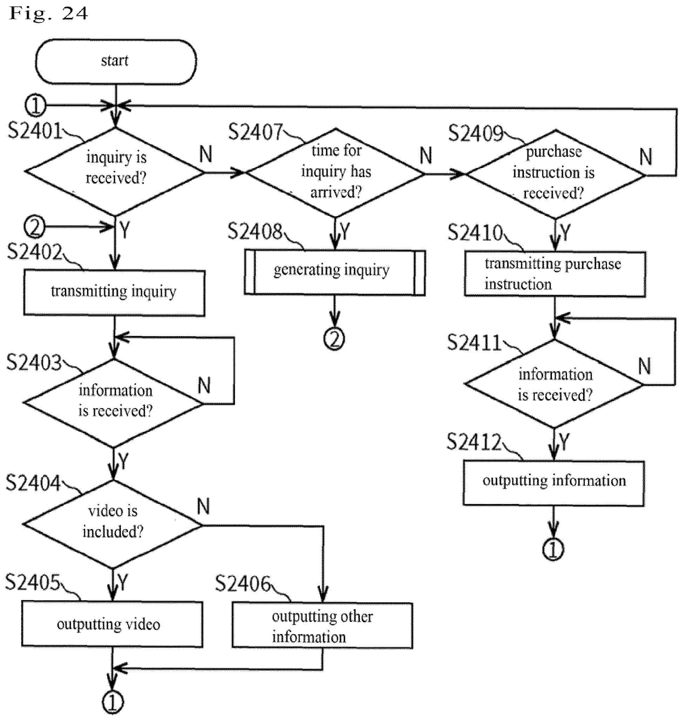

Then, the operation example of the user terminal 4 will be explained using the flowchart in Fig. 24.

(S2401) The user acceptor 42 determines whether or not the inquiry is received. When the inquiry is received, the processing proceeds to S2402. When the inquiry is not received, the processing proceeds to S2407.

Note that the reception of the inquiry is, for example, the reception of the input from the user, the reception of the positional information from the object terminal 5 and the reception of the destination or the route information from the navigation terminal 6.

(S2402) The user processor 43 generates the inquiry to be transmitted. Then, the user transmitter 44 transmits the inquiry to the information processing device 1 while being associated with the user identifier.

(S2403) The user receiver 45 determines whether or not the information is received from the information processing device 1. When the information is received, the processing proceeds to S2404. When the information is not received, the processing returns to S2403.

(S2404) The user processor 43 determines whether or not the video is included in the information received in S2403. When the video is included, the processing proceeds to S2405. When the video is not included, the processing proceeds to S2406.

(S2405) The user output unit 46 outputs the received video. The processing returns to S2401.

(S2406) The user output unit 46 outputs the other received information. The processing returns to S2401. The other information is, for example, the information indicating the fact that the video could not be obtained.

(S2407) The user processor 43 determines whether or not the time for the inquiry has arrived. When the time for the inquiry has arrived, the processing proceeds to S2408. When the time for the inquiry has not arrived, the processing proceeds to Step S2409.

The time for the inquiry is, for example, the time when the destination is set in the user terminal 4 serving as a navigation terminal or the time when the user terminal 4 installed in the automobile detects a traffic jam.

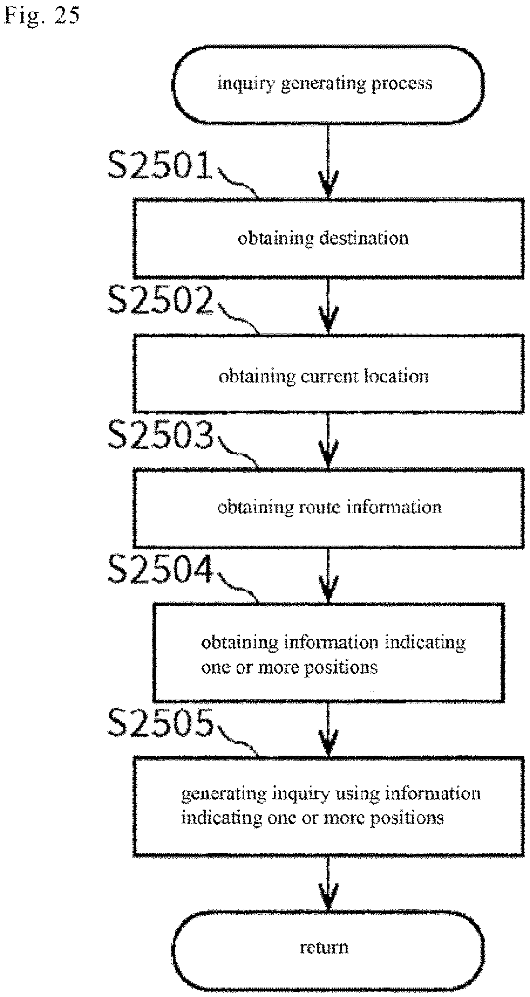

(S2408) The user processor 43 performs the inquiry generating process. The processing proceeds to Step S2402. The example of the inquiry generating process will be explained using the flowchart in Fig. 25.

(S2409) The user acceptor 42 determines whether or not the purchase instruction is received from the user. When the purchase instruction is received, the processing proceeds to S2410. When the purchase instruction is not received, the processing returns to S2401. Note that the purchase instruction includes, for example, the inquiry.

(S2410) The user processor 43 generates the purchase instruction to be transmitted. Then, the user transmitter 44 transmits the purchase instruction to the information processing device 1 while being associated with the user identifier.

(S2411) The user receiver 45 determines whether or not the information is received from the information processing device 1. When the information is received, the processing proceeds to S2412. When the information is not received, the processing returns to S2411. Note that the information is, for example, the video, the information indicating the completion of changing the right holder or the attribute value set of the video.

(S2412) The user processor 43 generates the information to be outputted using the received information. The user output unit 46 outputs the above described information. The processing returns to S2401.

In the flowchart in Fig. 24, the process ends when the power is turned off or the instruction of ending process is interrupted.

Then, the example of the inquiry generating process in S2408 will be explained using the flowchart in Fig. 25.

(S2501) The user processor 43 obtains the destination.

(S2502) The user processor 43 obtains the current location.

(S2503) The user processor 43 searches for a route using the destination and the current location and obtains the route information.

(S2504) The user processor 43 obtains the location information indicating one or more positions on the route identified by the route information obtained in S2503 and satisfying an extraction condition. Note that the location is normally the positional information included in the route information.

(S2505) The user processor 43 generates the inquiry using the location information indicating one or more positions obtained in S2504. The processing returns to the upstream process. Note that the user processor 43 generates, for example, the inquiry for "searching the video captured within one hour from the present time, having the tag of "traffic jam" or "accident," and paired with the attribute value set including the information of any of one or more positions."

Instead of performing the process of the flowchart in Fig. 25, the user processor 43 may obtain the current location and generate the inquiry including the current location. The above described inquiry is the request for transmitting the video corresponding to a predetermined tag (e.g., "accident" or "traffic jam") in the area surrounding the current location (e.g., at a distance within a threshold value).

Then, the operation example of the object terminal 5 will be explained. The object terminal 5 obtains the positional information. Then, the object terminal 5 transmits the positional information to the information processing device 1 or the user terminal 4 registered in the object terminal 5. Note that the object terminal 5 obtains the positional information and transmits the positional information when the instruction is received from the holder (e.g. child as object person to be watched) of the object terminal 5. Note that the object terminal 5 includes, for example, a GPS receiver, and obtains the positional information by the GPS receiver. However, the method of obtaining the positional information is not limited. The user terminal 4 registered in the object terminal 5 is, for example, a guardian of the holder of the object terminal 5.

Then, the operation of the navigation terminal 6 will be explained. The navigation terminal 6 receives the destination from the user. Then, the navigation terminal 6 performs the inquiry generating process explained in Fig. 25. Then, the navigation terminal 6 performs the processes of S2402 to S2405 and S2406 in Fig. 24. Namely, the navigation terminal 6 receives the destination, obtains the route information, transmits the inquiry to the information processing device 1 using the route information, receives the video of one or more locations in the route indicated by the route information from the information processing device 1, and outputs the video.

### <Specific operation example>

Hereafter, the specific operation example of the information system A in the present embodiment will be explained.

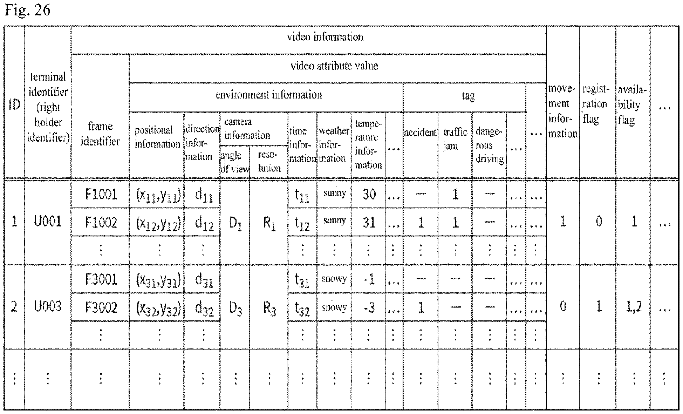

The mobile terminal manager 111 of the information processing device 1 currently stores a mobile terminal management table having the structure shown in Fig. 26. The mobile terminal management table is the table for managing one or a polarity of mobile terminal information. The mobile terminal management table is the table for managing the mobile terminal 2 which transmits the video. Note that the mobile terminal 2 not managed in the mobile terminal management table may transmit the video to the information processing device 1.

The mobile terminal management table is the table for managing one or more records including "ID," "terminal identifier," "video information," "movement information," "registration flag" and "availability flag." The "video information" is the information relates to the captured video. The "video information" includes "frame identifier" and "video attribute value." The "video attribute value" includes "environment information" and "tag." The "environment information" includes "positional information," "direction information," "camera information," "time information," "weather information" and "temperature information." The "camera information" includes "angle of view" and "resolution." The "environment information" is the information of the surrounding environment of the mobile terminal 2 when the video is captured, for example. The "tag" includes "accident," "traffic jam" and "dangerous driving." Namely, the video here is tagged with at least one of "accident," "traffic jam," and "dangerous driving."

The "ID" is the information for identifying the record. The "terminal identifier" is the identifier of the mobile terminal 2, and is the same as the right holder identifier for identifying the right holder when the video is transferred. The "frame identifier" is the ID of the frame included in the video. The frame may be referred to as a field or a still image. The "positional information" here is (latitude and longitude). The "direction information" is the capturing direction of the camera. The "direction information" here is the angle from the due north in the clockwise direction. Namely, when the capturing direction of the camera is the due east, the direction information is "90 degrees." The "angle of view" is the angle of view of the camera. The "resolution" is the resolution of the camera. The "time information" here is year, month, day, hour, minute and second. The "weather information" is, for example, "sunny," "rainy," "cloudy" and "snowy." The "temperature information" is the temperature (°C) outside the movable body. The value of "1" for "accident" indicates that the tag indicating the occurrence of an accident is applied to the corresponding frame. The value of "1" for "traffic jam" indicates that the tag indicating the occurrence of a traffic jam is applied to the corresponding frame. The value of "1" for "dangerous driving" indicates that the tag indicating a dangerous driving of a preceding automobile or the like is applied to the corresponding frame. The "movement information = 1" indicates that the video is currently transmittable from the mobile terminal 2. The "movement information tag = 0" indicates that the video is currently not transmittable from the mobile terminal 2 because the power is turned off, for example. The "registration flag = 1" indicates that the video has been registered and can be obtained from the device in which the video is registered (e.g., the storage 11 or another device). The value of "1" for "availability flag" indicates that the video is allowed to be viewed. The value of "2" for "availability flag" indicates that the video is allowed to be sold (transfer of right holder is allowed).

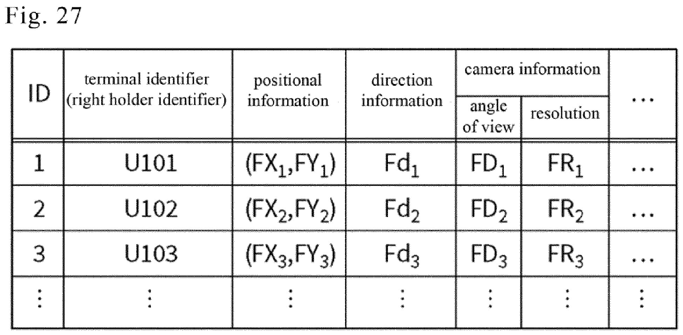

A fixed terminal management table having the structure shown in Fig. 27 is stored in the fixed terminal manager 112 of the information processing device 1. The fixed terminal management table is the table for managing one or a plurality of fixed terminal information. The fixed terminal management table is the table for managing the fixed terminal 3 transmitting the fixed video.

The fixed terminal management table manages one or more records including "ID," "terminal identifier," "positional information," "direction information" and "camera information." The "camera information" here includes "angle of view" and "resolution."

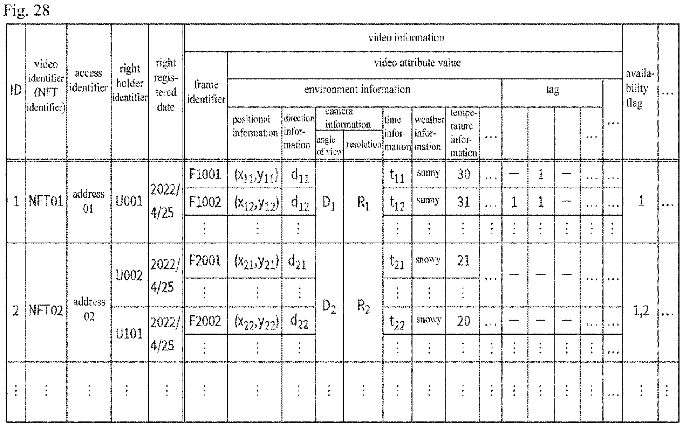

A registered video management table having the structure shown in Fig. 28 is stored on the blockchain. The registered video management table is the table for managing the registered video. The registered video management table is the table for managing the preservation information. The registered video is, for example, the video provided to the user in response to the inquiry from the user and the video satisfying the preservation condition. Namely, the video satisfying the inquiry received by the information processing device 1 and the video satisfying the preservation condition are automatically accumulated here.

The registered video management table manages "ID," "video identifier," "access information," "right holder identifier," "right registered date," "video information" and "availability flag." It is assumed that the registered video is stored in the information processing device 1, another device or the blockchain. It is assumed that each record in the registered video management table is the preservation information shown here.

In the above described situation, five specific examples are explained below. Specific Example 1 to Specific Example 4 are the examples using the video in real time. Specific Example 5 is the example using the video captured in the past.

### <Specific Examples>

Specific Example 1 is the case where the combined video generated by combining the fixed video captured by each of one or more fixed mobile terminals 3 and the mobile video captured by the mobile terminal 2 installed on one or more movable bodies is transmitted to the user terminal 4 of the user (e.g., guardian) related to the object person for watching the object person (e.g., child, aged wanderer).

Specific Example 2 is the case where the combined video generated by combining one or more fixed videos and one or more mobile videos based on the inquiry using the route information corresponding to the destination set in the user terminal 4 or the navigation terminal 6 is outputted to the user terminal 4.

Specific Example 3 is the case where the user terminal 4 or the navigation terminal 6, which detected the traffic jam, obtains the combined video for realizing the reason of the traffic jam and outputs the combined video to the user terminal 4 or the navigation terminal 6. Note that the combined video here is the video generated by combining one or more fixed videos and one or more mobile videos.

Specific Example 4 is the case where the merged video for realizing the situation of the parking lot for helping the user to find vacant space in the parking lot is outputted. Note that the merged video here is the video generated by merging one or more fixed videos and one or more mobile videos. Namely, one or more fixed terminals 3 are installed in the parking lot.

Specific Example 5 is the case where the combined video generated by combining the registered videos using the route information for identifying the route (e.g., traveling route) traveled by the user in the past is outputted to the user terminal 4. Note that the combined video here is the video generated by combining one or more fixed videos and one or more mobile videos.

### (Specific Example 1)

It is assumed that the management information including the user identifier (e.g., IP address of the user terminal 4) for transmitting the video to the user terminal 4 of a guardian P and the object person identifier "T001" for identifying the object terminal 5 of a child A of the guardian P are stored in the storage 11 of the information processing device 1.

Then, it is assumed that the child A turns on the power of the object terminal 5 for returning home from school. Then, it is assumed that the object terminal 5 periodically obtains the positional information and the inquiry (e.g., "video transmission instruction, object person identifier = T001, positional information (xt1, yt1)") including the positional information and the object person identifier "T001" to the information processing device 1. It is assumed that the object person identifier "T001" and the communication destination information (e.g., IP address) of the information processing device 1 for transmitting the information to the information processing device 1 are stored in the object terminal 5.

The receiver 12 of the information processing device 1 periodically receives the positional information for identifying the position of the mobile terminal 2 from each of one or more the mobile terminals 2 while paired with the terminal identifier and accumulated in the mobile terminal management table (Fig. 26).

Then, the inquiry receiver 122 of the information processing device 1 receives the inquiry "video transmission instruction, object person identifier = T001, positional information (xt1, yt1)" from the object terminal 5 and temporarily stores the positional information (xt1, yt1) and the object person identifier "T001" in a not-illustrated buffer. It is assumed that the positional information of the object terminal 5 is periodically received and the latest positional information is stored in a not-illustrated buffer.

Then, in accordance with the operation explained in the flowchart shown in Fig. 12, it is assumed that the video obtainer 133 determines the fixed terminal 3 or the first mobile terminal 2 corresponding to the positional information satisfying the first positional condition with respect to the position indicating the latest positional information of the object terminal 5. It is assumed that the priority video here is the "fixed video." The video obtainer 133 examines whether or not the positional information, the direction information and the angle of view satisfying the first positional condition (capturing the position indicated by the latest positional information of the object terminal 5) exist in the fixed terminal management table (Fig. 27) with respect to the latest positional information of the object terminal 5. When the positional information or the like satisfying the first positional condition does not exist in the fixed terminal management table (Fig. 27), the video obtainer 133 examines whether or not the latest positional information, the direction information and the angle of view of each of the mobile terminals 2 in the mobile terminal management table satisfy the first positional condition with respect to the latest positional information of the object terminal 5.

It is assumed that the video obtainer 133 here determines that the positional information or the like satisfying the first positional condition does not exist in the fixed terminal management table (Fig. 27) and all videos in the fixed terminal 3 cannot be used.

Then, it is assumed that the video obtainer 133 determines the first terminal (here, the mobile terminal 2 mounted on the automobile). The video obtainer 133 receives the video from the first mobile terminal 2. Note that the child A is captured in the above described video. It is determined that the first positional condition is satisfied from the positional information or the like of the object terminal 5 of the child A. The video is normally associated with the positional information and the first right holder identifier of the first mobile terminal 2 which is the first terminal. The received video is preferably the video transmitted immediately after the video is captured by the mobile terminal 2.

Then, the video transmitter 141 transmits the video received by the video obtainer 133 to the user terminal 4 of the guardian P identified by the user identifier paired with the object person identifier "T001."

The video obtainer 133 temporarily stores the video received from the first terminal in a not-illustrated buffer while being paired with the first right holder identifier of the first terminal and the positional information.

Note that the video obtainer 133 at least receives the video received from the first terminal and the video transmitter 141 transmits the video to the user terminal 4 of the guardian P while the first positional condition is satisfied between the positional information of the object terminal 5 of the child A and the positional information or the like of the first terminal.

Then, it is assumed that the video obtainer 133 determines that the first positional condition is not satisfied (the child A disappears in the screen) between the positional information of the object terminal 5 of the child A and the positional information or the like of the first terminal. This is because the mobile terminal 2 is moved and the mobile terminal 2 is not located within the position capturing the child A returning home on foot.

Then, the video obtainer 133 tries to determine the positional information of the second terminal satisfying the first positional condition again with respect to the latest positional information of the object terminal 5 by first referring to the fixed terminal management table (Fig. 27). Here, the video obtainer 133 determines that the area captured by the positional information (FX1, FY1) of the fixed terminal management table (Fig. 27), the direction information "Fd1" and the angle of view "FD1" satisfy the first positional condition with respect to the latest positional information of the object terminal 5.

Then, the video obtainer 133 transmits the video transmission instruction to the fixed terminal 3 identified by the terminal identifier "U101" and receives the fixed video from the fixed terminal 3. Then, the video obtainer 133 temporarily stores the video in a not-illustrated buffer while being paired with the second right holder identifier "U101" and the positional information of the second terminal (fixed terminal 3).

Then, the video transmitter 141 transmits the fixed video received from the video obtainer 133 and transmitted from the second terminal to the user terminal 4 of the guardian P.

With the lapse of time (e.g., 10 seconds), it is assumed that the video obtainer 133 determines that the first positional condition is not satisfied between the positional information of the object terminal 5 of the child A and the positional information of the second terminal.

Then, it is assumed that the video obtainer 133 tries to determine the latest positional information of the third terminal satisfying the first positional condition again referring to Fig. 27 with respect to the latest positional information of the object terminal 5 and the positional information of the third mobile terminal (fixed terminal 3) satisfying the first positional condition is not found.

Then, it is assumed that the video obtainer 133 tries to determine the latest positional information of the mobile terminal 2 satisfying the first positional condition referring to Fig. 26 with respect to the latest positional information of the object terminal 5 and the positional information of the mobile terminal 2 satisfying the first positional condition is not found. In the above described case, the video transmitter 141 may transmit the information indicating that the video capturing the child A cannot be transmitted to the user terminal 4 of the guardian P. Alternatively, transmitter 141 may stop the transmission of the video and the information to the user terminal 4.

By the above described transmission of the video, the user terminal 4 sequentially receives and outputs the mobile video and the like obtained by the mobile terminal 2 and the fixed video and the like obtained by the fixed terminal 3, for example. Consequently, the guardian P can watch the state of the child A coming home.

With the lapse of time, it is assumed that the mobile terminal 2 which is the third terminal approaching to the child A exists, and the video obtainer 133 determines that the positional information of the third terminal satisfying the first positional condition referring to Fig. 26 with respect to the latest positional information of the object terminal 5. It is assumed that the video obtainer 133 cannot obtain the positional information or the like of the fixed terminal 3 satisfying the first positional condition with respect to the latest positional information of the object terminal 5.

Then, the video obtainer 133 obtains the video from the third terminal. Then, the video obtainer 133 temporarily stores the video in a not-illustrated buffer while being paired with the third right holder identifier of the third terminal and the positional information.

Then, the video transmitter 141 transmits the video received by the video obtainer 133 from the third terminal to the user terminal 4 of the guardian P identified by the user identifier paired with the object person identifier "T001."

Then, the user terminal 4 receives and outputs the video obtained by the third terminal. Consequently, although the guardian P could not watch the state of the child A coming home for a while, the guardian P can watch the state of the child A coming home after the above described video appears.

The above described operation is repeated until the power of the object terminal 5 of the child A is turned off (until the child A comes home) and the guardian B can watch the state of the child A coming home from the school.

The rewarding unit 1365 performs the above described rewarding process on the right holder identified by the right holder identifier of the first mobile terminal 2, the fixed terminal 3 which is the second terminal and the third mobile terminal 2 providing the video to the guardian B.

The video generator 134 combines the videos transmitted from each of the mobile terminal 2 and the fixed terminal 3 in the order when the video is transmitted to generate the combined video.

The right holder processor 136 accumulates the combined video while being paired with the right holder identifier which is the identifier of the guardian P.

The right holder processor 136 accumulates the combined video while being associated with the attribute value set which is associated with each of one or a plurality of videos which are the source of the combined video.

Then, the fourth preserver 1364 obtains the access information for identifying the destination of accumulating the combined video. The fourth preserver 1364 obtains the attribute value set associated with the accumulated combined video. Then, the fourth preserver 1364 generates the preservation information including the obtained access information, the obtained attribute value set and the right holder identifier of the video. Then, the fourth preserver 1364 accumulates the generated preservation information in a blockchain. Note that the example of the above described preservation information is the record of "ID = 2" in Fig. 28.

As described above, in this specific example, the object person holding the object terminal 5 can be watched using the combined video. In addition, the reward can be provided to the right holder providing the video which is the source of the combined video for watching. Furthermore, the combined video can be properly managed.

### (Specific Example 2)

It is assumed that the user inputs the destination in the user terminal 4 having the navigation function. Then, the user acceptor 42 of the user terminal 4 receives the destination. The user processor 43 obtains the current position. Then, the user processor 43 obtains the route information to the destination from the current position. It is assumed that the route information here includes a plurality of positional information.

Then, the user transmitter 44 of the user terminal 4 automatically transmits the inquiry including the route information to the information processing device 1 when the route information is obtained in the user processor 43.

Then, the inquiry receiver 122 of the information processing device 1 receives the inquiry. Then, the video obtainer 133 and the video generator 134 perform the video combining process as described below.

Namely, the video obtainer 133 first obtains the positional information (the first positional information) of the first intersection in the route identified by the route information in a plurality of positional information included in the route information. Namely, the video obtainer 133 preferably obtains the video using only a part of the positional information in the positional information included in the received route information. The video obtainer 133 preferably obtains the video using only a part of the positional information satisfying a predetermined condition in the positional information included in the received route information. Note that the predetermined condition is, for example, that the positional information is the information indicating the position of the intersection or that the distance from the previously used positional information is a predetermined value or more.

Then, the video obtainer 133 determines the positional information, the direction information and the angle of view of the first terminal satisfying the first positional condition with respect to the obtained positional information. Note that the first terminal is the fixed terminal 3 or the mobile terminal 2. When the video obtainer 133 searches from the fixed terminal management table (Fig. 27) in accordance with the priority type "fixed terminal" and cannot determine the positional information or the like of the first terminal, the video obtainer 133 preferably searches from the mobile terminal management table (Fig. 26).

The video obtainer 133 obtains the video from the determined first mobile terminal and temporarily accumulates the video in a not-illustrated buffer while being paired with the first right holder identifier of the first terminal and the first positional information or the like. Then, the video transmitter 141 transmits the obtained video to the user terminal 4.

Then, the video obtainer 133 obtains the second positional information of the next intersection nearer to the destination than the position indicated by the previously obtained first positional information of the intersection.

Then, the video obtainer 133 determines the positional information of the second terminal satisfying the first positional condition with respect to the second positional information. Note that the second terminal is the fixed terminal 3 or the mobile terminal 2.

The video obtainer 133 obtains the video from the determined second terminal and temporarily accumulates the video in a not-illustrated buffer while being paired with the second right holder identifier of the second terminal and the second positional information or the like. Then, the video transmitter 141 transmits the obtained video to the user terminal 4.

Then, the video obtainer 133 obtains the third positional information of the next destination nearer to the destination than the position indicated by the second positional information.

Then, the video obtainer 133 determines the positional information or the like of the third terminal satisfying the first positional condition with respect to the third positional information. The video obtainer 133 obtains the video from the determined third terminal and temporarily accumulates the video in a not-illustrated buffer while being paired with the third right holder identifier of the third terminal and the third positional information or the like. Then, the video transmitter 141 transmits the obtained video to the user terminal 4.

The information processing device 1 repeats the above described process until the video corresponding to the n-th positional information for identifying the destination is transmitted.

The user receiver 45 of the user terminal 4 sequentially receives the first video, the second video, the third video, --- and the n-th video. The user output unit 46 sequentially outputs the first video, the second video, the third video, --- and the n-th video.

The rewarding unit 1365 of the information processing device 1 performs the rewarding process for providing the reward to the provision of the video to the first right holder identified by the first right holder identifier, the second right holder, --- and the n-th right holder.

The video generator 134 sequentially combines the videos transmitted from each of a plurality of terminals in the order when the video is transmitted to generate the combined video. Consequently, the combined video is, for example, the video formed by combining the mobile videos transmitted from the mobile terminal 2 and the fixed videos transmitted from the fixed terminal 3 in a time series manner in the order of the time when the videos are received.

The right holder processor 136 accumulates the combined video while being paired with the right holder identifier which is the identifier of the user of the user terminal 4. Namely, the right holder of the combined video here is the corresponding user.

The right holder processor 136 accumulates the combined video while being associated with the attribute value set associated with each of a plurality of videos which are the source of the combined video.

Then, the fourth preserver 1364 obtains the access information for identifying the destination of accumulating the combined video. The fourth preserver 1364 obtains the attribute value set corresponding to the accumulated combined video. Then, the fourth preserver 1364 generates the preservation information including the obtained access information, the obtained attribute value set and the right holder identifier of the video. Then, the fourth preserver 1364 accumulates the generated preservation information.

As described above, in this specific example, the state of the route to the destination can be confirmed in the order nearer to the current position using the videos transmitted from a plurality of mobile terminals 2 as a combined video combined in a time series manner at least in appearance. As a result, the moving body such as an automobile can be supported.

The reward can be provided to the right holder providing the video which is the source of the combined video. The combined video can be properly accumulated and managed.

### (Specific Example 3)

It is assumed that the navigation terminal 6 detects, for example, the traffic jam on the route to the destination. Note that the function of detecting the traffic jam can be achieved by the conventionally known technology. Then, it is assumed that the navigation terminal 6 obtains the route information including one or a plurality of positional information for identifying the road of the traffic jam and transmits the inquiry including the route information and the user identifier stored in the navigation terminal 6 to the information processing device 1. Note that the user identifier is the identifier of the user terminal 4 receiving the video from the fixed terminal 3 or the mobile terminal 2 located at the position of the jammed road. The user identifier is, for example, an IP address. It is assumed that the route information is the information for identifying one or a plurality of portions of the jammed road. The above described user terminal 4 is, for example, a terminal of a passenger on a passenger seat.

Then, the inquiry receiver 122 of the information processing device 1 receives the inquiry including the route information and the user identifier. Then, the video obtainer 133 and the video generator 134 perform the video combining process as described below.

First, the video obtainer 133 obtains the positional information located nearest to the current position in the positional information included in the route information. The positional information located nearest to the current position is, for example, the first positional information in the positional information included in the route information.

Then, the video obtainer 133 obtains the positional information which is continued from the above described positional information and is the last positional information located at the position within a threshold range from the neighboring positional information. The video obtainer 133 treats the above described positional information as target positional information used for obtaining the video.

Then, the video obtainer 133 determines the first terminal of the positional information or the like satisfying the first positional condition with respect to the target positional information. Note that the first terminal is the fixed terminal 3 or the mobile terminal 2. The video obtainer 133 here preferably searches from the fixed terminal 3.

Then, the video obtainer 133 obtains the video from the above described terminal and temporarily accumulates the video in a not-illustrated buffer while being paired with the first right holder identifier of the first terminal and the positional information or the like.

The video obtainer 133 continues to receive the video from the first terminal and temporarily accumulate the video in a not-illustrated buffer until the positional information of the first terminal does not satisfy the first positional condition.

The video transmitter 141 sequentially transmits the obtained video to the user terminal 4.

After the mobile terminal 2 passes through the traffic jam, the video obtainer 133 determines that the latest positional information of the first terminal does not satisfy the first positional condition.

Then, the video obtainer 133 determines the second terminal of the positional information or the like satisfying the first positional condition with respect to the target positional information. Note that the first terminal is the fixed terminal 3 or the mobile terminal 2.

Then, the video obtainer 133 obtains the video from the second terminal and temporarily accumulates the video in a not-illustrated buffer while being paired with the second right holder identifier of the second terminal and the positional information.

The video obtainer 133 continues to receive the video from the second terminal and temporarily accumulate the video in a not-illustrated buffer until the positional information of the second terminal does not satisfy the first positional condition.

The video transmitter 141 sequentially transmits the obtained video to the user terminal 4.

The user terminal 4 receives the video from the information processing device 1 and outputs the video.

The above described operation is repeated. Thus, the user of the user terminal 4 can know the state of the traffic jam continuously. In addition, the user can know the place where the traffic jam is solved.

When the route information includes the information identifying the traffic jam of two or more positions, the information processing device 1 performs the similar process using the route information identifying the second and subsequent positions. Consequently, the user terminal 4 can receive the video for grasping the state of the traffic jam of the second and subsequent positions and output the video. When two or more positions of the traffic jam exist, the user terminal 4 preferably switches the positions to receive and output the video automatically or by the instruction of the user.

In this specific example, the rewarding process, various preservation processes and the like may be performed although the explanation is omitted.

As described above, in this specific example, the state of the traffic jam on the route to the destination can be grasped by using the video transmitted from a plurality of terminals including the fixed terminal 3 and the mobile terminal 2.

### (Specific Example 4)

It is assumed that the inquiry including the positional information of the user terminal 4 is transmitted from the user terminal 4 mounted on the automobile entered in a large parking lot to the information processing device 1 for grasping the state of the large parking lot. It is assumed that the above described inquiry includes "type identifier = around view image," the positional information (reference positional information) of the user terminal 4 and the around view image obtained by the user terminal 4.

Then, the inquiry receiver 122 of the information processing device 1 receives the above described inquiry.

Namely, the video obtainer 133 obtains the reference positional information included in the received inquiry. Then, the video obtainer 133 determines one or a plurality of mobile terminals 2 corresponding to the positional information satisfying the second positional condition with respect to the reference positional information. Then, the video obtainer 133 transmits the instruction of transmitting the current around view image to one or a plurality of terminals. Note that each of the plurality of terminals is the fixed terminal 3 or the mobile terminal 2. Note that the second positional condition here means that the position indicated by the positional information is located within the area of the parking lot including the reference positional information. It is assumed that each of one or more mobile terminals 2 continuously obtains the around view image. It is assumed that the one or more fixed terminal 3 is installed on the ceiling of the parking lot for capturing the video straight downward and obtaining the around view image.

The video obtainer 133 receives the around view image associated with the positional information of the terminal from each of one or more terminals.

Then, the video generator 134 calculates the difference (distance) between the positional information paired with each of the received around view image and the reference positional information. Then, the video generator 134 sorts the around view images in ascending order using the above described difference as a key.

Then, the video generator 134 obtains the reference image. Note that the reference image is the around view image included in the inquiry.

Then, the video generator 134 performs the process explained using the flowchart in Fig. 11 and arranges each of the around view images received from the other terminals at an appropriate position with respect to the reference image in the sorted order using the positional information to generate the merged image.

The video generator 134 generates the image where the position indicating the reference positional information (the position of the user terminal 4 transmitting the inquiry) is clearly shown on the finally generated merged image. Note that the above described image is also the merged image.

Then, the video transmitter 141 transmits the generated merged image to the user terminal 4.

Then, the user terminal 4 receives the above described merged image and output the merged image.

The information processing device 1 continues the above described processes and transmits the merged video including a plurality of merged images to the user terminal 4. Then, the user terminal 4 receives the above described merged video and output the merged video.

As described above, in this specific example, the images transmitted from one or more mobile terminal 2 or fixed terminals 3 are merged. This helps to find an empty space in the parking lot.

In this specific example, the information processing device 1 merges the around view images. However, it is also possible for the information processing device 1 to merge a plurality of images obtained by a plurality of ordinary cameras or omnidirectional cameras using the positional information associated with each image for generating the merged image and transmit the merged image to the user terminal 4. It is also possible to merge the image of the fixed terminal 3 installed on an event site such as a live site and the image of the user terminal 4 possessed by the audience in the event site and compensating the area not captured by the user terminal 4 of the audience with the image of the fixed terminal 3.

### (Specific Example 5)

It is assumed that the user B travels a drive course on a rainy day. It is assumed that the route information for identifying the route traveled by the automobile is accumulated in the user terminal 4.

Then, it is assumed that the user B inputs the inquiry including the route information accumulated in the user terminal 4 and the environment information "weather information = sunny" in the user terminal 4 after returning home. Then, the user terminal 4 receives the above described inquiry and transmits the inquiry to the information processing device 1. Note that the above described inquiry is the video of the drive course traveled by the user on sunny day and the inquiry for obtaining the video of the sunny day.

Then, the inquiry receiver 122 of the information processing device 1 receives the above described inquiry. Then, the video obtainer 133 determines that the received inquiry is not the video retrieval in real time. Then, the video obtainer 133 or the like performs the registered video search process as described below.

Namely, the video obtainer 133 obtains the first positional information included in the route information in the received inquiry.

Then, the video obtainer 133 obtains all preservation information from the registered video management table (Fig. 28). Namely, the video obtainer 133 obtains the preservation information existing on the blockchain, for example.

Then, the video obtainer 133 determines the preservation information including "1" as the availability flag, the obtained positional information or the like satisfying the first positional condition and "weather information = sunny" in the obtained preservation information. It is assumed that the video obtainer 133 determines, for example, the preservation information of "ID =1" in Fig. 28.

Then, the video obtainer 133 obtains the access information "address 01" paired with the determined preservation information. Then, the video obtainer 133 obtains the video using the access information "address 01." Then, the video obtainer 133 cuts out the video within the range that the second and subsequent positional information included in the route information included in the received inquiry satisfies (same or near) the first positional condition with respect to the positional information or the like of the preservation information from the video corresponding to the access information "address 01." Namely, the video obtainer 133 cuts out and obtains the video from the video corresponding to the access information "address 01" within the range that the positional information is not deviated from the route of the drive course traveled by the user.

Then, the video obtainer 133 obtains the second positional information which is the positional information when the video corresponding to the access information "address 01" is deviated from the drive course and is the route information included in the received inquiry.

The video obtainer 133 determines the preservation information including "1" as the availability flag, the obtained second positional information or the like satisfying the first positional condition and "weather information = sunny" in the obtained preservation information.

Then, the video obtainer 133 obtains the access information (e.g., "address X") paired with the determined preservation information. Then, it is assumed that the video obtainer 133 obtains the second video using the access information "address X." Then, the video obtainer 133 cuts out the video within the range that the positional information after the second positional information included in the route information included in the received inquiry satisfies the positional information of the preservation information from the second video corresponding to the access information "address X." Namely, the video obtainer 133 cuts out and obtains the video from the video corresponding to the access information "address X" within the range that the positional information is not deviated from the route of the drive course traveled by the user.

The video obtainer 133 repeats the above described process until the final positional information included in the route information in the received inquiry is used.

Then, the video generator 134 combines a plurality of videos obtained by the video obtainer 133 in the order of obtaining the video (order of the route) to generate the combined video. Note that the plurality of videos which is the source of the combined video preferably includes the fixed video and the mobile video.

Then, the video transmitter 141 transmits the above described combined video to the user terminal 4 of the user B.

Then, the user terminal 4 receives the above described combined video and outputs the combined video.

The rewarding unit 1365 of the information processing device 1 obtains the right holder identifier (e.g., "U001") of each of the plurality of original videos used for the combined video and performs the rewarding process for providing the reward to the right holder identified by each of the plurality of right holder identifiers.

The right holder processor 136 performs the above described various preservation processes on the generated combined video.

As described above, in this specific example, the combined video can be generated and outputted by combining a plurality of videos captured in the route in the past using the route information of the route traveled by the user.

As described above, in the present embodiment, an effective video can be generated and provided using the videos captured by the mobile terminal 2 and the videos captured by the fixed terminal 3.

In the present embodiment, an effective video can be generated and provided by combining the videos captured by the mobile terminal 2 and the videos captured by the fixed terminal 3 in a time series manner.

In the present embodiment, an effective video can be generated and provided by merging the videos captured by the mobile terminal 2 and the videos captured by the fixed terminal 3 in a spatial manner.

In the present embodiment, an effective video can be generated and provided by appropriately selecting the videos from the videos captured by the mobile terminal 2 and the videos captured by the fixed terminal 3.

In the present embodiment, an effective stereoscopic three-dimensional video can be generated and provided by using the videos from the videos captured by the mobile terminal 2 and the videos captured by the fixed terminal 3.

In the present embodiment, an effective video can be generated and provided by using the mobile video and the fixed video based on the intention of the user of the mobile terminal 2.

In the present embodiment, the camera used for capturing the video may be an omnidirectional camera or the like. The type of the camera is not limited.

The processes in the present embodiment may be implemented with software. The software may be distributed by, for example, downloading the software. The software may be recorded in a recording medium such as a compact disk read-only memory (CD-ROM) for distribution. The same applies to another embodiment herein. The software for implementing the information system A according to the present embodiment is a program described below. Namely, this program causes the computer to perform: a video obtaining step of obtaining a mobile video captured by a mobile terminal and transmitted from the mobile terminal and obtain a fixed video captured by a fixed camera at a fixed capturing position and transmitted from a fixed terminal equipped with the fixed camera, the mobile video being associated with an attribute value set including one or more environment information which includes a positional information for identifying a capturing position or a time information for identifying a capturing time, the fixed video being associated with the attribute value set including the one or more environment information which includes the positional information or the time information; a video generating step of generating a combined video by combining the mobile video and the fixed video in a time series manner or a merged video by merging at least a part of frames included in the mobile video and at least a part of frames included in the fixed video in a spatial manner; and a video transmitting step of transmitting the combined video or the merged video generated by the video generator.

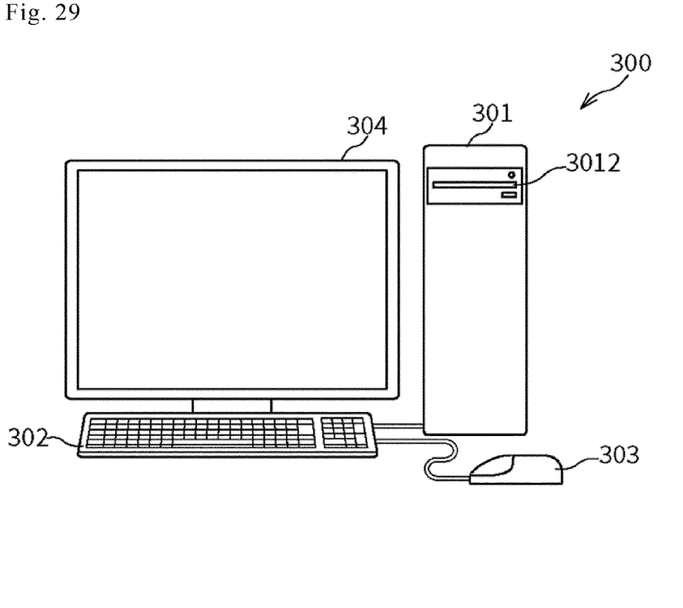

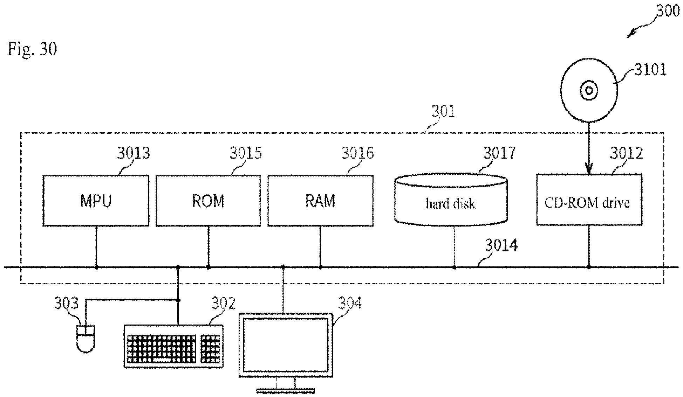

Fig. 29 shows the external appearance of a computer that executes the program described in this specification and achieves the information processing device 1, the user terminal 4, the object terminal 5, the navigation terminal 6 and the like according to the various embodiments described above. The above described embodiments can be implemented with computer hardware and a computer program executed on the computer hardware. Fig. 29 is a schematic diagram of a computer system 300 and Fig. 30 is a block diagram of the system 300. The mobile terminal 2 and the fixed terminal 3 are normally provided with a camera.

In Fig. 29, the computer system 300 includes a computer 301 including a CD-ROM drive, a keyboard 302, a mouse 303 and a monitor 304.

In Fig. 30, the computer 301 includes a CD-ROM drive 3012, a microprocessor unit (MPU) 3013, a bus 3014 connected to the CD-ROM drive 3012 or the like, a read-only memory (ROM) 3015 storing programs such as a boot-up program, a random access memory (RAM) 3016 connected to the MPU 3013, temporary storing a command from an application program, and providing a temporarily storing space, and a hard disk 3017 storing an application program, a system program and data. Although not shown in the figure, the computer 301 may include a network card that allows connection to a local area network (LAN).

A program that causes the computer system 300 to function as, for example, the information processing device 1 according to the above described embodiment may be stored in a CD-ROM 3101, inserted into the CD-ROM drive 3012 and transferred to the hard disk 3017. Alternatively, the program may be transmitted to the computer 301 through a not-illustrated network and stored in the hard disk 3017. The program is loaded on the RAM 3016 when the program is executed. The program may be directly loaded from the CD-ROM 3101 or the network.

It is not necessary for the programs to include, for example, a third party program or an operation system (OS) that causes the computer 301 to function as, for example, the information processing device 1 according to the above described embodiment. The programs may be any program that includes a command to call an appropriate function (module) in a controlled manner and obtain an intended result. The manner in which the computer system 300 operates is conventionally known. Thus, the detailed explanation is omitted.

The steps in the above described program, such as transmitting or receiving information, do not include processing performed by hardware, or for example, processing performed by a modem or an interface card in the transmission step (processing performed by hardware alone).

One or more computers may execute the above described program. Namely, either integrated processing or distributed processing may be performed.

In each of the above described embodiments, a plurality of communicators included in a single device may be implemented by a single physical medium.

In each of the embodiments, each process may be performed by a single device through integrated processing or by multiple devices through distributed processing.

The present invention is not limited to the above embodiments, but may be modified variously within the scope of the present invention.

### INDUSTRIAL APPLICABILITY

As described above, the information processing device 1 of the present invention has the effect capable of generating and providing one useful video using the video captured by the mobile terminal and the video captured by the fixed camera and is effective as a server or the like providing the video.

## Claims

1. An information processing device comprising:
a video obtainer configured to obtain a mobile video captured by a mobile terminal and transmitted from the mobile terminal and obtain a fixed video captured by a fixed camera at a fixed capturing position and transmitted from a fixed terminal equipped with the fixed camera, the mobile video being associated with an attribute value set including one or more environment information which includes a positional information for identifying a capturing position or a time information for identifying a capturing time, the fixed video being associated with the attribute value set including the one or more environment information which includes the positional information or the time information;
a video generator configured to generate a combined video by combining the mobile video and the fixed video in a time series manner or a merged video by merging at least a part of frames included in the mobile video and at least a part of frames included in the fixed video in a spatial manner; and
a video transmitter configured to transmit the combined video or the merged video generated by the video generator.

2. The information processing device according to claim 1, wherein
when the fixed video and the mobile video which are a plurality of videos satisfying an adoption condition and associated with the positional information satisfying a first positional condition exist, the video obtainer is configured to obtain either the fixed video or the mobile video in accordance with a priority of a video type, the adoption condition being a condition for adopting the fixed video or the mobile video as a source of the combined video or the merged video, the first positional condition being a condition that a location where the fixed video or the mobile video is captured is nearer than a predetermined location.

3. The information processing device according to claim 1, further comprising:
a receiver configured to receive the mobile video from the mobile terminal and the fixed video from the fixed terminal equipped with the fixed camera, wherein
the video obtainer is configured to obtain the mobile video and the fixed video received by the receiver, and
the receiver is configured to receive the mobile video from the mobile terminal approved by a user in accordance with a use condition flag of the mobile video stored in the mobile terminal.

4. The information processing device according to claim 3, wherein
the use condition flag is an information indicating an existence or an absence of a desire of a non-provisional usage of the mobile video transmitted by the mobile terminal, and
the receiver is configured to receive the mobile video from the mobile terminal only when the mobile terminal is approved by the user if the use condition flag stored in the mobile terminal is the information indicating the existence of the desire of the non-provisional usage of the mobile video.

5. The information processing device according to claim 1, wherein
the mobile video or the fixed video is associated with a right holder identifier identifying a right holder of the mobile video or the fixed video, and
a right holder processor for performing a right holder processing related to the right holder identified by the right holder identifier associated with the combined video or the merged video generated by the video generator is further provided.

6. An information processing method implemented by a video obtainer, a video generator and a video transmitter, the method comprising:
a video obtaining step of obtaining, by the video obtainer, a mobile video captured by a mobile terminal and transmitted from the mobile terminal and obtain a fixed video captured by a fixed camera at a fixed capturing position and transmitted from a fixed terminal equipped with the fixed camera, the mobile video being associated with an attribute value set including one or more environment information which includes a positional information for identifying a capturing position or a time information for identifying a capturing time, the fixed video being associated with the attribute value set including the one or more environment information which includes the positional information or the time information;
a video generating step of generating, by the video generator, a combined video by combining the mobile video and the fixed video in a time series manner or a merged video by merging at least a part of frames included in the mobile video and at least a part of frames included in the fixed video in a spatial manner; and
a video transmitting step of transmitting, by the video transmitter, the combined video or the merged video generated by the video generator.
